# EUROPEAN PATENT SPECIFICATION

(11) **EP 3 212 686 B1**
(45) Date of publication and mention of the grant of the patent: **29.08.2018**
(21) Application number: 15793972.9
(22) Date of filing: 27.10.2015
(51) Int. Cl.: C08G 8/04, C08G 8/08, C08G 8/24, C08G 8/36, C08L 61/14, C08L 67/00, C08L 67/02, C09D 161/14, C09D 161/06, C08L 61/06

(54) **THERMOSETTING COMPOSITIONS CONTAINING CURABLE POLYESTERS AND RESOLE PHENOLIC RESINS**
WÄRMEHÄRTENDE ZUSAMMENSETZUNGEN ENTHALTEND HÄRTBARE POLYESTER UND RESOLPHENOLHARZEN
COMPOSITIONS THERMODURCISSABLES CONTENANT DES POLYESTERS DURCISSABLES ET DES RÉSINES PHÉNOLIQUES DE TYPE RÉSOL

(30) Priority: 27.10.2014 US 201414524514; 27.10.2014 US 201414524509; 13.11.2014 US 201414540490; 10.04.2015 US 201514683278; 26.10.2015 US 201514922846
(43) Date of publication of application: 06.09.2017
(73) Proprietor: Eastman Chemical Company, Kingsport, TN 37660 (US)
(72) Inventor: KUO, Thauming, Kingsport, TN 37664 (US); LIU, Junjia, Kingsport, TN 37664 (US); HALL, Phillip, Bryan, Jonesborough, TN 37659 (US)
(74) Representative: Ricker, Mathias
(86) International application number: PCT/US2015/057524
(87) International publication number: WO 2016/069567

(56) References cited:
- EP-A1- 1 273 626
- WO-A1-01/48097
- WO-A1-2014/203857
- WO-A1-2015/156094
- GB-A- 1 115 189
- GB-B- 2 025 998
- US-A- 4 120 847
- DATABASE WPI Week 200503 Thomson Scientific, London, GB; AN 2005-023333 XP002752934, -& JP 2004 339493 A (KANSAI PAINT CO LTD) 2 December 2004 (2004-12-02)

## Description

### FIELD OF THE INVENTION

Disclosed herein are curable polyesters for water and solvent borne, thermosetting coating compositions and powder coatings. More specifically, disclosed herein are curable polyesters that have enhance reactivity to toward phenolic crosslinkers, such as carboxyl-functional curable polyesters; α,β-unsaturated polycarboxylic acid modified curable polyester resins; and curable polyester resin containing beta-ketoacetate moieties, as well as the thermosetting coatings made with any of the aforementioned curable polyesters and phenolic crosslinking compounds, and further, to particular kinds of phenolic crosslinking resins that exhibit good reactivity toward a variety of curable polyester resins.

### BACKGROUND OF THE INVENTION

Metal containers are commonly used for food and beverage packaging. The containers are typically made of steel or aluminum. A prolonged contact between the metal and the filled product can lead to corrosion of the container. To prevent direct contact between filled product and metal, a coating is typically applied to the interior of the food and beverage cans. In order to be effective, such a coating must have adequate properties that are needed for protecting the packaged products, such as adhesion, corrosion resistance, chemical resistance, flexibility, stain resistance, and hydrolytic stability. Moreover, the coating must be able to withstand processing conditions during can fabrication and food sterilization. Coatings based on a combination of epoxy and phenolic resins are known to be able to provide a good balance of the required properties and are most widely used. There are industry sectors moving away from food contact polymers made with bisphenol A (BPA), a basic building block of epoxy resins. Thus, there exists a desire for the replacement of epoxy resin used in interior can coatings.

Polyester resins are of particular interest to the coating industry to be used as a replacement for epoxy resin because of their comparable properties such as flexibility and adhesion. It is known by one skilled in the art that crosslinking between common polyester and phenolic resin is too poor to provide adequate properties for use in interior can coatings. Specifically, conventional polyesters having hydroxyl functionalities are not reactive enough with phenolic resins under curing conditions to provide adequate cross-linking density, resulting a coating that lacks good solvent resistance.

2,2,4,4-Tetraalkyl-1,3-cyclobutanediol (TACD) is a cycloaliphatic compound that can be used as a diol component for making polyesters. Thermoplastics based on TACD polyester exhibit improved impact resistance owing to TACD's unique structure. TACD can also provide improved hydrolytic stability of the polyester due to its secondary hydroxyl functionality. Both of these properties are highly desirable in thermosetting coatings.

However, coatings made with TACD containing curable polyester resins where the primary mode of cross-linking is across the hydroxyl groups on the curable polyester resin are slow to cure because the secondary hydroxyl groups on the TACD moiety are slow to react under curing conditions. To the extent that a cross-linked matrix does form, it is only poorly cross-linked which manifests itself in the formation of films with poor solvent resistance.

EP 1273 626 discloses an aqueous resin composition that is described to be excellent in settability, flexibility, retort resistance, hygienicity, sprayability and dispersibility in water, and which is described to be used to coat an internal surface of a can.

JP 2004 339493 discloses a thermosetting aqueous coating composition comprising 100 pts. wt. of the solid content of an aqueous polyester resin dispersion (A) obtained by neutralizing with a basic compound at least a part of carboxy groups of a carboxy group- and unsaturated group-bearing polyester resin (a) which has an acid value of 5-80 mgKOH/g and contains 0.03-0.9 mmol/g of a polymerizable unsaturated group and dispersing the polyester resin in water, and 1-50 pts. wt. of a resol-type phenolic resin (B).

US 4,120,847 discloses high ortho etherified resole resins. The resole resins are prepared by reacting under acidic conditions phenol with formaldehyde in the presence of a divalent electropositive metal. The resole resins are then etherified with an alcohol and dehydrated to less than 1 percent water. The described resole resins are desxribed to be useful in coating, bonding and adhesive compositions. Such resoles are readily curable with coreactive resins providing chemical and solvent resistance.

GB 2 025 998 discloses a coating composition comprising (A) a high ortho etherified phenol-formaldehyde resole resin, and (B) 1 to 95% wt. of a coreactive resin, said resin (A) being characterized by having (1) partially etherified methylol groups, 90 to 100% of which are ortho oriented; (2) condensed phenol-formaldehyde linkages comprising 25-90% essentially ortho oriented benzyl ether linkages and 10-75% methylene linkages of which 70-90% are ortho oriented and 10-30% are para oriented; and (3) an average degree of polymerization of less than 4, said resin (A) being prepared by reacting phenol and/or a m-substituted phenol with formaldehyde in an aqueous medium under reflux in the presence of a divalent electropositive metal ion while maintaining the pH at 4 to 7 using an organic acid, etherifying the resulting resole with a monohydric alcohol, then dehydrating.

GB 1 115 189 discloses the following resins: Phenol-formaldehyde resole resin.- 1 mole of phenol, 3 moles of paraformaldehyde, 6 moles of water and 0.3 mole of sodium acetate trihydrate are refluxed and then poured into water to precipitate the resin. Phenol-formaldehyde novolak resin.- 100 grams of phenol dissolved in 69 grams of 37% formalin solution and 0.55 grams of oxalic acid are refluxed to produce the resin. Meta-cresol-formaldehyd resole resin.-m-cresol, formaldehyde and sodium acetate trihydrate in a molar ratio of 1:2.5:0.3 are refluxed and then poured into water to precipitate the resin. Resorcinol-formaldehyde resole resin.-resorcinol, 37% formalin solution and sodium sulphate are heated and the resin precipitated by pouring into cold water.

WO 01/48097 discloses a cured multilayer coating that is described to have improved properties and discloses a process for the production of said cured multilayer coating.

Thus, there is a need to provide a thermosetting coating system that exhibits good crosslinking at curing conditions, either by modifying curable polyester resins to be more reactive with phenolic crosslinking compounds, or to employ particularly more reactive phenolic crosslinkers that react well across a wide variety of curable polyester resins, or both. It would also be desirable to provide TACD modified curable polyester resins that exhibit enhanced reactivity toward phenolic crosslinking resins.

### SUMMARY OF THE INVENTION

### The Acid Number Modified Polyester Resin

There is now provided a curable TACD polyester that has both carboxyl and hydroxyl functionalities and a high ratio of carboxyl functionalities to hydroxyl functionalities. The level of carboxyl functionality is sufficient to provide water dispersibility after neutralization when water borne coatings are desired. Moreover, the carboxyl functionality provides a curable polyester resin that suitable for crosslinking with both hydroxyl-curable cross-linking compounds and acid-curable cross-linking compounds. The dual functionalities on the curable polyester resin offer a variety of crosslinking mechanisms for curing.

In particular, there is now provided a composition comprising a curable polyester resin, said curable polyester resin comprising the residues of
a) polyhydroxyl compounds comprising:
   i) 2,2,4,4-tetraalkylcyclobutane-1,3-diol (TACD) compounds, and
   ii) polyhydroxyl compounds other than TACD, and
b) polycarboxyl compounds comprising:
   i) a polycarboxylic acid compound, a derivative of polycarboxylic acid compound (other than component b)(ii)), or a combination thereof, and
   ii) a polycarboxylic anhydride compound;
   wherein said curable polyester resin has an acid number ranging from 20 to 120 mg KOH/g, a hydroxyl number ranging from greater than 0 to 100 mg KOH/g, and an acid number:hydroxyl (AN:OH) number ratio of at least 0.5:1.

There is also provided a curable polyester resin comprising the residues of:
a) polyhydroxyl compounds comprising:
   i) 2,2,4,4-tetraalkylcyclobutane-1,3-diol (TACD) compounds in an amount ranging from 3 to 98 mole %, based on the total moles of polyhydroxyl compounds (a), and
   ii) polyhydroxyl compounds other than TACD comprising
      (1) a diol in an amount ranging from 0 to 95 mole %, based on the total moles of (a), and
      (2) a polyhydroxyl compound having 3 or more hydroxyl groups in an amount ranging from 2 to 20 mole %, based on the total moles of (a), and
b) polycarboxyl compounds comprising
   i) a polycarboxylic acid, a derivative of polycarboxylic acid compound (other than component b)(ii)), or a combination thereof in an amount ranging from 70 to 95 mole %, based on the total moles of component (b), and
   ii) a polycarboxylic anhydride in an amount ranging from 5 to 30 mole %, based on the total moles of (b),
wherein said polyester has an acid number ranging from 30 to 100 mg KOH/g and a hydroxyl number ranging from 3 to 80 mg KOH/g.

If desired, this polyester can have an acid number:hydroxyl number ratio of at least 0.5:1.

There is also provided a method for making an acid functional curable polyester resin composition comprising:
a) in a first stage, combining the polyhydroxyl compounds and polycarboxylic acid compounds to form a reaction mixture, and reacting the reaction mixture in a reactor at a temperature from 180-250 °C, optionally in the presence of an acid catalyst until the reaction mixture has an acid number of 0 to 20 mg KOH/g, and
b) thereafter, a second stage for forming a curable polyester composition by reacting a polycarboxylic anhydride with the reaction mixture at a temperature of 140 °C to 180 °C to thereby obtain a polyester composition having an acid number of greater than 20 mg KOH/g.

### The α,β-Ethylenically Unsaturated Carboxyl Modified Polyester Resin

Polyesters synthesized with an α,β-ethylenically unsaturated carboxyl compound are curable with resole phenolic resins. Coatings based on such polyesters and resole phenolic resins are found to exhibit excellent solvent resistance, indicating effective crosslinking of the two components.

Thus, there is also provided a thermosetting composition comprising:
a) an unsaturated curable polyester comprising the residues of an α,β-unsaturated polycarboxylic acid compound, said α,β-unsaturated polycarboxylic acid compound having at least two carboxylic acid groups or at least one anhydride group, and having at least one unsaturation that is in the α,β position relative to a carbonyl group and is not located on an aromatic ring; and
b) a phenolic resin substituted with at least one methylol group.

There is further provided a thermosetting composition comprising:
I) an unsaturated polyester comprising the residues of:
   a) polyhydroxy compounds comprising:
      (i) a diol in an amount of 70 mole % - 100 mole %; and
      (ii) a polyhydroxyl compound having 3 or more hydroxyl groups in an amount of 0 to 30 mole %;
      wherein the mole % is based on 100% of all moles of polyhydroxyl compounds; and
   b) polycarboxylic compounds comprising
      (i) an α,β-unsaturated polycarboxylic acid compound; and
      (ii) a polycarboxylic acid compound other than the (b)(i) α,β-unsaturated polycarboxylic acid compound.
II) a phenolic resin substituted with at least one methylol group.

### The Beta-Ketoacetate Modified Curable Poleyster Resin

Polyesters containing beta-ketoacetate moieties are curable with resole phenolic resins. Coatings based on such polyesters and resole phenolic resins are found to exhibit excellent solvent resistance, indicating effective crosslinking of the two components.

Thus, there is further provided a thermosetting composition comprising:
I. a curable polyester resin containing beta-ketoacetate moieties without vinyl unsaturation; and
II. a phenolic resin having at least one methylol group.

The curable polyester resin can be the reaction product of a polyester resin with a compound containing a beta-ketoacetate moiety that does not contain a vinyl unsaturation.

There is now also provided a thermosetting composition comprising:
I) a curable polyester resin comprising the reaction product of a polyester resin with a compound containing a beta-ketoacetate moiety that does not contain a vinyl unsaturation, said polyester resin comprising the reaction product of:
   a) polyhydroxyl compounds comprising:
      (i) diol compounds in an amount of 70 mole % - 100 mole %; and
      (ii) polyhydroxyl compounds having 3 or more hydroxyl groups in an amount of 0 to 30 mole %;
      wherein the mole % is based on 100% of all moles of polyhydroxyl compounds a); and
   b) polycarboxyl compounds comprising polycarboxylic acid compounds, derivatives of polycarboxylic acid compounds, the anhydrides of polycarboxylic acids, or combinations thereof; and
II) a phenolic resin substituted with at least one methylol group.

These modified curable polyester resins may be used in water borne coatings, solvent borne coatings, powder coating. Such coatings can be used in automotive OEM, auto refinish, transportation, aerospace, maintenance, marine, machinery and equipment, general metal, appliance, metal furniture, commercial construction, home construction, architectural coating applications, paints, packaging such as metal can coatings, and coil.

### Thermosetting Coating Compositions Containing Un-substituted Or Meta-Substituted Phenolic Resins

There is also provided a thermosetting coating composition that contains a particular resole resin that exhibits good reactivity with curable polyester resins that have hydroxyl and/or acid numbers. In particular, there is also provided a thermosetting composition comprising:
I) a curable polyester resin comprising the residues of
   a) polyhydroxyl compounds comprising:
      (i) diol compounds in an amount of 70 mole % - 100 mole %; and
      (ii) polyhydroxyl compounds having 3 or more hydroxyl groups in an amount of 0 to 30 mole %;
      wherein the mole % is based on 100% of all moles of polyhydroxyl compounds a); and
   b) polycarboxyl compounds comprising polycarboxylic acid compounds, derivatives of polycarboxylic acid compounds, the anhydrides of polycarboxylic acids, or combinations thereof; and
II) a crosslinker comprising a resole phenolic resin containing the residues of un-substituted phenol and/or meta-substituted phenol.

These resole resins exhibit good reactivity with any of the aforementioned modified curable polyester resins as well as unmodified curable polyester resins.

### DETAILED DESCRIPTION OF THE INVENTION

Unless indicated to the contrary, the numerical parameters set forth in the following specification and attached claims are approximations that may vary depending upon the desired properties sought to be obtained by the present invention. At the very least, each numerical parameter should be construed in light of the number of reported significant digits and by applying ordinary rounding techniques. Further, the ranges stated in this disclosure and the claims are intended to include the entire range specifically and not only the endpoint(s). For example, a range stated to be 0 to 10 is intended to disclose all whole numbers between 0 and 10 such as, for example 1, 2, 3, 4, etc., all fractional numbers between 0 and 10, for example 1.5, 2.3, 4.57, 6.1113, etc., and the endpoints 0 and 10. Also, a range associated with chemical substituent groups such as, for example, "C1 to C5 alkyl groups" is intended to specifically include and disclose C1 and C5 alkyl groups as well as C2, C3, and C4 alkyl groups.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in its respective testing measurements.

As used in the specification and the appended claims, the singular forms "a," "an" and "the" include their plural referents unless the context clearly dictates otherwise. For example, a reference to a "polyester," a "polycarboxylic acid", a "residue" is synonymous with "at least one" or "one or more" polyesters, polycarboxylic acids, or residues and is thus intended to refer to both a single or plurality of polyesters, polycarboxylic acids, or residues. In addition, references to a composition containing or including "an" ingredient or "a" polyester is intended to include other ingredients or other polyesters, respectively, in addition to the one named. The terms "containing" or "including" are intended to be synonymous with the term "comprising", meaning that at least the named compound, element, particle, or method step, etc., is present in the composition or article or method, but does not exclude the presence of other compounds, catalysts, materials, particles, method steps, etc, even if the other such compounds, material, particles, method steps, etc., have the same function as what is named, unless expressly excluded in the claims.

Also, it is to be understood that the mention of one or more process steps does not preclude the presence of additional process steps before or after the combined recited steps or intervening process steps between those steps expressly identified. Moreover, the lettering of process steps or ingredients is a convenient means for identifying discrete activities or ingredients and the recited lettering can be arranged in any sequence, unless otherwise indicated.

The term "curable polyester", as used herein, is synonymous with the term "resin" and is intended to mean a polymer prepared by the polycondensation of at least one or more polycarboxylic acid compounds and one or more polyhydroxyl compounds. The curable polyester disclosed herein is useful to make a thermoset polymer and is particularly suitable as a resin for coatings.

The term "residue(s)" means the portion of a molecule in the polyester that remains after its reaction to form the curable polyester resin or a polyester polymer.

A compound or curable polyester resin having a beta-ketoacetate moiety also includes its enol tautomer.

The phrase "at least a portion" includes a portion or the whole.

### The Acid Number Modified Polyester Resin

The acid number modified polyester resin is a curable TACD polyester that has both carboxyl and hydroxyl functionalities and a high ratio of carboxyl functionalities to hydroxyl functionalities. The level of carboxyl functionality is sufficient to provide water dispersibility after neutralization when water borne coatings are desired. Moreover, the carboxyl functionality provides an acid number modified curable polyester resin that is suitable for crosslinking with both hydroxyl-curable cross-linking compounds and acid-curable cross-linking compounds. The dual functionalities on the acid number modified curable polyester resin offer a variety of crosslinking mechanisms for curing. This particular kind of curable polyester resin can also be identified as an "acid number modified curable polyester resin" for convenience.

In particular, there is provided a composition comprising a curable polyester resin, said curable polyester resin comprising the residues of:
a) polyhydroxyl compounds comprising:
   i) 2,2,4,4-tetraalkylcyclobutane-1,3-diol (TACD) compounds, and
   ii) polyhydroxyl compounds other than TACD, and
b) polycarboxyl compounds comprising:
   i) a polycarboxylic acid compound, a derivative of polycarboxylic acid compound (other than (bii)), or a combination thereof, and
   ii) a polycarboxylic anhydride compound;
wherein said curable polyester resin has an acid number ranging from 20 to 120 mg KOH/g, a hydroxyl number ranging from greater than 0 to 100 mg KOH/g, and an acid number:hydroxyl (AN:OH) number ratio of at least 0.5:1.

The composition contains a curable polyester resin. This curable polyester resin contains residues or moieties of (a) polyhydroxyl compounds. The polyhydroxyl compounds used to obtain the acid number modified curable polyester resin include at least two types:
i) 2,2,4,4-tetraalkylcyclobutane-1,3-diol (TACD) compounds, and
ii) polyhydroxyl compounds other than TACD.

The ai) 2,2,4,4-tetraalkylcyclobutane-1,3-diol compounds can be represented by the general structure: 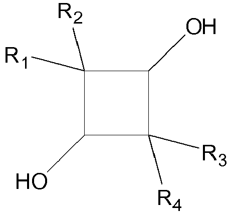 wherein R₁, R₂, R₃, and R₄ each independently represent an alkyl radical, for example, a lower alkyl radical having 1 to 8 carbon atoms; or 1 to 6 carbon atoms, or 1 to 5 carbon atoms, or 1 to 4 carbon atoms, or 1 to 3 carbon atoms, or 1 to 2 carbon atoms, or 1 carbon atom.. The alkyl radicals may be linear, branched, or a combination of linear and branched alkyl radicals. Examples of TACD include 2,2,4,4-tetramethylcyclobutane-1,3-diol, 2,2,4,4-tetraethylcyclobutane-1,3-diol, 2,2,4,4-tetra-n-propylcyclobutane-1,3-diol, 2,2,4,4-tetra-n-butylcyclobutane-1,3-diol, 2,2,4,4-tetra-n-pentylcyclobutane-1,3-diol, 2,2,4,4-tetra-n-hexylcyclobutane-1,3-diol, 2,2,4,4-tetra-n-heptylcyclobutane-1,3-diol, 2,2,4,4-tetra-n-octylcyclobutane-1,3-diol, 2,2-dimethyl-4,4-diethylcyclobutane-1,3-diol, 2-ethyl-2,4,4-trimethylcyclobutane-1,3-diol, 2,4-dimethyl-2,4-diethyl-cyclobutane-1,3-diol, 2,4-dimethyl-2,4-di-n-propylcyclobutane-1,3-diol, 2,4-n-dibutyl-2,4-diethylcyclobutane-1,3-diol, 2,4-dimethyl-2,4-diisobutylcyclobutane-1,3-diol, and 2,4-diethyl-2,4-diisoamylcyclobutane-1,3-diol. Desirably the TACD compound comprises 2,2,4,4-tetramethylcyclobutane-1,3-diol ("TMCD").

The molar quantity of TACD (ai) used to make the acid number modified curable polyester resin disclosed herein, based on the total moles of the polyhydroxyl compounds (a), is desirably at least 20 mole%, or at least 30 mole%, or at least 40 mole%, or at least 50 mole%, or more than 50 mole%, or at least 55 mole%, or at least 60 mole%, or at least 65 mole%, or at least 70 mole%, or at least 75 mole%, or at least 80 mole%, or at least 85 mole%, or at least 90 mole%, or at least 95 mole%. Additionally, or in the alternative, the molar quantity of TACD (ai) is up to 100 mole%, or less than 100 mole%, or up to 99 mole%, or up to 98 mole%, or up to 97 mole%, or up to 96 mole%, or up to 95 mole%, or up to 93 mole%, or up to 91 mole%, or up to 90 mole%, based on 100% of all the moles of polyhydroxyl compounds (a).

The molar quantity of TACD can exceed the molar quantity of any other polyhydroxyl compound.

The molar quantity of TACD can exceed the molar quantity of all other polyhydroxyl compounds.

Suitable ranges of TACD, in mole% based on 100 mole% of all polyhydroxyl compounds (a), are 20-100, or 30-100, or 40-100, or 50-100, or more than 50-100, or 55-100, or 60-100, or 65-100, or 70-100, or 75-100, or 80-100, or 85-100, or 90-100, or 95-100, or 20-less than100, or 30- less than 100, or 40- less than 100, or 50- less than 100, or more than 50- less than 100, or 55- less than 100, or 60- less than 100, or 65- less than 100, or 70-less than 100, or 75- less than 100, or 80- less than 100, or 85- less than 100, or 90- less than 100, or 95- less than 100, or 20-99, or 30-99, or 40-99, or 50-99, or more than 50-99, or 55-99, or 60-99, or 65-99, or 70-99, or 75-99, or 80-99, or 85-99, or 90-99, or 95-99, or 20-98, or 30-98, or 40-98, or 50-98, or more than 50-98, or 55-98, or 60-98, or 65-98, or 70-98, or 75-98, or 80-98, or 85-98, or 90-98, or 95-98, or 20-97, or 30-97, or 40-97, or 50-97, or more than 50-97, or 55-97, or 60-97, or 65-97, or 70-97, or 75-97, or 80-97, or 85-97, or 90-97, or 95-97, or 20-96, or 30-96, or 40-96, or 50-96, or more than 50-96, or 55-96, or 60-96, or 65-96, or 70-96, or 75-96, or 80-96, or 85-96, or 90-96, or 95-96, or 20-95, or 30-95, or 40-95, or 50-95, or more than 50-95, or 55-95, or 60-95, or 65-95, or 70-95, or 75-95, or 80-95, or 85-95, or 90-95, or 20-93, or 30-93, or 40-93, or 50-93, or more than 50-93, or 55-93, or 60-93, or 65-93, or 70-93, or 75-93, or 80-93, or 85-93, or 90-93, or 20-91, or 30-91, or 40-91, or 50-91, or more than 50-91, or 55-91, or 60-91, or 65-91, or 70-91, or 75-91, or 80-91, or 85-91, or 90-91, or 20-90, or 30-90, or 40-90, or 50-90, or more than 50-90, or 55-90, or 60-90, or 65-90, or 70-90, or 75-90, or 80-90, or 85-90. In general, suitable ranges of TACD, in moles relative to 100 mole % of all polyhydroxyl compounds (a), include more than 50-100, or 55-100, or 60-100, or 65-100, or 70-100, or 75-100, or 80-100, or 85-100, or 50- less than 100, or more than 50- less than 100, or 55- less than 100, or 60- less than 100, or 65-less than 100, or 70- less than 100, or 75- less than 100, or 80- less than 100, or 85- less than 100, or 50-98, or 55-98, or 60-98, or 65-98, or 70-98, or 75-98, or 80-98, or 85-98, or 50-95, or more than 50-95, or 55-95, or 60-95, or 65-95, or 70-95, or 75-95, or 80-95, or 50-90, or more than 50-90, or 55-90, or 60-90, or 65-90, or 70-90, or 75-90, or 80-90, or 85-90.

The molar quantity of TACD (ai) residues in the acid number modified curable polyester resin disclosed herein, based on the total moles of all components of the acid number modified curable polyester resin, can be at least 5 mole%, or at least 10 mole%, or at least 15 mole%, or at least 20 mole%, or at least 25 mole%, or at least 27 mole%, or at least 30 mole%, or at least 33 mole%, or at least 35 mole%, or at least 37 mole%, or at least 40 mole%, or at least 43 mole%, or at least 45 mole%, or at least 47 mole%, or at least 50 mole%. Additionally or in the alternative, the molar quantity of TACD (ai) residues in the curable polyester disclosed herein can be up to 60 mole%, or up to 57 mole%, or up to 55 mole%, or up to 53 mole%, or up to 50 mole%, or up to 47 mole%, or up to 45 mole%. Suitable ranges, in mole% based on the total moles of all components of the acid number modified curable polyester resin, include 5-60, or 10-60, or 15-60, or 20-60, or 25-60, or 27-60, or 30-60, or 33-60, or 35-60, or 37-60, or 40-60, or 43-60, or 45-60, or 47-60, or 50-60, or 5-57, or 10-57, or 15-57, or 20-57, or 25-57, or 27-57, or 30-57, or 33-57, or 35-57, or 37-57, or 40-57, or 43-57, or 45-57, or 47-57, or 50-57, or 5-55, or 10-55, or 15-55, or 20-55, or 25-55, or 27-55, or 30-55, or 33-55, or 35-55, or 37-55, or 40-55, or 43-55, or 45-55, or 47-55, or 50-55, or 5-53, or 10-53, or 15-53, or 20-53, or 25-53, or 27-53, or 30-53, or 33-53, or 35-53, or 37-53, or 40-53, or 43-53, or 45-53, or 47-53, or 50-53, or 5-50, or 10-50, or 15-50, or 20-50, or 25-50, or 27-50, or 30-50, or 33-50, or 35-50, or 37-50, or 40-50, or 43-50, or 45-50, or 47-50, or 50-50, or 5-47, or 10-47, or 15-47, or 20-47, or 25-47, or 27-47, or 30-47, or 33-47, or 35-47, or 37-47, or 40-47, or 43-47, or 45-47, or 5-45, or 10-45, or 15-45, or 20-45, or 25-45, or 27-45, or 30-45, or 33-45, or 35-45, or 37-45, or 40-45, or 43-45.

The acid number modified curable polyester resin also contains the residues of polyhydroxyl compounds (aii) other than TACD. Suitable polyhydroxyl compounds (aii), other than TACD, include compounds having at least two hydroxyl groups, or having at least three hydroxyl groups, or mixtures of compounds having two hydroxyl groups and three or more hydroxyl groups, and are compounds other than TACD. Examples of such compounds include compounds having 2-18 carbon atoms and at least two hydroxyl groups, desirably aliphatic or cycloaliphatic compounds. Specific examples of such compounds include 2,2-dimethyl-1,3-propanediol (neopentyl glycol), 1,2-cyclohexanedimethanol, 1,3-cyclohexanedimethanol, 1,4-cyclohexanedimethanol, 2,2,4-trimethyl-1,3-pentanediol, hydroxypivalyl hydroxypivalate, 2-methyl-1,3-propanediol, 2-butyl-2-ethyl-1,3-propanediol, 2-ethyl-2-isobutyl-1,3-propanediol, 1,3-butanediol, 1,4-butanediol, 1,5-pentanediol, 1,6-hexanediol, 2,2,4,4-tetramethyl-1,6-hexanediol, 1,10-decanediol, 1,4-benzenedimethanol, hydrogenated bisphenol A, ethylene glycol, propylene glycol, diethylene glycol, dipropylene glycol, triethylene glycol, tetraethylene glycol, polyethylene glycol, 1,1,1-trimethylol propane, 1,1,1-trimethylolethane, glycerin, pentaerythritol, erythritol, threitol, dipentaerythritol, sorbitol, and mixtures thereof.

Desirably, the polyhydroxyl compounds (a)(ii) comprise 2,2-dimethyl-1,3-propanediol (neopentyl glycol), 1,2 cyclohexanedimethanol, 1,3-cyclohexanedimethanol, 1,4- cyclohexanedimethanol, 2,2,4-trimethyl-1,3-pentanediol, hydroxypivalyl hydroxypivalate, 2-methyl-1,3-propanediol, 2-butyl-2-ethyl-1,3-propanediol, 1,4-butanediol, 1,6-hexanediol, 1,1,1-trimethylol propane, 1,1,1-trimethylolethane, glycerin, pentaerythritol, or mixtures thereof. For example, the polyhydroxy compounds (b) can be 2,2-dimethyl-1,3-propanediol (neopentyl glycol or NPG), 1,3-cyclohexanedimethanol, 1,4 cyclohexanedimethanol, 2-methyl-1,3-propanediol, 1,1,1-trimethylol propane, 1,1,1-trimethylolethane, glycerin, pentaerythritol, or mixtures thereof.

For example, the polyhydroxyl compounds (a)(ii) can be compounds having two hydroxyl groups, or compounds having three or more hydroxyl groups, or mixtures thereof. The polyhydroxyl compounds having two hydroxyl groups can be branched or linear, saturated or unsaturated, aliphatic or cycloaliphatic C₂-C₂₀ compounds, the hydroxyl groups being primary, secondary, and/or tertiary. The polyhydroxyl compounds having 3 or more hydroxyl groups can be branched or linear, saturated or unsaturated, aliphatic or cycloaliphatic C₂-C₂₀ compounds, the hydroxyl groups being primary, secondary, and/or tertiary. The polyhydroxyl compounds having two hydroxyl groups can be branched or linear, saturated or unsaturated, aliphatic or cycloaliphatic C₂-C₂₀ compounds, the hydroxyl groups being primary, secondary, and/or tertiary. Examples of each of these compounds are given above.

The molar quantity of polyhydroxyl compounds (a)(ii), is desirably greater than 0, or at least 3, or at least 5, or at least 8, or at least 10, or at least 13, or at least 15, in each case as mole% based on 100 mole% of all polyhydroxyl compounds (a). Additionally or in the alternative, the molar quantity of polyhydroxyl compounds (a)(ii) can be up to 80, or up to 60, or up to 40, or up to 30, or up to 25, or up to 20, in each case mole% based on 100 mole% of all polyhydroxyl compounds (a). Suitable ranges include greater than 0 to 80, or greater than 0 to 60, or greater than 0 to 40, or greater than 0 to 30, or greater than 0 to 25, or greater than 0 to 20, or 3 to 80, or 3 to 60, or 3 to 40, or 3 to 30, or 3 to 25, or 3 to 20, or 5 to 80, or 5 to 60, or 5 to 40, or 5 to 30, or 5 to 25, or 5 to 20, or 8 to 80, or 8 to 60, or 8 to 40, or 8 to 30, or 8 to 25, or 8 to 20, or 10 to 80, or 10 to 60, or 10 to 40, or 10 to 30, or 10 to 25, or 10 to 20, or 13 to 80, or 13 to 60, or 13 to 40, or 13 to 30, or 13 to 25, or 13 to 20, or 15 to 80, or 15 to 60, or 15 to 40, or 15 to 30, or 15 to 25, or 15 to 20, in each case mole% based on 100 mole% of all polyhydroxyl compounds (a).

The molar quantity of polyhydroxyl compounds (a)(ii) is desirably greater than 0, or at least 1, or at least 3, or at least 5, or at least 7, in each case as mole% based on acid number modified curable polyester resin. Additionally or in the alternative, the molar quantity of polydyroxyl compounds (a)(ii) can be up to 40, or up to 30, or up to 20, or up to 15, or up to 12, or up to 10, in each case mole% based on the total moles of all components of the acid number modified curable polyester resin. Suitable ranges, based on the total moles of all components of the acid number modified curable polyester resin, include greater than 0 to 40, or greater than 0 to 30, or greater than 0 to 20, or greater than 0 to 15, or greater than 0 to 12, or greater than 0 to 10, or 1 to 40, or 3 to 30, or 3 to 20, or 3 to 15, or 3 to 12, or 3 to 10, or 5 to 40, or 5 to 30, or 5 to 20, or 5 to 15, or 5 to 12, or 5 to 10, or 7 to 40, or 7 to 30, or 7 to 20, or 7 to 15, or 7 to 12, or 7 to 10, in each case mole% based on the total moles of all components of the acid number modified curable polyester resin.

Any of the amounts and ranges described with respect to the polyhydroxyl compounds (a)(ii) are also applicable to compounds having two hydroxyl groups, or compounds having 3 or more hydroxyl groups, or mixtures thereof.

The acid number modified curable polyester resin also contains residues of (b) polycarboxylic acid compounds. Polycarboxylic acid compounds are any compounds that contain at least two carboxylic acid groups or derivatives of polycarboxylic acid compounds. As the polycarboxylic acid compounds (b), the acid number modified curable polyester resin contains the residues of:
i) polycarboxylic acid compounds, a derivative of polycarboxylic acid compound (other than (bii), or a combination thereof, and
ii) polycarboxylic anhydride compounds.

Suitable polycarboxylic acid compounds (bi) include polycarboxylic acid compounds having at least two carboxylic acid groups. The polycarboxylic acid compounds comprise polycarboxylic acid compounds having at least two carboxylic acid groups, derivatives thereof, or combinations thereof, capable of forming an ester linkage with a polyhydroxyl component, other than a polycarboxylic anhydride compound. Derivatives of the polycarboxylic acid compounds include dimethyl ester or other dialkyl esters of the diacid, or diacid chloride or other diacid halides, other than the polycarboxylic anhydride. The polycarboxylic acid compounds can be tricarboxylic polycarboxylic acid compounds or derivatives thereof.

Examples of polycarboxylic acid compounds (bi) that may be used include aliphatic polycarboxylic acids, cycloaliphatic polycarboxylic acids, aromatic polycarboxylic acids, derivatives of each, or mixtures of two or more of these acids. Specific examples include isophthalic acid (or dimethyl isophthalate), terephthalic acid (or dimethyl terephthalate), phthalic acid, 1,4-cyclohexanedicarboxylic acid, 1,3-cyclohexanedicarboxylic acid, dodecanedioic acid, sebacic acid, azelaic acid, maleic acid, fumaric acid, succinic acid, adipic acid, trimellitic acid, citric acid, tartaric acid, 2,6-naphthalenepolycarboxylic acid, glutaric acid, itatonic acid, and their derivatives, diglycolic acid; 2,5-norbornanepolycarboxylic acid; 1,4-naphthalenepolycarboxylic acid; 2,5-naphthalene polycarboxylic acid; diphenic acid; 4,4'-oxydibenzoic acid; 4,4'-sulfonyidibenzoic acid, or mixtures thereof.

The polycarboxylic acid compounds (bi) can be a combination of aromatic polycarboxylic acid compounds and either or both of aliphatic or cycloaliphatic polycarboxylic acid compounds. For example, the polycarboxylic acid compounds can include aromatic polycarboxylic acid compounds and aliphatic polycarboxylic acids compounds having 2 to 22 carbon atoms; or aromatic polycarboxylic acid compounds and cycloaliphatic polycarboxylic acids compounds having 2 to 22 carbon atoms; or aromatic polycarboxylic acid compounds, aliphatic polycarboxylic acids compounds having 2 to 22 carbon atoms; and cycloaliphatic polycarboxylic acids compounds having 2 to 22 carbon atoms.

If desired, the poycarboxylic acid compounds (b) do not include terephtalic acid or a derivative of terephthalic acid.

More specific examples of some of the suitable polycarboxylic acids b(i) and/or combinations thereof include:
a) (isophthalic acid (or dimethyl isophthalate)) and (1,4-cyclohexanedicarboxylic acid, 1,3-cyclohexanedicarboxylic acid, or mixtures thereof); or
b) (isophthalic acid (or dimethyl isophthalate)) and (dodecanedioic acid, sebacic acid, azelaic acid, maleic acid, fumaric acid, succinic acid, adipic acid, glutaric acid, itatonic acid, diglycolic acid; or mixtures thereof); or
c) (isophthalic acid (or dimethyl isophthalate)); or (1,4-cyclohexanedicarboxylic acid, 1,3-cyclohexanedicarboxylic acid, or mixtures thereof) and (dodecanedioic acid, sebacic acid, azelaic acid, maleic acid, fumaric acid, succinic acid, adipic acid, glutaric acid, itatonic acid, diglycolic acid, or mixtures thereof), or
d) 1,4-cyclohexanedicarboxylic acid.

In each of examples (a)-(d), terephthalic acid and derivatives thereof are optionally not included.

The molar quantity of polycarboxylic acid compounds (bi) used to make the acid number modified curable polyester resin disclosed hereincan be at least 65 mole%, or at least 70 mole%, or at least 80 mole%, based on the 100 mole% of total moles of polycarboxylic acid compounds (b). Additionally or in the alternative, the molar quantity of polycarboxylic anhydride compounds (bii) used to make the curable polyester disclosed hereincan be up to 96 mole%, or up to 95 mole%, or up to 93 mole%, or up to 92 mole%, or up to 91 mole%, or up to 90 mole%, based on the total moles of all components of the acid number modified curable polyester resin. Suitable ranges, in mole% based on 100 mole% of the total moles of polycarboxylic acids (b), include 65-96, or 70-96, or 80-96, or 65-95, or 70-95, or 80-95, or 65-93, or 70-93, or 80-93, or 65-92, or 70-92, or 80-92, or 65-91, or 70-91, or 80-91, or 65-90, or 70-90, or 80-90.

The acid number modified curable polyester resin also contains residues of a polycarboxylic anhydride compound(s) (bii). Polycarboxylic anhydride compounds (bii) include the anhydrides of any one of the types of polycarboxylic acid compounds described in the list of polycarboxylic acid compounds (bi). This would include the anhydrides of polycarboxlic acids having at least two acyl groups bonded to the same oxygen atom. The anhydrides compounds (bii) comprise the anhydride of any one of the polycarboxylic acid compounds (bi) having at least two carboxylic acid groups, capable of forming an ester linkage with the polyhydroxyl compounds (a). The anhydrides can be symmetrical or unsymmetrical (mixed) anhydrides. The anhydrides have at least one anhydride group, and can include two, three, four, or more anhydride groups.

Suitable polycarboxylic anhydrides include acetic anhydride, propionic anhydride, butyric anhydride, isobutyric anhydride, pivalic anhydride, valeric anhydride, isovaleric anhydride, 2-methyl butyric anhydride, 2-ethyl butyric anhydride, caproic anhydride, caprylic anhydride, glutaric anhydride, isocaproic anhydride, n-heptanoic anhydride, nonoic anhydride, decanoic anhydride, neodecanoic anhydride, undecanoic anhydride, neoheptanoic anhydride, lauric anhydride, tridecanoic anhydride, 2-ethyl hexanoic anhydride, acetic propionic anhydride, acetic isobutyric anhydride, myristic anhydride, palmitic anhydride, stearic anhydride, phenylacetic anhydride, cyclohexanecarboxylic anhydride, 3-methyl-cyclopentanecarboxylic anhydride, beta-methoxy propionic anhydride, alpha-ethoxy butyric anhydride, benzoic anhydride, o-, m-, and p-toluic anhydride, 2, 4, 6-trimethylbenzoic anhydride, o-, m-, and p-chlorobenzoic anhydride, o-, m-, and p-bromobenzoic anhydride, o-, m-, and p-nitrobenzoic anhydride, o- and p- hydroxybenozic anhydride, o-, m-, and p-aminobenzoic anhydride, and o-, m-, and p-methoxybenzoic anhydride, phthalic anhydride, 2-butenoic anhydride, dodecanedioic anhydride, sebacic anhydride, azelaic anhydride, maleic anhydride, succinic anhydride, adipic anhydride, glutaric anhydride, itatonic anhydride, tetrahydrophthalic anhydride, hexahydrophthalic anhydride, suceinic anhydride, norbornene anhydride, diglycolic anhydride, naphthalenetetracarboxylic dianhydride, pyromellitic dianhydride, 3,3', 4,4' - oxydiphtalic dianhydride, 3,3', 4,4'-benzophenone tetracarboxylic dianhydride, 4,4'-diphtalic (hexafluoroisopropylidene) anhydride, benzoquinonetetracarboxylic dianhydride, ethylenetetracarboxylic dianhydride, trimellitic anhydride, or mixtures thereof.

Desirably, the anhydride used can be isobutyric anhydride, acetic anhydride, pivalic anhydride, isovaleric anhydride, neodecanoic anhydride, neoheptanoic anhydride, and 2-ethyl hexanoic anhydride, phthalic anhydride, sebacic anhydride, maleic anhydride, succinic anhydride, adipic anhydride, glutaric anhydride, tetrahydrophthalic anhydride, hexahydrophthalic anhydride, naphthalenetetracarboxylic dianhydride, pyromellitic dianhydride, 3,3', 4,4' - oxydiphtalic dianhydride, 3,3', 4,4'-benzophenone tetracarboxylic dianhydride, benzoquinonetetracarboxylic dianhydride, ethylenetetracarboxylic dianhydride, trimellitic anhydride, or mixtures thereof.

The molar quantity of polycarboxylic anhydride compounds (bii) used to make the curable polyester disclosed hereincan be at least 4 mole%, or at least 5 mole%, or at least 7 mole%, or at least 8 mole%, or at least 9 mole%, or at least 10 mole%, based on the total moles of polycarboxylic acid compounds (b). Additionally or in the alternative, the molar quantity of polycarboxylic anhydride compounds (bii) used to make the curable polyester disclosed hereincan be up to 35 mole%, or up to 30 mole%, or up to 20 mole%, or up to 16 mole%, or up to 14 mole%, or up to 12 mole%, based on the total moles of all components of the acid number modified curable polyester resin. Suitable ranges, in mole% based on the total moles of polycarboxylic acids (b), include 4-35, or 5-35, or 7-35, or 8-35, or 9-35, or 10-35, or 4-30, or 5-30, or 7-30, or 8-30, or 9-30, or 10-30, or 4-20, or 5-20, or 7-20, or 8-20, or 9-20, or 10-20, or 4-16, or 5-16, or 7-16, or 8-16, or 9-16, or 10-16, or 4-14, or 5-14, or 7-14, or 8-14, or 9-14, or 10-14, or 4-12, or 5-12, or 7-12, or 8-12, or 9-12, or 10-12. In general, the ranges will be, in mole% based on the total moles of polycarboxylic acids (b), 8-35, or 10-35, or 8-30, or 10-30, or 8-20, or 10-20.

The molar quantity of polycarboxylic anhydride compounds (bii) used to make the curable polyester disclosed hereincan be at least 0.5 mole%, or at least 1 mole%, or at least 1.5 mole%, or at least 2 mole%, or at least 2.5 mole%, or at least 3 mole%, or at least 3.5 mole%, or at least 4 mole%, or at least 4.5 mole%, based on the total moles of all components of the acid number modified curable polyester resin. Additionally or in the alternative, the molar quantity of polycarboxylic anhydride compounds (bii) used to make the curable polyester disclosed herein can be up 15 mole%, or up to 10 mole%, or up to 8 mole%, or up to 7 mole%, or up to 6 mole%, based on the total moles of all components of the acid number modified curable polyester resin. Suitable ranges, in mole% based on the total moles of all components of the acid number modified curable polyester resin, include 0.5-15, or 1-15, or 1.5-15, or 2-15, or 2.5-15, or 3-15, or 3.5-15, or 4-15, or 4.5-15, or 0.5-10, or 1-10, or 1.5-10, or 2-10, or 2.5-10, or 3-10, or 3.5-10, or 4-10, or 4.5-10, or 0.5-8, or 1-8, or 1.5-8, or 2-8, or 2.5-8, or 3-8, or 3.5-8, or 4-8, or 4.5-8, or 0.5-7, or 1-7, or 1.5-7, or 2-7, or 2.5-7, or 3-7, or 3.5-7, or 4-7, or 4.5-7, or 0.5-6, or 1-6, or 1.5-6, or 2-6, or 2.5-6, or 3-6, or 3.5-6, or 4-6, or 4.5-6. In general, the ranges will be, in mole% based on the total moles of all components of the acid number modified curable polyester resin, 3.5-10, or 4-10, or 4.5-10, or 3.5-8, or 4-8, or 4.5-8, or 3.5-7, or 4-7, or 4.5-7, or 3.5-6, or 4-6, or 4.5-6.

The molar ratio of (a) polyhydroxyl compounds to (bi) polycarboxylic acid compounds used in the process of making the curable polyester disclosed herein is desirably 0.9:1 to 1.45:1, or 0.95:1 to 1.1:1. A molar excess of polyhydroxyl compounds (a) can be used to ensure complete reaction with all carboxylic acid groups on the polycarboxylic acid compounds (bi). However, it is not necessary to reduce the acid number close to zero at the stage of making an intermediate polyester polymer since the acid number modified curable polyester resin will have an acid number of at least 20.

The acid number modified curable polyester resin has an acid number ranging from 20 to 120 mg KOH/g and a hydroxyl number ranging from greater than 0 to 100 mg KOH/g.

The acid number of the acid number modified curable polyester resin can be from 20 to 120, or from 25 to 120, or from 30 to 120, or from 35 to 120, or from 40 to 120, or from 45 to 120, or from 50 to 120, or from 55 to 120, or from 60 to 120, or from 65 to 120, or from 70 to 120, or from 75 to 120, or from 80 to 120, or from 85 to 120, or from 90 to 120, or from 95 to 120, or from 20 to 100, or from 25 to 100, or from 30 to 100, or from 35 to 100, or from 40 to 100, or from 45 to 100, or from 50 to 100, or from 55 to 100, or from 60 to 100, or from 65 to 100, or from 70 to 100, or from 75 to 100, or from 80 to 100, or from 85 to 100, or from 90 to 100, or from 20 to 90, or from 25 to 90, or from 30 to 90, or from 35 to 90, or from 40 to 90, or from 45 to 90, or from 50 to 90, or from 55 to 90, or from 60 to 90, or from 65 to 90, or from 70 to 90, or from 75 to 90, or from 80 to 90, or from 20 to 85, or from

25 to 85, or from 30 to 85, or from 35 to 85, or from 40 to 85, or from 45 to 85, or from 50 to 85, or from 55 to 85, or from 60 to 85, or from 65 to 85, or from 70 to 85, or from 75 to 85, or from 20 to 80, or from 25 to 80, or from 30 to 80, or from 35 to 80, or from 40 to 80, or from 45 to 80, or from 50 to 80, or from 55 to 80, or from 60 to 80, or from 65 to 80, or from 70 to 80, or from 75 to 80, or from 20 to 75, or from 25 to 75, or from 30 to 75, or from 35 to 75, or from 40 to 75, or from 45 to 75, or from 50 to 75, or from 55 to 75, or from 60 to 75, or from 65 to 75, or from 20 to 50, or from 25 to 50, or from 30 to 50, or from 35 to 50, or from 40 to 50, or from 45 to 50, or from 20 to 45, or from 25 to 45, or from 30 to 45, or from 35 to 45, or from 40 to 45, or from 20 to 40, or from 25 to 40, or from 30 to 40, or from 35 to 40, or from 20 to 35, or from 25 to 35.

The particular acid number can vary depending on the application and the curing system used. For example, if one desires, the acid number modified curable polyester resin can be formulated to have an acid number that is:
a) from 50 to 120, or from 50 to 100, or within any of the above stated ranges having an acid number of at least 50, for or in aqueous dispersions and waterborne coating applications, to impart sufficient water dispersibility after neutralization; or
b) 20 to 50 or within any of the above stated ranges having an acid number not exceeding 50, for or in solvent-based solutions and coating applications, to enhance solubility and lower the solution viscosity.

The hydroxyl number of the acid number modified curable polyester resin can be within a range of from greater than 0 to 100 mg KOH/g. Suitable ranges of hydroxyl number include greater than 0 to 100, or from 5 to 100, or from 10 to 100, or from 15 to 100, or from 20 to 100, or from 3 to 100, or from 25 to 100, or from 35 to 100, or from 40 to 100, or from 45 to 100, or from 50 to 100, or from 55 to 100, or from 60 to 100, or from 65 to 100, or from 70 to 100, or from 75 to 100, or from 80 to 100, or from 85 to 100, or from 90 to 100, greater than 0 to 90, or from 3 to 90, or from 5 to 90, or from 10 to 90, or from 15 to 90, or from 20 to 90, or from 25 to 90, or from 35 to 90, or from 40 to 90, or from 45 to 90, or from 50 to 90, or from 55 to 90, or from 60 to 90, or from 65 to 90, or from 70 to 90, or from 75 to 90, or from 80 to 90, greater than 0 to 85, or from 3 to 85, or from 5 to 85, or from 10 to 85, or from 15 to 85, or from 20 to 85, or from 25 to 85, or from 35 to 85, or from 40 to 85, or from 45 to 85, or from 50 to 85, or from 55 to 85, or from 60 to 85, or from 65 to 85, or from 70 to 85, or from 75 to 85, greater than 0 to 80, or from 3 to 80, or from 5 to 80, or from 10 to 80, or from 15 to 80, or from 20 to 80, or from 25 to 80, or from 35 to 80, or from 40 to 80, or from 45 to 80, or from 50 to 80, or from 55 to 80, or from 60 to 80, or from 65 to 80, or from 70 to 80, or from 75 to 80, or from greater than 0 to 75, or from 3 to 75, or from 5 to 75, or from 10 to 75, or from 15 to 75, or from 20 to 75, or from 25 to 75, or from 35 to 75, or from 40 to 75, or from 45 to 75, or from 50 to 75, or from 55 to 75, or from 60 to 75, or from 65 to 75, or from greater than 0 to 70, or from 3 to 70, or from 5 to 70, or from 10 to 70, or from 15 to 70, or from 20 to 70, or from 25 to 70, or from 35 to 70, or from 40 to 70, or from 45 to 70, or from 50 to 70, or from 55 to 70, or from 60 to 70, or from greater than 0 to 65, or from 3 to 65, or from 5 to 65, or from 10 to 65, or from 15 to 65, or from 20 to 65, or from 25 to 65, or from 35 to 65, or from 40 to 65, or from 45 to 65, or from 50 to 65, or from 55 to 65, or from greater than 0 to 60, or from 3 to 60, or from 5 to 60, or from 10 to 60, or from 15 to 60, or from 20 to 60, or from 25 to 60, or from 35 to 60, or from 40 to 60, or from 45 to 60, or from 50 to 60, or from 55 to 60, or from greater than 0 to 55, or from 3 to 55, or from 5 to 55, or from 10 to 55, or from 15 to 55, or from 20 to 55, or from 25 to 55, or from 35 to 55, or from 40 to 55, or from 45 to 55, or from 50 to 55, or from greater than 0 to 50, or from 3 to 50, or from 5 to 50, or from 10 to 50, or from 15 to 50, or from 20 to 50, or from 25 to 50, or from 35 to 50, or from 40 to 50, or from greater than 0 to 45, or from 3 to 45, or from 5 to 45, or from 10 to 45, or from 15 to 45, or from 20 to 45, or from 25 to 45, or from 35 to 45, or from greater than 0 to 40, or from 3 to 40, or from 5 to 40, or from 10 to 40, or from 15 to 40, or from 20 to 40, or from 25 to 40, or from 35 to 40, or from greater than 0 to 35, or from 3 to 35, or from 5 to 35, or from 10 to 35, or from 15 to 35, or from 20 to 35, or from 25 to 35.

Any one of the hydroxyl number ranges can be combined with any one of the acid number ranges. Non-limiting examples of combinations include those identified in Table 1 below. The "x" in each box indicates a suitable combination of OH# and Acid # ranges.

**Table 1**

| **OH#** | **Acid #** | | | | | | | | | | | | | |
|---|---|---|---|---|---|---|---|---|---|---|---|---|---|---|
| | 20-120 | 20-50 | 20-45 | 50-120 | 50-100 | 50-90 | 60-100 | 65-100 | 70-100 | 45-90 | 50-85 | 60-90 | 65-90 | 30-90 |
| 0-100 | x | x | x | x | x | x | x | x | x | x | x | x | x | x |
| 1-100 | x | x | x | x | x | x | x | x | x | x | x | x | x | x |
| 5-100 | x | x | x | x | x | x | x | x | x | x | x | x | x | x |
| 5-90 | x | x | x | x | x | x | x | x | x | x | x | x | x | x |
| 5-75 | x | x | x | x | x | x | x | x | x | x | x | x | x | x |
| 5-60 | x | x | x | x | x | x | x | x | x | x | x | x | x | x |
| 5-50 | x | x | x | x | x | x | x | x | x | x | x | x | x | x |
| 5-40 | x | x | x | x | x | x | x | x | x | x | x | x | x | x |
| 20-90 | x | x | x | x | x | x | x | x | x | x | x | x | x | x |
| 20-75 | x | x | x | x | x | x | x | x | x | x | x | x | x | x |
| 20-70 | x | x | x | x | x | x | x | x | x | x | x | x | x | x |
| 20-65 | x | x | x | x | x | x | x | x | x | x | x | x | x | x |
| 20-60 | x | x | x | x | x | x | x | x | x | x | x | x | x | x |
| 20-50 | x | x | x | x | x | x | x | x | x | x | x | x | x | x |
| 20-45 | x | x | x | x | x | x | x | x | x | x | x | x | x | x |
| 20-40 | x | x | x | x | x | x | x | x | x | x | x | x | x | x |
| 40-100 | x | x | x | x | x | x | x | x | x | x | x | x | x | x |
| 50-100 | x | x | x | x | x | x | x | x | x | x | x | x | x | x |
| 60-100 | x | x | x | x | x | x | x | x | x | x | x | x | x | x |

The ratio of acid number to hydroxyl number (AN:OH) in the acid number modified curable polyester resin disclosed hereinis at least 0.5:1. The particular acid number and hydroxyl number selected within each of the above described ranges and combination of ranges should be at or above this minimum AN:OH ratio. Having a suitable amount of acid end groups contributes toward the improvement in the curing rate and hardness of the coating. The ratio can be at least 0.6:1, or at least 0.7:1, or at least 0.8:1, or at least 0.9:1, or at least 1:1, or at least 1.1:1, or at least 1.2:1, or at least 1.3:1, or at least 1.4:1, or at least 1.5:1, or at least 1.6:1, or at least 1.7:1, or at least 1.8:1, or at least 1.9:1, or at least 2:1, or at least 2.1:1, or at least 2.2:1, or at least 2.3:1, or at least 2.4:1, or at least 2.5:1, or at least 2.6:1, or at least 2.7:1, or at least 2.8:1, or at least 2.9:1, or at least 3:1, or at least 3.5:1, or at least 4:1, or at least 5:1, or at least 6:1, and in each of the foregoing ratios, there is no particular upper limit, although practically the ratio is likely not needed to exceed 20:1. For example, the ratio does not need to exceed 15:1, or not to exceed 10:1, or not to exceed 8:1, or not to exceed 6:1, or not to exceed 5:1, or not to exceed 4:1, or not even to exceed 3:1 in order to obtain coatings having good hardness.

Suitable combinations of ranges for the AN:OH ratio are as set forth in Table 2 below, in which an x designated a contemplate ranges at the lower and upper ends of the selected range.

**Table 2**

| **Ranges of AN:OH Ratios** | | | | | | | | | | | | | | |
|---|---|---|---|---|---|---|---|---|---|---|---|---|---|---|
| **Upper End** | **Lower End** | | | | | | | | | | | | | |
| | 0.5:1 | 0.6:1 | 0.8:1 | 1:1 | 1.1:1 | 1.3:1 | 1.4:1 | 1.5:1 | 1.6:1 | 2:1 | 2.5:1 | 2.6:1 | 3:1 | 4:1 |
| 20:1 | x | x | x | x | x | x | x | x | x | x | x | x | x | x |
| 15:1 | x | x | x | x | x | x | x | x | x | x | x | x | x | x |
| 10:1 | x | x | x | x | x | x | x | x | x | x | x | x | x | x |
| 8:1 | x | x | x | x | x | x | x | x | x | x | x | x | x | x |
| 6:1 | x | x | x | x | x | x | x | x | x | x | x | x | x | x |
| 5:1 | x | x | x | x | x | x | x | x | x | x | x | x | x | x |
| 4:1 | x | x | x | x | x | x | x | x | x | x | x | x | x | x |
| 3:1 | x | x | x | x | x | x | x | x | x | x | x | x | x | x |

As mentioned above, the particular acid number and hydroxyl number within any given range is selected so as to satisfy the AN:OH ratio of at least 0.5:1 for the acid number modified curable polyester resin. Additional examples of suitable AN ranges, OH ranges, and AN:OH ratios are set forth in Table 3, in which an x in a box designates a suitable combination of all three.

**Table 3**

| **OH#** | **Acid #** | | | | | | | | | | | | | |
|---|---|---|---|---|---|---|---|---|---|---|---|---|---|---|
| | 20-120 | 20-50 | 20-45 | 50-120 | 50-100 | 50-90 | 60-120 | 65-10 0 | 70-100 | 45-90 | 50-85 | 60-90 | 65-90 | 30-90 |
| 0-100 | x | x | x | x | x | x | x | x | x | x | x | x | x | x |
| 1-100 | x | x | x | x | x | x | x | x | x | x | x | x | x | x |
| 5-100 | x | x | x | x | x | x | x | x | x | x | x | x | x | x |
| 5-90 | x | x | x | x | x | x | x | x | x | x | x | x | x | x |
| 5-75 | x | x | x | x | x | x | x | x | x | x | x | x | x | x |
| 5-60 | x | x | x | x | x | x | x | x | x | x | x | x | x | x |
| 5-50 | x | x | x | x | x | x | x | x | x | x | x | x | x | x |
| 5-40 | x | x | x | x | x | x | x | x | x | x | x | x | x | x |
| 15-90 | | | | x | | x | x | x | x | | x | x | x | |
| 15-75 | | | | x | | x | x | x | x | | x | x | x | |
| 20-70 | | | | x | x | | x | | x | | x | x | | |
| 20-65 | | | | x | x | | x | | x | | x | x | | |
| 20-60 | | | | x | x | | x | | x | | x | x | | |
| 20-50 | | | | x | | | x | | x | | x | x | | |
| 15-45 | | | | x | x | x | x | x | x | | x | x | x | |
| 10-40 | | | | x | x | x | x | x | x | x | x | x | x | x |
| 40-100 | | | | x | | | x | | | | | | | |
| 50-100 | | | | | | | x | | | | | | | |
| 60-100 | | | | | | | x | | | | | | | |
| **AN:O H Ratio** | 0.5:1 -20:1 | 0.8:1 -10:1 | 1:1 - 6:1 | 0.5:1 -3:1 | 0.8:1 -5:1 | 1.5:1 -5:1 | 0.5:1 -2:1 | 1:1 6:1 | 0.5:1 -4:1 | 1.3:1 -6:1 | 2:1 - 4:1 | 0.5:1 -3:1 | 1.5:1 -5:1 | 1:1 - 8:1 |

The acid number modified curable polyester resin disclosed hereinhas the ability to cure phenolic resins (or phenoplast) quite well in comparison to those acid number modified curable polyester resins having hydroxyl functionalities with little or no acid end groups. In another example, when the crosslinking agent is a phenolic resin, the acid number of the polyester can be from 50 to 100 and hydroxyl number is 10 to 50.

For the acid number modified curable polyester resin, the acid number mentioned herein can be measured by the ASTM D1639-90 test method. The hydroxyl numbers mentioned herein can be measured by the ASTM D4274-11 test method

The glass transition temperature (Tg) of the acid number modified curable polyester resin disclosed hereinmay be from -20°C to 120°C, from 10°C to 110°C, from 20°C to 105° C, from 30°C to 100°C, from 40°C to 95° C, from 40°C to 85°C, from 35°C to 85°C, from 50°C to 90° C, from 55°C to 95° C, from 60°C to 95° C, from 65°C to 95° C, from 70°C to 95° C, or from 75°C to 90° C. The Tg is measured on the dry polymer using standard techniques, such as differential scanning calorimetry ("DSC"), well known to persons skilled in the art. The Tg measurements of the polyesters are conducted using a "dry polymer," that is, a polymer sample in which adventitious or absorbed water is driven off by heating to polymer to a temperature of about 200°C and allowing the sample to return to room temperature. Typically, the polyester is dried in the DSC apparatus by conducting a first thermal scan in which the sample is heated to a temperature above the water vaporization temperature, holding the sample at that temperature until the vaporization of the water absorbed in the polymer is complete (as indicated by an a large, broad endotherm), cooling the sample to room temperature, and then conducting a second thermal scan to obtain the Tg measurement.

The weight average molecular weight (Mw) of the acid number modified curable polyester resin disclosed hereinis not limited, and may be from 2,500 to 50,000, from 2,500 to 30,000, from 2,500 to 20,000, from 2,500 to 15,000, from 2,500 to 12,500, or from 2,500 to 10,000, in each case g/mole. The Mw is measured by gel permeation chromatography (GPC) using polystyrene equivalent molecular weight.

The number average molecular weight (Mn) of the acid number modified curable polyester resin disclosed hereinis not limited, and may be from 1,000 to 20,000, from 1,000 to 15,000, from 1,000 to 12,500, from 1,000 to 10,000, from 1,000 to 8,000, from 1,000 to 6,000, from 1,000 to 5,000, from 1,000 to 4000, from 1,000 to 3,000, from 1,000 to 2,500, from 1,000 to 2,250, or from 1,000 to 2,000, from 1,100 to 4000, from 1,100 to 3,000, from 1,100 to 2,500, from 1,100 to 2,250, or from 1,100 to 2,000 in each case g/mole. The Mn is measured by gel permeation chromatography (GPC) using polystyrene equivalent molecular weight.

This acid number modified curable polyester resin desirably has a low or mid molecular weight, typically an Mn from 1000 to 20,000 to render it suitable for coating applications. Desirably, the molecular weight of the acid number modified curable polyester resin is not suitable for the fabrication of free-standing films, sheets, and other shaped objects by extrusion, casting, blow molding, and other thermoforming processes commonly used for higher molecular weight thermoplastic polymers

There is also provided a curable polyester resin comprising the residues of:
a) polyhydroxyl compounds comprising:
   i) 2,2,4,4-tetraalkylcyclobutane-1,3-diol (TACD) compounds in an amount ranging from 60 to 97 mole %, based on the total moles of polyhydroxyl compounds (a), and
   ii) polyhydroxyl compounds other than TACD comprising
      (1) a diol in an amount ranging from 0 to 37 mole %, based on the total moles of (a), and
      (2) a polyhydroxyl compound having 3 or more hydroxyl groups in an amount ranging from 3 to 15 mole %, based on the total moles of (a), and
b) polycarboxyl compounds comprising
   i) a polycarboxylic acid, a derivative of polycarboxylic acid compound (other than bii)), or a combination thereof in an amount ranging from 75 to 90 mole %, based on the total moles of (b), and
   ii) a polycarboxylic anhydride in an amount ranging from 10 to 25 mole %, based on the total moles of (b),
wherein said polyester has an acid number ranging from 30 to 100 mg KOH/g and a hydroxyl number ranging from 3 to 80 mg KOH/g with an AN:OH ratio of at least 0.5:1. The ranges of acid numbers, hydroxyl numbers, AN:OH ratios, the combinations of each of these, as well as the diols, polycarboxylic acids (b) and anhydrides, Mn, Mw, and molar quantities for each ingredient that are mentioned above (including Tables 1, 2, and 3) are also applicable to these acid number modified curable polyester resins.

Desirably, in any of the embodiments disclosed herein: the (a)(ii)(1) diol can be 2,2-dimethyl-1,3-propanediol (neopentyl glycol), 1,3-cyclohexanedimethanol, 1,4-cyclohexanedimethanol, or 2-methyl-1,3-propanediol or combinations thereof; the (a)(ii)(2) polyhydroxyl compound having 3 or more hydroxyl groups can be 1,1,1-trimethylol propane, 1,1,1-trimethylolethane, glycerin, pentaerythritol, sorbitol, or 1,2,6-hexanetriol, or combinations thereof; the (b)(i) polycarboxylic acid can be isophthalic acid (or dimethyl isophthalate), terephthalic acid (or dimethyl terephthalate), 1,4-cyclohexanepolycarboxylic acid, 1,3-cyclohexanepolycarboxylic acid, trimesic acid, citric acid, tartaric acid, trimellitic acid, or adipic acid or combinations thereof; and/or the (b)(ii) polycarboxylic anhydride (b)(ii) can be trimellitic anhydride, hexahydrophthalic anhydride, pyromellitic anhydride, maleic anhydride, succinic anhydride, or combinations thereof.

The polyhydroxyl compound having 3 or more hydroxyl groups (a)(ii)(2) may be added to the polyester reaction mixture or blended with the polyester in the form of a concentrate as described, for example, in U.S. Patent Nos. 5,654,347 and 5,696,176.

There is also provided a method for the preparation of the curable polyester comprising the steps of:
a) a first stage for making a polyester intermediate composition by combining the polyhydroxyl compounds and polycarboxylic acid compounds to form a reaction mixture, and reacting the reaction mixture in a reactor at a temperature from 180-250 °C, optionally in the presence of an acid catalyst until the reaction mixture has an acid number of 0 to 20 mg KOH/g and,
b) thereafter a second stage for forming a curable polyester composition by reacting a polycarboxylic anhydride with the reaction mixture at a temperature of 140 °C to 180 °C to thereby obtain a polyester composition having an acid number of greater than 20 mg KOH/g.

Desirably, the reaction mixture is allowed to cool to below 180 °C prior to the addition of the polycarboxylic anhydride.

Desirably, the acid number modified curable polyester resin composition is withdrawn from the reactor. The acid number modified curable polyester resin composition removed from the reactor can be allowed to cool to room temperature and isolated, or fed warm to a blending tank to formulate with other ingredients.

The process for making the acid number modified curable polyester resin has a first step (a) of forming a polyester intermediate composition by reacting polyhydroxyl compounds (a) and polycarboxylic acid compounds (bi) in at least one reactor at a temperature from 180-250 °C, optionally in the presence of an acid catalyst, until a reaction mixture having an acid number of 0 to 20 mg KOH/g is obtained. Desirably, a distillate is removed from the reactor during step (a).

The process for the manufacture of the polyester intermediate composition can be batchwise or continuous. The reaction of the polyhydroxyl compounds (a) and the polycarboxylic acid compounds (bi) may be carried out in a melt phase process using conventional polyester polymerization conditions. The polyhydroxyl compounds and polycarboxylic acid compounds are combined to form a reaction mixture, and the reaction mixture is reacted in an esterification reactor at a temperature from 180-250 °C. The reaction continues until the reaction mixture has an acid number of 0 to 20 mg KOH/g.

The esterification reaction many take place in one or more esterification reactors. The polyester intermediate composition can be made by a transesterification (ester interchange) reaction or by direct esterification. For example, polycarboxylic acid compounds (for direct esterification) or ester forms of the polycarboxylic acid compounds (for transesterification), and the polyhydroxyl compounds including the TACD and any other polyhydroxyl compounds, can be fed to an esterification reactor either in a combined stream, separate streams, or a combination of a combined and separate stream, and reacted at elevated temperatures, typically, from 180°C to 250°C. While temperatures in excess of 250°C can be employed, such as temperature up to 280°C, in many instances color bodies and degradation products start to form at temperatures exceeding 250°C. Desirably, the reaction mixture is reacted at any temperature within a range from 180°C to 230°C. In the esterification reactor, the temperature of the reaction mixture to form the polyester intermediate composition may be static or may be increased stepwise or continuously if desired.

It is desirable to start the reaction at a temperature below 210°C, or at 200°C or less, or even at 180°C or less, and increase the temperature over the total residence time of the reaction mixture for making the polyester intermediate composition in order to avoid generating more water by-product than the distillate collection system can efficiently remove. The reaction in the first stage desirably proceeds at a temperature of at least 180°C, or at least 190°C, or at least 200°C for at least 50%, or at least 60%, or at least 70%, or at least 80%, or at least 90% of the residence time of the reaction measured as commencing on when the temperature within the reactor reaches 160°C or more and ending when the acid number of the reaction mixture reaches or falls through 20 mg KOH/g.

To assist driving the reaction of the polyhydroxyl component and acid component to completion with a reduction in the acid number to 20 mg KOH/g or less, and to obtain a polyester intermediate having hydroxyl functionality where such is desired for assisting with crosslinking reactions in a coating composition, it is desirable to react 1.05 to 1.6, or 1.1-1.5, or 1.1-1.4 equivalents of polyhydroxyl compounds (b) to one equivalent of the polycarboxylic acid compounds (bi).

The minimum residence time is determined by reaching an acid number of 20 or less. The amount of time required to reach an acid number of 20 or less depends on the types of reactants used, the operating temperature profile, reaction mixture volume, reactor pressure, and efficiency of the distillate collection. The acid number of the reaction mixture can be determined analytically or by residence time at a given set of reaction conditions by empirical experience. The residence time to make the polyester intermediate composition to an acid number of 20 or less can range from 0.5 hours to 10 hours, or from 2 hours to 8 hours. In some cases, an acid number of 20 or less can be obtained between 2 hours to 6 hours, or in 2 to 5 hours.

Desirably, a distillate is removed from the reactor during step (a). The esterification reactor should be equipped with, and the process for making the polyester intermediate composition operated with, a distillate collection system for removing esterification or ester-exchange vapor by-products since their removal will assist with shifting the equilibrium reaction to the formation of the ester. The typical by-products formed in esterification are water in direct esterification routes, alcohols in transesterification routes, along with other reaction by-products such as aldehydes and color bodies. The method for the removal of reaction by-products is not limited. A common method for the removal of esterification reaction by-products is a vacuum system connected to the esterification reaction zone in the reactor with a direct contact spray condenser, which is useful when a vacuum is applied to the esterification reaction zone in the esterification reactor, or a distillation column that is packed or contains trays in vapor communication with the esterification vessel for the separation of water from other reaction by-products. The distillate is desirably continuous for at least a portion of the residence time during which the reaction mixture is reacting prior to reaching an acid number of 20 mg KOH/g. Desirably, the distillate is collected continuously from the time collection begins to a time when the acid number falls to or through 20 mg KOH/g.

The process for making the polyester intermediate can be conducted under a pressure within a range of 0 Pa (0 psig) or atmospheric to 1378.95 kPa (200 psig), or from 0 Pa (0 psig) to 689.48 kPa (100 psig), or from 0 Pa (0 psig) to 275.79 kPa (40 psig). However, if desired, at least a portion or the entire residence time of the reaction to make the polyester intermediate composition can proceed under a vacuum. If a vacuum is applied to only a portion of the residence time, it can be applied starting when at least 30%, or at least 50%, or at least 75%, or at least 80%, or at least 90% of the residence time for making the polyester (from reaching a temperature of at least 160°C until the acid number reaches or falls through 20 mg KOH/g) intermediate has expired and before the polycarboxylic anhydride is added. By applying a vacuum, the removal of the water or alcohol condensate can be further enhanced, and the molecular weight Mn of the polyester can be increased. If a vacuum is applied, suitable pressures can range from 101.19 kPa (759 torr) down to 66.66 Pa (0.5 torr), or 79.99 kPa (600 torr) down to 66.66 Pa (0.5 torr), or 60 kPa (450 torr) down to 66.66 pa (0.5 torr). Vacuum can be increased with the residence time of the reaction mixture. Alternatively or in addition to the application of a vacuum, the removal of the reaction by-products can be purged or swept with an inert gas during all or a portion of the reaction. An inert gas is any gas which does not cause unwanted reaction or product characteristics at reaction conditions. Suitable gases include, but are not limited to, carbon dioxide, argon, helium, and nitrogen.

The esterification vessel can be agitated if desired to assist with the mass transfer of reactants and disengagement of reaction by-products.

The reaction to make the polyester intermediate is facilitated by reacting the polyhydroxyl compounds and the polycarboxylic acid compounds (bi) in the presence of appropriate catalysts such as, for example, alkoxy titanium compounds, alkali metal hydroxides and alcoholates, salts of organic carboxylic acids, alkyl tin compounds, metal oxides, and other metal carboxylates or benzoates such as zinc, manganese, or magnesium acetates or benzoates. A typical catalyst is an organometallic acid catalyst, such as, for a carboxylate of tin, e.g. butylstannoic acid. The amount of the catalyst added may be determined by routine experimentation as understood by those skilled in the art. The catalyst can be added in amounts ranging from 0.01 to 1.0 weight percent, based on the total weight of the reactants.

In a continuous process, the polycarboxylic acid compounds and the polyhydroxyl compounds are continuously fed to the esterification reactor, the polyester intermediate composition is continuously withdrawn from the esterification reactor and fed to a second esterification reactor continuously to form the curable polyester composition, and the curable polyester composition is continuously withdrawn from the second esterification reactor.

Once the desired acid number of the reaction mixture to make the polyester intermediate composition (20 mg KOH/g or less), the temperature of the polyester intermediate composition is desirably reduced. The temperature of the intermediate composition is desirably lowered to 180°C or less, or to 175°C or less, or to 170°C or less, or to 165°C or less. The temperature is lowered in order to prepare for the second stage of the esterification process. If desired, a vacuum can be applied during the temperature reduction and continued during the second stage. The vacuum can be applied starting at the times noted above during the first stage, or if a vacuum is not applied during the first stage, vacuum can be started at any time during the temperature reduction, or can be started when the polycarboxylic anhydride is fed, which starts the second stage. Any of the vacuum values noted above are suitable for applying in the second stage step b).

For example, in the first stage, the reaction can proceed in the reactor at atmospheric to 275.79 kPa (40 psig), and the reaction can proceed in the second stage b) under a vacuum during at least a portion of the residence time in the second stage b) to further build up the molecular weight of the acid number modified curable polyester resin. Alternatively, in the first stage, the reaction can proceed in the reactor under an applied vacuum, desirably when at least 50% or at least 70% of the residence time in stage (a) has elapsed, and the reaction can proceed in the second stage b) with or without applied vacuum.

In the second stage, the polycarboxylic anhydride (b)(ii) is added to the reaction mixture of stage (a) to cause the carboxyl groups on the anhydride molecule to react with hydroxyl groups on the intermediate polyester. The anhydride is reacted onto the polyester in the reaction mixture at an elevated temperature of from 140°C to 180°C.

Additives can be added in the first or second stages to enhance the performance properties of the curable polyester polymer. For example, crystallization aids, impact modifiers, surface lubricants, denesting agents, stabilizers, antioxidants, ultraviolet light absorbing agents, metal deactivators, colorants, nucleating agents, acetaldehyde lowering compounds, reheat rate enhancing aids such as elemental antimony or reduced antimony or reducing agents to form such species in situ, silicon carbide, carbon black, graphite, activated carbon, black iron oxide, and red iron oxide, sticky bottle additives such as talc, and fillers can be included. All of these additives and many others and their use are well known in the art and do not require extensive discussion. Any of these compounds can be used in the present composition.

There is also provided a solvent containing (as distinguished from an aqueous based coating) coating composition, comprising:
a) the acid number modified curable polyester disclosed herein,
b) a crosslinker comprising an amino resin, phenolic resin, isocyanate resin, and epoxy resin, and
c) an organic solvent.

Suitable organic solvents for the solvent-based coating composition include xylene, ketones (for example, methyl amyl ketone), 2-butoxyethanol, ethyl-3-ethoxypropionate, toluene, butanol, cyclopentanone, cyclohexanone, ethyl acetate, butyl acetate, and other volatile inert solvents typically used in industrial baking (i.e., thermosetting) enamels, mineral spirits, naptha, toluene, acetone, methyl ethyl ketone, methyl isoamyl ketone, isobutyl acetate, t-butyl acetate, n-propyl acetate, isopropyl acetate, methyl acetate, ethanol, n-propanol, isopropanol, sec-butanol, isobutanol, ethylene glycol monobutyl ether, propylene glycol n-butyl ether, propylene glycol methyl ether, propylene glycol monopropyl ether, dipropylene glycol methyl ether, diethylene glycol monobutyl ether, trimethylpentanediol mono-isobutyrate, ethylene glycol mono-octyl ether, diacetone alcohol, 2,2,4-trimethyl-1,3-pentanediol monoisobutyrate (available commercially from Eastman Chemical Company under the trademark TEXANOL™), or combinations thereof. The coating composition also may comprise reactive solvents such as, for example, diallyl phthalate, SANTOLINK™ XI-100 polyglycidyl allyl ether (available from Cytec), and others as described, for example, in U.S. Patent Nos 5,349,026 and 5,371,148.

The amount of solvent (other than water) is desirably at least 20 wt.%, or at least 25 wt.%, or at least 30 wt.%, or at least 35 wt.%, or at least 40 wt.%, or at least 45 wt.%, or at least 50 wt.%, or at least 55 wt.% based on the weight of the solvent containing coating composition. Additionally or in the alternative, the amount of organic solvent can be up to 85 wt.% based on the weight of the coating composition. Solvent containing coating compositions desirably contain 10 wt.% or less, or 8 wt.% or less, or 5 wt.% or less, or 3 wt.% or less water, based on the weight of the coating composition.

The solvent containing composition is desirably a solution in which the curable polyester is dissolved or solubilized in the solvent. While other solids can be present in the solvent containing composition (and typically are in a fully formulated or pigmented coating composition), the solvent containing composition desirably has less than 3 wt.% acid number modified curable polyester resin as solid particles, or less than 1 wt.% acid number modified curable polyester resin as solid particles, or not more than 0.5 wt.% polyester resin as solid particles, based on the total weight of the acid number modified curable polyester resin (a).

There is further provided an aqueous dispersion, comprising
a) the acid number modified curable polyester resin disclosed herein,
b) a neutralizing agent, and
c) water.

The amount of water is desirably at least 20 wt.%, or at least 25 wt.%, or at least 30 wt.%, or at least 35 wt.%, or at least 40 wt.%, or at least 45 wt.%, or at least 50 wt.%, or at least 55 wt.%, or at least 60 wt.% based on the weight of the aqueous dispersion.

The neutralizing agent may be an amine or an inorganic base. Typical amines include ammonia, trimethylamine, diethylamine, monoethanolamine, monoisopropanolamine, morpholine, ethanolamine, diethanolamine, triethanolamine, N,N-dimethylethanolamine, N, N-diethylethanolamine, and N-methyldiethanolamine.

Typical inorganic bases include bases derived from alkali metals and alkaline earth metals such as, for example, sodium, potassium, magnesium, calcium, and other basic metal compounds. Suitable bases from this first class of bases useful in the present invention include, but are not limited to, sodium oxide, potassium oxide, magnesium oxide, calcium oxide, sodium hydroxide, potassium hydroxide, magnesium hydroxide, calcium hydroxide, sodium carbonate, potassium carbonate, sodium bicarbonate, potassium bicarbonate, calcium carbonate, magnesium bicarbonate, alkali metal borate compounds and their hydrates, sodium phosphate, potassium biphosphate, and sodium pyrophosphate.

The aqueous dispersion containing the acid number modified curable polyester resin may and desirably further comprises an organic co-solvent. Suitable co-solvents include ethanol, n-propanol, isopropanol, n-butanol, sec-butanol, isobutanol, ethylene glycol monobutyl ether, propylene glycol n-butyl ether, propylene glycol methyl ether, propylene glycol monopropyl ether, dipropylene glycol methyl ether, diacetone alcohol, and other water-miscible solvents. If an organic co-solvent is used, the amount is desirably 40 wt.% or less, or 30 wt.% or less, or 15 wt.% or less, or 10 wt.% or 5 wt.% less based on the weight of the aqueous composition, and at least 1 wt.%, or at least 3 wt.% based on the weight of the aqueous composition.

Aqueous dispersions of the acid number modified curable polyester resins are typically prepared by dispersing the acid number modified curable polyester resins with water in the presence of organic co-solvent(s) (e.g. at least 1 or 3 wt.% and up to 15 wt.% based on the weight of the polyester polymers), at a temperature ranging from 60 to 95°C under ambient pressure. The dispersing process may be carried out either by gradually adding the resin to the heated mixture of water, the neutralizing agent, and the co-solvent(s) or by gradually adding water and the neutralizing agent to the heated mixture of the resin and the co-solvent(s). The former method is preferred for resins with a high Tg (e.g. >60°C), which can be pulverized, for example, by using a blender and subsequently added to the heated water and the neutralizing agent. For resins with a lower Tg, it is preferred to add water and the neutralizing agent to the heated resin mixture containing the co-solvent. After the completion of adding either resin or water, the stirring is allowed to continue until a homogeneous dispersion is obtained. The process typically takes one or several hours. It is intended for this terminology to include conditions where the polyester is dissolved to form a true solution as well as those where the polyester is dispersed within the aqueous medium. Often, due to the statistical nature of polyester compositions, it is possible to have a soluble fraction and a dispersed fraction when a single polyester sample is placed in an aqueous medium.

Desirably, the dispersion contains up to 80 wt.%, or up to 60 wt.%, or up to 50 wt.%, or up to 40 wt.% acid number modified curable polyester resin. Suitable ranges of acid number modified curable polyester resin in wt.% based on the weight of the dispersion include 3-80, or 5-80, or 10-80, or 5-80, or 10-80, or 15-80, or 20-80, or 25-80, or 30-80, or 3-60, or 5-60, or 10-60, or 5-60, or 10-60, or 15-60, or 20-60, or 25-60, or 30-60, or 3-50, or 5-50, or 10-50, or 5-50, or 10-50, or 15-50, or 20-50, or 25-50, or 30-50, or 3-45, or 5-45, or 10-45, or 5-45, or 10-45, or 15-45, or 20-45, or 25-45, or 30-45.

As a further aspect, disclosed herein is a curable waterborne coating composition, comprising:
a) the acid number modified curable polyester resin having acid number of50 to 120 mg KOH/g,
b) a neutralizing agent,
c) water, and
d) a crosslinker comprising an amino resin, phenolic resin, isocyanate resin, and/or an epoxy resin.

Acid number modified curable polyester resins having glass transition temperatures (Tg) greater than 50°C are suitable for powder coating application. The polyester disclosed hereincomprises TACD, which is capable of providing higher Tg.

Thus, there is further provided a curable powder coating composition comprising
a) a acid number modified curable polyester resin having a Tg greater than 50 °C and
b) a crosslinker selected comprising an amino resin, blocked isocyanate resin, phenolic resins, epoxy resin, and/or an epoxidized phenolic resin.

### The α,β-Ethylenically Unsaturated Carboxyl Modified Polyester Resin

There is also provided yet another modified curable polyester resin that has been found particularly curable with certain phenolic resins. This thermosetting composition contains at least:
I) an unsaturated polyester comprising the residues of an α,β-unsaturated polycarboxylic acid compound; and
II) a phenolic resin substituted with at least one methylol group.

For convenience, the α,β-ethylenically unsaturated carboxyl modified curable polyester resins used in this thermosetting composition are identified as "unsaturated curable polyester resins."

The classic crosslinking mechanism thought to operate between a phenolic resin and a curable polyester was a condensation reaction across the hydroxyl groups on the phenolic resin and the polyester polyol, and as a result, the reaction is not sufficiently rapid and does not form an adequate crosslinking density. Such a mechanism can be illustrated as follows:

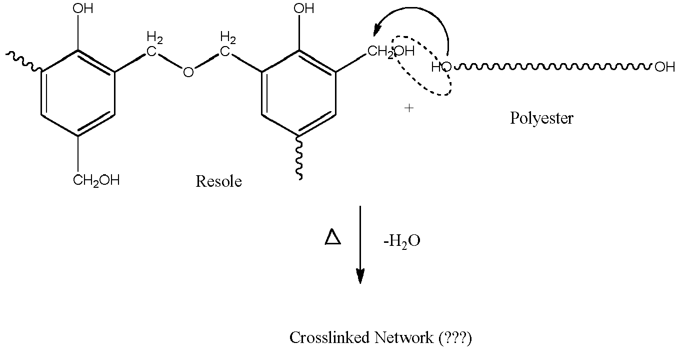

The unsaturated curable polyester resin takes advantage of an additional reaction pathway that improves the crosslinking density of a coating. The thermosetting composition allows for the reaction of resole types of phenolic resins with unsaturated curable polyester resins further described below that surprisingly react quite well and provide coatings good crosslinking density as evidenced by the solvent resistance of the coatings.

Ethylenically unsaturated bonds are susceptible to reaction by a neucleophilic agent, so it was surprising the phenolic crosslinking resins, which are thought to act as electrophilic agents through their free methylol groups, reacted so well and improved the crosslinking density of the coating. Without being bound to a theory, it is believed that under heat, a resole type of phenolic resin can condense water from the resole resin to form an equilibrium intermediate (B) having dual nucleophilic and electrophilic sites or quinone methide having diene structure, that in turn would attack and react with the ethylenically unsaturated sites in the polyester chain to form a ring structure by an addition mechanism according to the following reaction:

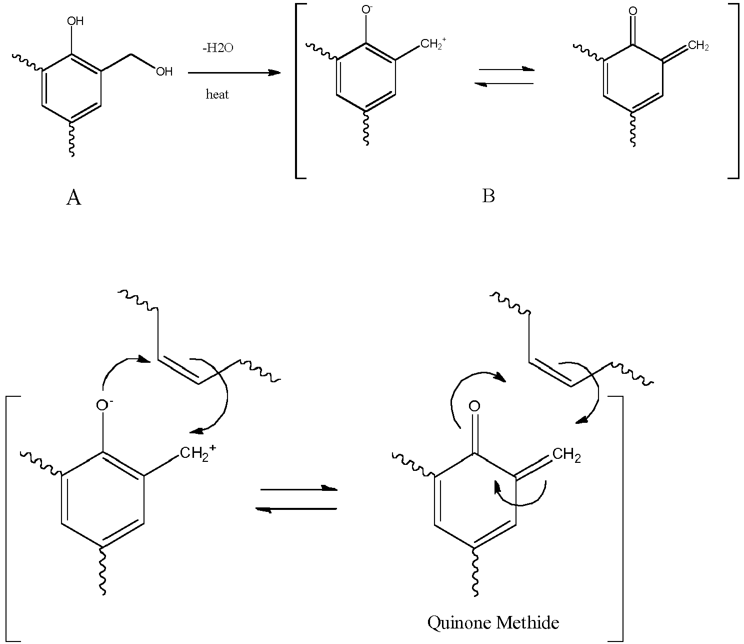

There is now also provided a thermosetting composition comprising:
a) an unsaturated curable polyester comprising the residues of an α,β-unsaturated polycarboxylic acid compound, said α,β-unsaturated polycarboxylic acid compound having at least two carboxylic acid groups or at least one anhydride group, and having at least one unsaturation that is in the α,β position relative to a carbonyl group and is not located on an aromatic ring; and
b) a phenolic resin substituted with at least one methylol group.

There is also provided a thermosetting composition comprising:
I) an unsaturated polyester comprising the residues of:
   a) polyhydroxy compounds comprising:
      (i) a diol in an amount of 70 mole % - 100 mole %; and
      (ii) a polyhydroxyl compound having 3 or more hydroxyl groups in an amount of 0 to 30 mole %;
      wherein the mole % is based on 100% of all moles of polyhydroxyl compounds; and
   b) polycarboxylic compounds comprising
      (i) an α,β-unsaturated polycarboxylic acid compound; and
      (ii) a polycarboxylic acid compound other than the (b)(i) α,β-unsaturated polycarboxylic acid compound.
II) a phenolic resin substituted with at least one methylol group.

The unsaturated curable polyester resin contains the residues of an α,β-unsaturated polycarboxylic acid compound. The unsaturated curable polyester resin is obtained by reacting polyhydroxyl compounds 1(a) with polycarboxyl compounds 1(b).

The polycarboxyl compounds 1(b) may be a polycarboxylic acid compound, a derivative of polycarboxylic acid compound, the anhydride of a polycarboxylic acid, or a combination thereof. Suitable polycarboxylic acid compounds include compounds having at least two carboxylic acid groups. The polycarboxylic acid compound can be a dicarboxylic acid compound having two carboxylic acid groups, derivatives thereof, or combinations thereof, capable of forming an ester linkage with a polyhydroxyl component.

For example, a polyester can be synthesized by using a polyhydroxyl compound and a derivative of a dicarboxylic acid such as, for example, dimethyl ester or other dialkyl esters of the diacid, or diacid chloride or other diacid halides, or acid anhydride.

The unsaturated curable polyester has at least one residue of an α,β-unsaturated polycarboxylic acid compound. The polycarboxyl compounds (b) used in the synthesis of the unsaturated curable polyester comprise an α,β-unsaturated polycarboxylic acid compound (b)(i) compound. The α,β-unsaturated polycarboxylic acid compound (b)(i) compound disclosed herein has at least two carboxylic acid groups, or the anhydride thereof, and at least one unsaturation that is in the α,β position relative to the carbonyl group and is not on an aromatic ring. The α,β-unsaturated polycarboxylic acid compound can be represented by the following general formula (C):

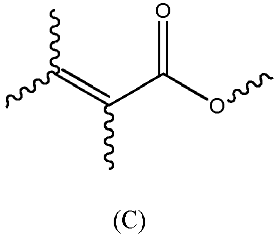

The (b)(i) α,β-unsaturated polycarboxylic acid compound can be branched or unbranched, substituted or un-substituted, and can have one or more than one ethylenic unsaturation. The α,β-unsaturated polycarboxylic acid compound can be:
a) a C₁-C₄ alkyl ester derivative on one or more than one carboxylic acid group, such as a dimethyl ester of the α,β-unsaturated polycarboxylic acid compound; or
b) branched or unbranched with a C₁-C₁₆ alkyl, cycloalkyl, or aryl group , and a branch can be located on an ethylenic unsaturated carbon atom; or
c) substituted with a halogen atom; or
d) an anhydride of any of the foregoing.

Specific examples include, but are not limited to, maleic anhydride, maleic acid, fumaric acid, itaconic anhydride, itaconic acid, citraconic anhydride, citraconic acid, aconitic acid, aconitic anahydride, oxalocitraconic acid and its anhydride, mesaconic acid or its anhydride, phenyl maleic acid or its anhydride, t-butyl maleic acid or its anhydride, monomethyl fumarate, monobutyl fumarate, methyl maleic acid or its anhydride, or mixtures thereof.

Desirably, the α,β-unsaturated polycarboxylic acid compound can be maleic acid or its anhydride.

The unsaturated curable polyester polymer disclosed hereincontains at least one non-terminal ethylenically unsaturated bond in an α,β position relative to an ester group in the polymer. The ethylenically unsaturated carbons in the unsaturated curable polyester polymer can be pendant groups to the polymer backbone or branches thereof, or linear within the polymer backbone. Terminal or vinyl unsaturation on the unsaturated curable polyester polymer may be present so long as the unsaturated curable polyester polymer contains residues of at least one non-terminal ethylenically unsaturated bond in the α,β position relative to an ester group.

Desirably, the unsaturated curable polyester polymer is not made with a monocarboxylic acid compound having a vinyl group, such as acrylic acid or methacrylic acid.

Desirably, the unsaturated curable polyester polymer does not contain residues of a monocarboxylic acid compound having a vinyl group, such as acrylic acid or methacrylic acid.

The unsaturated curable polyester used in the thermosetting composition disclosed hereincontains residues of α,β-unsaturated polycarboxylic acid compound in an amount effective to improve the solvent resistance of a coating relative to one made with a curable polyester without the α,β-unsaturated polycarboxylic acid compound. Suitable amounts of α,β-unsaturated polycarboxylic acid compound residues present in the unsaturated curable polyester are at least 5 mole%, or at least 7 mole%, or at least 10 mole%, or at least 12 mole%, or at least 15 mole%, and up to 30 mole%, or up to 25 mole%, or up to 20 mole%, each based on the total moles of the components of the curable polyester. Examples of suitable ranges of the α,β-unsaturated polycarboxylic acid compound residues present in the unsaturated curable polyester are, in mole% based on the total moles of the components of the unsaturated curable polyester, 5-30, or 7-30, or 10-30, or 12-30, or 15-30, or 5-25, or 7-25, or 10-25, or 12-25, or 15-25, or 5-20, or 7-20, or 10-20, or 12-20, or 15-20.

Desirably, the unsaturated curable polyester contains residues of α,β-unsaturated polycarboxylic acid compound present in an amount of 10-25, or 15-20, in each case mole% based on the total moles of the components of the unsaturated curable polyester.

The unsaturated curable polyester I is desirably made with α,β-unsaturated polycarboxylic acid compounds in an amount of at least 10 mole%, or at least 15 mole%, or at least 20 mole%, or at least 25 mole%, or at least 30 mole%, and up to 60 mole%, or up to 50 mole%, or up to 40 mole%, each based on 100 mole% of all polycarboxylic (b) compounds used to make the unsaturated curable polyester. Examples of suitable ranges of the α,β-unsaturated polycarboxylic acid compound residues present in the unsaturated curable polyester are, in mole% based on 100 mole% of all polycarboxylic compounds (b) used to make the unsaturated curable polyester, 10-60, or 15-60, or 20-60, or 25-60, or 30-60, or 10-50, or 15-50, or 20-50, or 25-50, or 30-50, or 10-40, or 15-40, or 20-40, or 25-40, or 30-40.

Desirably, the unsaturated curable polyester contains residues of α,β-unsaturated polycarboxylic acid compound present in an amount of 20-50, or 30-40, in each case mole% based on 100 mole% of all polycarboxylic compounds (b).

The unsaturated curable polyester also contains the residues of dicarboxylic acids or ester derivatives thereof other than the α,β-unsaturated polycarboxylic acid compound. The unsaturated curable polyester (I) can contain the residues of:
a) polycarboxylic compounds comprising
   (i) an α,β-unsaturated polycarboxylic acid compound; and
   (ii) polycarboxylic compounds other than b)(i).

The polycarboxylic acid compounds (bii) can be a combination of aromatic polycarboxylic acid compounds and either or both of aliphatic or cycloaliphatic polycarboxylic acid compounds. For example, the polycarboxylic acid compounds (b)(ii) can include aromatic polycarboxylic acid compounds and aliphatic polycarboxylic acids compounds having 2 to 22 carbon atoms; or aromatic polycarboxylic acid compounds and cycloaliphatic polycarboxylic acids compounds having 2 to 22 carbon atoms; or aromatic polycarboxylic acid compounds, aliphatic polycarboxylic acids compounds having 2 to 22 carbon atoms; and cycloaliphatic polycarboxylic acids compounds having 2 to 22 carbon atoms.

Examples of such polycarboxylic compounds (b)(ii) that form the polycarboxylic (b)(ii) residues in the unsaturated curable polyester include those having two or more, desirably only two, carboxylic acid functional groups or their esters. Examples of these compunds include aliphatic dicarboxylic acids, alicyclic dicarboxylic acids, aromatic dicarboxylic acids, derivatives of each, or mixtures of two or more of these acids, or the C₁-C₄ ester derivatives thereof. Suitable dicarboxylic acids include, but are not limited to, isophthalic acid (or dimethyl isophthalate), terephthalic acid (or dimethyl terephthalate), phthalic acid, phthalic anhydride, 1,4-cyclohexanedicarboxylic acid, 1,3-cyclohexanedicarboxylic acid, hexahydrophthalic anhydride, tetrahydrophthalic anhydride, tetrachlorophthalic anhydride, dodecanedioic acid, sebacic acid, azelaic acid, succinic anhydride, succinic acid, adipic acid, 2,6-naphthalenedicarboxylic acid, glutaric acid, diglycolic acid; 2,5-norbornanedicarboxylic acid; 1,4-naphthalenedicarboxylic acid; 2,5-naphthalenedicarboxylic acid; diphenic acid; 4,4'-oxydibenzoic acid; 4,4'-sulfonyidibenzoic acid, and mixtures thereof.

Desirably, the polycarboxylic component (b)(ii) other than α,β-ethylenically unsaturated carboxyl compound (b)(i), is isophthalic acid (or dimethyl isophthalate), terephthalic acid (or dimethyl terephthalate), phthalic acid, phthalic anhydride, 1,4-cyclohexanedicarboxylic acid, 1,3-cyclohexanedicarboxylic acid, adipic acid, 2,6-naphthalenedicarboxylic acid, 1,4-naphthalenedicarboxylic acid; 2,5-naphthalenedicarboxylic acid; hexahydrophthalic anhydride, tetrahydrophthalic anhydride, trimellitic anhydride, succinic anhydride, succinic acid, or mixtures thereof. Trimellitic acid or its anhydride is a useful compound to add in order to increase the acid number of the unsaturated curable polyester I if so desired. A useful process for increasing the acid number of the unsaturated curable polyester (I) is a two stage process in which one can react all polyhydroxyl compounds (a) and all other polycarboxylic acid compounds (b) in a reaction mixture, and after the acid number of the reaction mixture has reached or fallen through 20 mg KOH/g, add a difunctional acid or its anhydride to the reaction mixture or the reaction product of the polyhydroxyl compounds (a) and the all other polycarboxyl compounds (b). However, an advantage of the invention is the ability of the ethylenic unsaturation in the unsaturated curable polyester polymer chain to provide reactive crosslink sites with phenolic crosslinking compounds, thereby rendering a two stage process unnecessary.

If desired, the poycarboxylic acid compounds (b)(ii) do not include terephthalic acid or a derivative of terephthalic acid.

More specific examples of some of the suitable polycarboxylic acids b(ii) and/or combinations thereof include:
a) (isophthalic acid or dimethyl isophthalate) and (1,4-cyclohexanedicarboxylic acid, 1,3-cyclohexanedicarboxylic acid, or mixtures thereof); or
b) (isophthalic acid or dimethyl isophthalate)) and (dodecanedioic acid, sebacic acid, azelaic acid, maleic acid, fumaric acid, succinic acid, adipic acid, glutaric acid, itatonic acid, diglycolic acid; or mixtures thereof); or
c) (isophthalic acid or dimethyl isophthalate); or (1,4-cyclohexanedicarboxylic acid, 1,3-cyclohexanedicarboxylic acid, or mixtures thereof) and (dodecanedioic acid, sebacic acid, azelaic acid, maleic acid, fumaric acid, succinic acid, adipic acid, glutaric acid, itatonic acid, diglycolic acid, or mixtures thereof), or
d) 1,4-cyclohexanedicarboxylic acid.

Optionally, in each of examples (a)-(d), terephthalic acid or derivatives thereof are not included.

In each of the embodiments above, anhydride analogs to each of the polycarboxyl compounds (b) described above can be used. This would include the anhydrides of polycarboxylic acids having at least two acyl groups bonded to the same oxygen atom. The anhydrides can be symmetrical or unsymmetrical (mixed) anhydrides. The anhydrides have at least one anhydride group, and can include two, three, four, or more anhydride groups.

Suitable amounts of residues of the polycarboxylic compounds (b)(ii) present in the unsaturated curable polyester are at least 20 mole%, or at least 25 mole%, or at least 30 mole%, based on the total moles of the components of the unsaturated curable polyester. Additionally or in the alternative, the amount of residues of the polycarboxylic compounds (b)(ii) present in the unsaturated curable polyester are up to 45 mole%, or up to 43 mole%, or up to 40 mole%, or up to 38 mole%, or up to 35 mole%, based on the total moles of the components of the unsaturated curable polyester. Examples of suitable ranges of the residues of the polycarboxylic compounds (b)(ii) present in the unsaturated curable polyester are, in mole% based on the total moles of the components of the unsaturated curable polyester, 20-45, or 25-45, or 30-45, or 20-43, or 25-43, or 30-43, or 20-40, or 25-40, or 30-40, or 20-38, or 25-38, or 30-38, or20-35, or 25-35, or 30-35.

Suitable amounts of polycarboxylic compounds (b)(ii) used to make the unsaturated curable polyester are at least 40 mole%, or at least 50 mole%, or at least 60 mole%, based on 100 mole% of all polycarboxylic compounds (b). Additionally or in the alternative, the amount of polycarboxylic compounds (b)(ii), based on 100 mole% of all polycarboxylic compounds (b), can be up to 90 mole%, or up to 85 mole%, or up to 80 mole%, or up to 75 mole%, or up to 70 mole%,. Examples of suitable ranges of the polycarboxylic compounds (b)(ii), in mole% based on 100% of all moles of polycarboxylic compounds (b), are 40-90, or 50-90, or 60-90, or 40-85, or 50-85, or 60-85, or 40-80, or 50-80, or 60-80, or 40-75, or 50-75, or 60-75, or 40-70, or 50-70, or 60-70.

Desirably, the unsaturated curable polyester is made with polycarboxylic compounds (b)(ii) in an amount of 50-80, or 60-70, in each case mole% based on 100% of all moles of the polycarboxylic compounds (b).

The unsaturated curable polyester I is desirably made with, and contains the residues of:
a) polyhydroxyl compounds comprising:
   (i) a diol in an amount of 70 mole % - 100 mole %; and
   (ii) a polyhydroxyl compound having 3 or more hydroxyl groups in an amount of 0 to 30 mole %;

For purposes of calculating quantities, all compounds having at least one hydroxyl group are counted as polyhydroxyl compounds (a). Such compounds include, but are not limited to, mono-ols, diols, polyhydroxyl compounds having 3 or more hydroxyl groups, and for each of the foregoing, can be hydrocarbons of any chain length optionally containing ether groups such as polyether polyols, ester groups such as polyesters polyols, amide groups, amine groups, anhydrides.

The diols (a)(i) have 2 hydroxyl groups and can be branched or linear, saturated or unsaturated, aliphatic or cycloaliphatic C₂-C₂₀ compounds, the hydroxyl groups being primary, secondary, and/or tertiary, desirably primary. Desirably, the polyhydroxyl compounds are hydrocarbons and do not contain atoms other than hydrogen, carbon and oxygen. Examples of diols (a)(i) include 2,2,4,4-tetraalkylcyclobutane-1,3-diol (TACD), 2,2-dimethyl-1,3-propanediol (neopentyl glycol), 1,2-cyclohexanedimethanol, 1,3-cyclohexanedimethanol, 1,4-cyclohexanedimethanol, 2,2,4-trimethyl-1,3-pentanediol, hydroxypivalyl hydroxypivalate, 2-methyl-1,3-propanediol, 2-butyl-2-ethyl-1,3-propanediol, 2-ethyl-2-isobutyl-1,3-propanediol, 1,3-butanediol, 1,4-butanediol, 1,5-pentanediol, 1,6-hexanediol, 2,2,4,4-tetramethyl-1,6-hexanediol, 1,10-decanediol, 1,4-benzenedimethanol, ethylene glycol, propylene glycol, diethylene glycol, dipropylene glycol, triethylene glycol, tetraethylene glycol, and polyethylene glycol, and polyols such as 1,1,1-trimethylol propane, 1,1,1-trimethylolethane, glycerin, pentaerythritol, erythritol, threitol, dipentaerythritol, and sorbitol.

The TACD compound can be represented by the general structure: 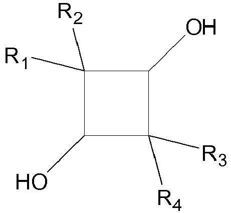 wherein R₁, R₂, R₃, and R₄ each independently represent an alkyl radical, for example, a lower alkyl radical having 1 to 8 carbon atoms; or 1 to 6 carbon atoms, or 1 to 5 carbon atoms, or 1 to 4 carbon atoms, or 1 to 3 carbon atoms, or 1 to 2 carbon atoms, or 1 carbon atom. The alkyl radicals may be linear, branched, or a combination of linear and branched alkyl radicals. Examples of TACD include 2,2,4,4-tetramethylcyclobutane-1,3-diol (TMCD), 2,2,4,4-tetraethylcyclobutane-1,3-diol, 2,2,4,4-tetra-n-propylcyclobutane-1,3-diol, 2,2,4,4-tetra-n-butylcyclobutane-1,3-diol, 2,2,4,4-tetra-n-pentylcyclobutane-1,3-diol, 2,2,4,4-tetra-n-hexylcyclobutane-1,3-diol, 2,2,4,4-tetra-n-heptylcyclobutane-1,3-diol, 2,2,4,4-tetra-n-octylcyclobutane-1,3-diol, 2,2-dimethyl-4,4-diethylcyclobutane-1,3-diol, 2-ethyl-2,4,4-trimethylcyclobutane-1,3-diol, 2,4-dimethyl-2,4-diethyl-cyclobutane-1,3-diol, 2,4-dimethyl-2,4-di-n-propylcyclobutane-1,3-diol, 2,4-n-dibutyl-2,4-diethylcyclobutane-1,3-diol, 2,4-dimethyl-2,4-diisobutylcyclobutane-1,3-diol, and 2,4-diethyl-2,4-diisoamylcyclobutane-1,3-diol.

Desirably, the diol (a)(i) is 2,2,4,4-tetramethylcyclobutane-1,3-diol (TMCD), 2,2-dimethyl-1,3-propanediol (neopentyl glycol), 1,2-cyclohexanedimethanol, 1,3-cyclohexanedimethanol, 1,4-cyclohexanedimethanol, 2,2,4-trimethyl-1,3-pentanediol, hydroxypivalyl hydroxypivalate, 2-methyl-1,3-propanediol, 2-butyl-2-ethyl-1,3-propanediol, 1,4-butanediol, and 1,6-hexanediol or mixtures thereof. Desirably, at least one of the diols (a)(i) is TMCD.

The diols (a)(i) are desirably present in an amount of at least 70 mole%, or at least 75 mole%, or at least 80 mole%, or at least 85 mole%, or at least 87 mole%, or at least 90 mole%, or at least 92 mole%, based on 100 mole% of all polyhydroxyl compounds. Additionally or in the alternative, the diols (a)(i) can be present in an amount of up to 100 mole%, or up to 98 mole%, or up to 96 mole%, or up to 95 mole%, or up to 93 mole%, or up to 90 mole%, based on 100 mole% of all polyhydroxyl compounds. Suitable ranges include, in mole% based on 100 mole% of all polyhydroxyl compounds (a), 70-100, or 75-100, or 80-100, or 85-100, or 87-100, or 90-100, or 92-100, or 95-100, or 96-100, or 70-98, or 75-98, or 80-98, or 85-98, or 87-98, or 90-98, or 92-98, or 95-93, or 96-93, or 70-93, or 75-93, or 80-93, or 85-93, or 87-93, or 90-93, or 92-93, or 70-90, or 75-90, or 80-90, or 85-90, or 87-90.

The diols (a)(i) are desirably present in an amount of at least 35 mole%, or at least 37 mole%, or at least 40 mole%, or at least 42 mole%, or at least 45 mole%, or at least 46 mole%, based on the total moles of the components of the polyester polymer. Additionally or in the alternative, the diols (a)(i) can be present in an amount of up to 50 mole%, or up to 49 mole%, or up to 48 mole%, or up to 47 mole%, or up to 46 mole%, or up to 45 mole%, based on the total moles of the components of the polyester polymer. Suitable ranges include, in mole% based on the polyester polymer, 35-50, or 37-50, or 40-50, or 42-50, or 45-50, or 46-50, or 35-49, or 37-49, or 40-49, or 42-49, or 45-49, or 46-49, or 35-48, or 37-48, or 40-48, or 42-48, or 45-48, or 46-48, or 35-47, or 37-47, or 40-47, or 42-47, or 45-47, or 46-47, or 35-46, or 37-46, or 40-46, or 42-46, or 45-46, or 35-45, or 37-45, or 40-45, or 42-45.

The polyhydroxyl compounds (a)(ii) having 3 or more hydroxyl groups can be branched or linear, saturated or unsaturated, aliphatic or cycloaliphatic C₂-C₂₀ compounds, the hydroxyl groups being primary, secondary, and/or tertiary, and desirably at least two of the hydroxyl groups are primary. Desirably, the polyhydroxyl compounds are hydrocarbons and do not contain atoms other than hydrogen, carbon and oxygen. Examples of the polyhydroxyl compounds (a)(ii) include 1,1,1-trimethylol propane, 1,1,1-trimethylolethane, glycerin, pentaerythritol, erythritol, threitol, dipentaerythritol, sorbitol, and mixtures thereof.

The polyhydroxyl compounds (a)(ii), if present, can be present in an amount of at least 1 mole%, or at least 2 mole%, or at least 5 mole%, or at least 8 mole%, or at least 10 mole%, based on 100 mole% of all polyhydroxyl compounds (a). Additionally or in the alternative, the polyhydroxyl compounds (a)(ii) can be present in an amount of up to 30 mole%, or up to 25 mole%, or up to 20 mole%, or up to 15 mole%, or up to 13 mole%, or up to 10 mole%, or up to 8 mole%, based on 100 mole% of all polyhydroxyl compounds (a). Suitable ranges of the polyhydroxyl compounds (a)(ii) include, in mole% based on 100 mole% of all polyhydroxyl compounds (a), 1-30, or 2-30, or 5-30, or 8-30, or 10-30, or 1-25, or 2-25, or 5-25, or 8-25, or 10-25, or 1-20, or 2-20, or 5-20, or 8-20, or 10-20, or 1-15, or 2-15, or 5-15, or 8-15, or 10-15, or 1-13, or 2-13, or 5-13, or 8-13, or 10-13, or 1-10, or 2-10, or 5-10, or 8-10, or 1-8, or 2-8, or 5-8.

The polyhydroxyl compounds (a)(ii) are desirably present in an amount of at least 0.5 mole%, or at least 1 mole%, or at least 2 mole%, or at least 4 mole%, or at least 5 mole%, based on the total moles of the components of the polyester polymer. Additionally or in the alternative, the polyhydroxyl compounds (a)(ii) can be present in an amount of up to 15 mole%, or up to 13 mole%, or up to 10 mole%, or up to 8 mole%, or up to 6 mole%, or up to 5 mole%, or up to 4 mole%, based on the total moles of the components of the polyester polymer. Suitable ranges include, in mole% based on the total moles of the components of the polyester polymer, 0.5-15, or 1-15, or 2-15, or 4-15 ,or 5-15, or 0.5-13, or 1-13, or 2-13, or 4-13 ,or 5-13, or 0.5-10, or 1-10, or 2-10, or 4-10 ,or 5-10, or 0.5-8, or 1-8, or 2-8, or 4-8 ,or 5-8, or 0.5-6, or 1-6, or 2-6, or 4-6 ,or 5-6, or 0.5-5, or 1-5, or 2-5, or 4-5 ,or 0.5-4, or 1-4, or 2-4.

Desirably, all of the polyhydroxyl compounds (a) used to react with the polycarboxylic compounds (b) are hydrocarbons, meaning that they contain only oxygen, carbon, and hydrogen. Optionally, none of the polyhydroxyl compounds (a) contain any ester, carboxyl (-COO-), and/or anhydride groups. Optionally, none of the polyhydroxyl compounds (a) have any carbonyl groups (-CO-). Optionally, none of the polyhydroxyl compounds (a) contain any ether groups. Desirably, the polyhydroxyl compounds (a) have from 2 to 20, or 2 to 16, or 2 to 12, or 2 to 10 carbon atoms.

The unsaturated curable polyester can have an acid number ranging from 0 to 120 mg KOH/g and a hydroxyl number ranging from greater than 0 to 160 mg KOH/g.

The acid number of the unsaturated curable polyester can be adjusted as needed depending on whether a waterborne dispersion or solvent borne solution is ultimately desired. However, as noted above, since the ethylenic unsaturation embedded into the polymer chain or directly into the polymer backbone provides reactive sites for crosslinking with phenolic compounds, the acid number does not need to be high to reach an acceptable cross-link density. If desired, however, the unsaturated curable polyester I can also have a high acid number to provide additional cross-linking sites or to provide acidity for neutralization to impart water dispersibility.

The acid number of the unsaturated curable polyester can be up to 120, or not more than 70, or not more than 50, or not more than 40, or not more than 30, or not more than 20, or not more than 10, or not more than 5, or not more than 4, or not more than 3, or not more than 2, or not more than 1, in each case mg KOH/g. Additionally or in the alternative, the acid number can be 0, or at least 1, or at least 2, or at least 5, or at least 10, or at least 20, in each case mg KOH/g. Suitable ranges include 0-120, or 1-120, or 2-120, or 5-120, or 10-120, or 20-120, or 0-70, or 1-70, or 2-70, or 5-70, or 10-70, or 20-70, or 0-50, or 1-50, or 2-50, or 5-50, or 10-50, or 20-50, or 0-40, or 1-40, or 2-40, or 5-40, or 10-40, or 20-40, or 0-30, or 1-30, or 2-30, or 5-30, or 10-30, or 20-30, or 0-20, or 1-20, or 2-20, or 5-20, or 10-20, or 0-10, or 1-10, or 2-10, or 5-10, or 0-5, or 1-5, or 2-5, or 0-4, or 1-4, or 2-4, or 0-3, or 1-3, or 2-3, or 0-2, or 1-2, or 0-1, in each case mg KOH/g. Since a high acid number is not necessary, the unsaturated curable polyester I can have an acid number in the range of 0-10, or 1-10, or 2-10, or 5-10, or 0-5, or 1-5, or 2-5, or 0-4, or 1-4, or 2-4, or 0-3, or 1-3, or 2-3, or 0-2, or 1-2, or 0-1, in each case mg KOH/g, and these ranges are particularly useful in solvent based solutions and coating applications. In aqueous dispersions and waterborne coating applications, the acid number of the unsaturated curable polyester I can be higher in order to impart sufficient water dispersibility after neutralization, and in this case, the acid number of the unsaturated curable polyester I can be 20-120, or 30-120, or 40-120, or 20-70, or 30-70, or 40-70, or 20-60, or 30-60, or 40-60, in each case mg KOH/g.

The hydroxyl number can be within a range of from greater than 0 to 160 mg KOH/g. Suitable ranges of hydroxyl number include greater than 0 to 100, or from 5 to 100, or from 10 to 100, or from 15 to 100, or from 20 to 100, or from 25 to 100, or from 35 to 100, or from 40 to 100, or from 45 to 100, or from 50 to 100, or from 55 to 100, or from 60 to 100, or from 65 to 100, or from 70 to 100, or from 75 to 100, or from 80 to 100, or from 85 to 100, or from 90 to 100, greater than 0 to 90, or from 5 to 90, or from 10 to 90, or from 15 to 90, or from 20 to 90, or from 25 to 90, or from 35 to 90, or from 40 to 90, or from 45 to 90, or from 50 to 90, or from 55 to 90, or from 60 to 90, or from 65 to 90, or from 70 to 90, or from 75 to 90, or from 80 to 90, greater than 0 to 85, or from 5 to 85, or from 10 to 85, or from 15 to 85, or from 20 to 85, or from 25 to 85, or from 35 to 85, or from 40 to 85, or from 45 to 85, or from 50 to 85, or from 55 to 85, or from 60 to 85, or from 65 to 85, or from 70 to 85, or from 75 to 85, greater than 0 to 80, or from 5 to 80, or from 10 to 80, or from 15 to 80, or from 20 to 80, or from 25 to 80, or from 35 to 80, or from 40 to 80, or from 45 to 80, or from 50 to 80, or from 55 to 80, or from 60 to 80, or from 65 to 80, or from 70 to 80, or from 75 to 80, or from greater than 0 to 75, or from 5 to 75, or from 10 to 75, or from 15 to 75, or from 20 to 75, or from 25 to 75, or from 35 to 75, or from 40 to 75, or from 45 to 75, or from 50 to 75, or from 55 to 75, or from 60 to 75, or from 65 to 75, or from greater than 0 to 70, or from 5 to 70, or from 10 to 70, or from 15 to 70, or from 20 to 70, or from 25 to 70, or from 35 to 70, or from 40 to 70, or from 45 to 70, or from 50 to 70, or from 55 to 70, or from 60 to 70, or from greater than 0 to 65, or from 5 to 65, or from 10 to 65, or from 15 to 65, or from 20 to 65, or from 25 to 65, or from 35 to 65, or from 40 to 65, or from 45 to 65, or from 50 to 65, or from 55 to 65, or from greater than 0 to 60, or from 5 to 60, or from 10 to 60, or from 15 to 60, or from 20 to 60, or from 25 to 60, or from 35 to 60, or from 40 to 60, or from 45 to 60, or from 50 to 60, or from 55 to 60, or from greater than 0 to 55, or from 5 to 55, or from 10 to 55, or from 15 to 55, or from 20 to 55, or from 25 to 55, or from 35 to 55, or from 40 to 55, or from 45 to 55, or from 50 to 55, or from greater than 0 to 50, or from 5 to 50, or from 10 to 50, or from 15 to 50, or from 20 to 50, or from 25 to 50, or from 35 to 50, or from 40 to 50, or from greater than 0 to 45, or from 5 to 45, or from 10 to 45, or from 15 to 45, or from 20 to 45, or from 25 to 45, or from 35 to 45, or from 0 to 40, or from 5 to 40, or from 10 to 40, or from 15 to 40, or from 20 to 40, or from 25 to 40, or from 35 to 40, or from greater than 0 to 35, or from 5 to 35, or from 10 to 35, or from 15 to 35, or from 20 to 35, or from 25 to 35.

Desirably, the hydroxyl number of the unsaturated curable polyester is in a range of 25 to 100, or from 35 to 100, or from 40 to 100, or from 45 to 100, or from 50 to 100, or from 55 to 100, or from 60 to 100, or from 65 to 100, or from 70 to 100, or from 75 to 100, or from 80 to 100, or from 85 to 100, or from 90 to 100, or 25 to 90, or from 35 to 90, or from 40 to 90, or from 45 to 90, or from 50 to 90, or from 55 to 90, or from 60 to 90, or from 65 to 90, or from 70 to 90, or from 75 to 90, or from 80 to 90, or from 25 to 85, or from 35 to 85, or from 40 to 85, or from 45 to 85, or from 50 to 85, or from 55 to 85, or from 60 to 85, or from 65 to 85, or from 70 to 85, or from 75 to 85, or from 25 to 75, or from 35 to 75, or from 40 to 75, or from 45 to 75, or from 50 to 75, or from 55 to 75, or from 60 to 75, or from 65 to 75, or from 25 to 60, or from 35 to 60, or from 40 to 60, or from 45 to 60, or from 50 to 60, or from 55 to 60.

The acid number mentioned herein can be measured by ASTM D1639-90 test method. The hydroxyl numbers mentioned herein can be measured by ASTM D4274-11 test method.

The glass transition temperature (Tg) of the unsaturated curable polyester disclosed hereinmay be from -20°C to 120°C, from 10°C to 80°C, from 10°C to 60° C, from 10°C to 50°C, from 10°C to 45° C, from 10°C to 40°C, from 20°C to 80°C, from 20°C to 60° C, from 20°C to 50° C, from 30°C to 80° C, from 30°C to 60° C, from 30°C to 50° C, or from 35°C to 60° C. The Tg is measured on the dry polymer using standard techniques, such as differential scanning calorimetry ("DSC"), well known to persons skilled in the art. The Tg measurements of the polyesters are conducted using a "dry polymer," that is, a polymer sample in which adventitious or absorbed water is driven off by heating to polymer to a temperature of 200°C and allowing the sample to return to room temperature. Typically, the polyester is dried in the DSC apparatus by conducting a first thermal scan in which the sample is heated to a temperature above the water vaporization temperature, holding the sample at that temperature until the vaporization of the water absorbed in the polymer is complete (as indicated by an a large, broad endotherm), cooling the sample to room temperature, and then conducting a second thermal scan to obtain the Tg measurement.

The number average molecular weight (Mn) of the unsaturated curable polyester disclosed hereinis not limited, and may be from 1,000 to 20,000, from 1,000 to 15,000, from 1,000 to 12,500, from 1,000 to 10,000, from 1,000 to 8,000, from 1,000 to 6,000, from 1,000 to 5,000, from 1,000 to 4000, from 1,000 to 3,000, from 1,000 to 2,500, from 1,000 to 2,250, or from 1,000 to 2,000, from 1,100 to 4000, from 1,100 to 3,000, from 1,100 to 2,500, from 1,100 to 2,250, or from 1,100 to 2,000 in each case g/mole. The Mn is measured by gel permeation chromatography (GPC) using polystyrene equivalent molecular weight.

This polyester desirably has a low or mid molecular weight, typically an Mn from 1000 to 20,000 to render it suitable for coating applications. Desirably, the molecular weight of the unsaturated curable polyester resin not suitable for the fabrication of free standing films, sheets, and other shaped objects by extrusion, casting, blow molding, and other thermoforming processes commonly used for higher molecular weight thermoplastic polymers.

Another example of the thermosetting composition contains:
I) an unsaturated curable polyester resin comprising the residues of:
   a) polyhydroxyl compounds comprising:
      (i) diol compounds in an amount ranging from 85 to 98 mole %; and
      (ii) polyhydroxyl compounds having at least three hydroxyl groups in an amount ranging from 2 to 15 mole %;
      wherein the amount of (a)(i) and (a)(ii) are based on the total moles of polyhydroxyl compounds (a); and
   b) polycarboxyl compounds comprising
      (i) α,β-unsaturated polycarboxylic acid compounds in an amount ranging from 10 to 60 mole %, or 25 to 50 mole%, or 25 to 40 mole%; and
      (ii) polycarboxyl compounds other than (b)(i) in an amount ranging from 40 to 90 mole %, or 50 to 75 mole%, or 60 to 75 mole%;
      wherein the amount of (b)(i) and (b)(ii) are based on the total moles of polycarboxyl compounds (b); and
II) a phenolic resin, such as a resole phenolic resin.

The unsaturated curable polyester can have an acid number ranging from 0 to 5 or 35-60 mg KOH/g, a hydroxyl number ranging from 30-90 mg KOH/g. The ranges of acid numbers, hydroxyl numbers, the combinations of each of these, as well as the diols, polycarboxylic acids I(b) and anhydrides, Mn, Mw, and molar quantities for each ingredient that are mentioned above are also applicable to these unsaturated curable polyester resins.

Desirably, in any of the embodiments of the invention, the (a)(i) diol includes 2,2-dimethyl-1,3-propanediol (neopentyl glycol); 1,2-cyclohexanedimethanol; 1,3-cyclohexanedimethanol; 1,4-cyclohexanedimethanol; 2-methyl-1,3-propanediol; TMCD; 2,2,4-trimethyl-1,3-pentanediol; hydroxypivalyl hydroxypivalate; 2-butyl-2-ethyl-1,3-propanediol; 1,4-butanediol; 1,6-hexanediol; or combinations thereof.

Desirably, in any of the embodiments disclosed hereincontaining the unsaturated curable polyester resin, the (a)(ii) polyhydroxyl compound having 3 or more hydroxyl groups include 1,1,1-trimethylol propane, 1,1,1-trimethylolethane, glycerin, pentaerythritol, or combinations thereof.

Desirably, in any of the embodiments disclosed hereincontaining the unsaturated curable polyester resin, the (b)(i) α,β-unsaturated polycarboxylic acid compounds include any of the aforementioned α,β-unsaturated polycarboxylic acid compounds, such as maleic acid or its anhydride, crotonic acid or its anhydride, itaconic acid or its anhydride, citraconic acid or its anhydride, aconitic acid, aconictic anahydride, oxalocitraconic acid and its anhydride, mesaconic acid or its anhydride, malic acid or its anhydride, 1,4-dihydronaphthalene-2,3-dicarboxylic acid, phenyl maleic acid or its anhydride, t-butyl maleic acid or its anhydride, monomethyl fumarate, monobutyl fumarate, methyl maleic acid or its anhydride, mesconic acid or its anhydride, or mixtures thereof.

Desirably, in any of the embodiments disclosed hereincontaining the unsaturated curable polyester resin, the (b)(ii) compounds include isophthalic acid (or dimethyl isophthalate), 1,4-cyclohexanedicarboxylic acid, 1,3-cyclohexanedicarboxylic acid, adipic acid; phthalic acid; or combinations thereof.

The unsaturated curable polyester resin can be prepared by any conventional process for the preparation of polyesters. For example, the polyhydroxyl compounds (a) can be combined with the polycarboxyl compounds (b) in a reaction vessel under heat to form a reaction mixture comprising the unsaturated curable polyester I in a batch or continuous process and in one or more stages, optionally with the continuous removal of distillates and applied vacuum during at least part of the residence time.

Polyhydroxyl compounds (a) and polycarboxyl compounds (bi) are combined and reacted in at least one reactor at a temperature from 180-250 °C, optionally in the presence of an acid catalyst. Desirably, a distillate is removed from the reactor.

The process for the manufacture of the polyester intermediate composition can be batchwise or continuous. The reaction of the polyhydroxyl compounds (a) and the polycarboxyl compounds (b) may be carried out in a melt phase process using conventional polyester polymerization conditions. The polyhydroxyl compounds and polycarboxylic acid compounds are combined to form a reaction mixture, and the reaction mixture is reacted in an esterification reactor at a temperature from 180-250 °C. The esterification reaction many take place in one or more esterification reactors. The polyester composition can be made by a transesterification (ester interchange) reaction or by direct esterification. For example, polycarboxylic acid compounds (for direct esterification) or ester forms of the polycarboxylic acid compounds (for transesterification), and the polyhydroxyl compounds can be fed to an esterification reactor either in a combined stream, separate streams, or a combination of a combined and separate stream, and reacted at elevated temperatures, typically, from 180°C to 250°C. While temperatures in excess of 250°C can be employed, such as temperature up to 280°C, in many instances color bodies and degradation products start to form at temperatures exceeding 250°C. Desirably, the reaction mixture is reacted at any temperature within a range from 180°C to 230°C. In the esterification reactor, the temperature of the reaction mixture to form the polyester intermediate composition may be static or may be increased stepwise or continuously if desired.

It is desirable to start the reaction at a temperature below 210°C, or at 200°C or less, or even at 180°C or less, and increase the temperature over the total residence time of the reaction mixture for making the polyester intermediate composition in order to avoid generating more water by-product than the distillate collection system can efficiently remove. To assist driving the reaction of the polyhydroxyl component and acid component to completion, it is desirable to react 1.05 to 1.6, or 1.1-1.5, or 1.1-1.4 equivalents of polyhydroxyl compounds (b) to one equivalent of the polycarboxylic acid compounds (b). Desirably, a distillate is removed from the reactor. The esterification reactor should be equipped with, and the process for making the polyester intermediate composition operated with, a distillate collection system for removing esterification or ester-exchange vapor by-products since their removal will assist with shifting the equilibrium reaction to the formation of the ester. The typical by-products formed in esterification are water in direct esterification routes, alcohols in transesterification routes, along with other reaction by-products such as aldehydes and color bodies.

The method for the removal of reaction by-products is not limited. A common method for the removal of esterification reaction by-products is a vacuum system connected to the esterification reaction zone in the reactor with a direct contact spray condenser, which is useful when a vacuum is applied to the esterification reaction zone in the esterification reactor, or a distillation column that is packed or contains trays in vapor communication with the esterification vessel for the separation of water from other reaction by-products.

The process for making the polyester can be conducted under a pressure within a range of 0 Pa (0 psig) or atmospheric to 1378.95 kPa (200 psig), or from 0 Pa (0 psig) to 689.48 kPa (100 psig), or from 0 psig to 275.79 kPa (40 psig). However, if desired, at least a portion or the entire residence time of the reaction to make the polyester composition can proceed under a vacuum, especially during polycondensation. If a vacuum is applied to only a portion of the residence time, it can be applied starting when at least 30%, or at least 50%, or at least 75%, or at least 80%, or at least 90% of the residence time for making the polyester. By applying a vacuum, the removal of water or alcohol condensate can be further enhanced, and the molecular weight Mn of the polyester can be increased. If a vacuum is applied, suitable pressures can range from 101.19 kPa (759 torr) down to 66.66 Pa (0.5 torr), or 79.99 kPa (600 torr) down to 66.66 Pa (0.5 torr), or 60 kPa (450 torr) down to 66.66 Pa (0.5 torr). Vacuum can be increased with the residence time of the reaction mixture. Alternatively or in addition to the application of a vacuum, the removal of the reaction by-products can be purged or swept with an inert gas during all or a portion of the reaction. An inert gas is any gas which does not cause unwanted reaction or product characteristics at reaction conditions. Suitable gases include, but are not limited to, carbon dioxide, argon, helium, and nitrogen.

The esterification vessel can be agitated if desired to assist with the mass transfer of reactants and disengagement of reaction by-products.

The reaction to make the unsaturated curable polyester resin is facilitated by reacting the polyhydroxyl compounds (a) and the polycarboxylic acid compounds (b) in the presence of appropriate catalysts such as, for example, alkoxy titanium compounds, alkali metal hydroxides and alcoholates, salts of organic carboxylic acids, alkyl tin compounds, metal oxides, and other metal carboxylates or benzoates such as zinc, manganese, or magnesium acetates or benzoates. A typical catalyst is an organometallic acid catalyst, such as, for a carboxylate of tin, e.g. butylstannoic acid. The amount of the catalyst added may be determined by routine experimentation as understood by those skilled in the art. The catalyst can be added in amounts ranging from 0.01 to 1.0 weight percent, based on the total weight of the reactants.

In a continuous process, the polycarboxylic acid compounds and the polyhydroxyl compounds are continuously fed to the esterification reactor, the polyester intermediate composition is continuously withdrawn from the esterification reactor and fed to a second esterification reactor continuously to form the unsaturated curable polyester composition, and the unsaturated curable polyester composition is continuously withdrawn from the second esterification reactor.

Additives can be added to the reactor or reaction mixture to enhance the performance properties of the unsaturated curable polyester polymer. For example, crystallization aids, impact modifiers, surface lubricants, denesting agents, stabilizers, antioxidants, ultraviolet light absorbing agents, metal deactivators, colorants, nucleating agents, acetaldehyde lowering compounds, reheat rate enhancing aids such as elemental antimony or reduced antimony or reducing agents to form such species in situ, silicon carbide, carbon black, graphite, activated carbon, black iron oxide, and red iron oxide, sticky bottle additives such as talc, and fillers can be included. All of these additives and many others and their use are well known in the art and do not require extensive discussion. Any of these compounds can be used in the present composition.

As noted above, the thermosetting composition contains an unsaturated curable polyester resin and a phenolic resin II. At least a portion of the phenolic resin II (or phenoplast) contains phenol moieties substituted with at least one methylol group on the phenolic ring. At least a portion of the methylol substituents are unreacted and available for reaction when added to or combined with the unsaturated curable polyester resin. The phenolic resin desirably contains groups of the following formula (methylol):

-CH₂OH

Desirably, at least one methylol substituent is in the ortho position relative to the phenolic hydroxyl group. The phenolic resin is desirably obtained by the reaction of phenols (which for purposes of this disclosure include substituted and un-substituted phenols) and an aldehyde at an aldehyde:phenol ratio of greater than 1:1, or at least 1.05:1, or at least 1.1:1, or at least 1.2:1, or at least 1.25:1, or at least 1.3:1, or at least 1.35:1, or at least 1.4:1, or at least 1.45:1, or at least 1.5:1, or at least 1.55:1, or at least 1.6:1, or at least 1.65:1, or at least 1.7:1, or at least 1.75:1, or at least 1.8:1, or at least 1.85:1, or at least 1.9:1, or at least 1.95:1, or at least 2:1. The phenolic resin is desirably a resole phenolic resin.

The phenolic resin desirably contains an average of at least one o-methylol substituent per one phenolic hydroxyl group.

The phenolic resin obtained by the condensation of phenols with aldehydes of the general formula RCHO, where R is hydrogen or a hydrocarbon group having 1 to 8 carbon atoms. Specific examples include formaldehyde, acetaldehyde, propionaldehyde, furfuraldehyde, or benzaldehyde. Desirably, the phenolic resin is the reaction product of phenols with formaldehyde.

Various phenols can be used such as phenol, m-cresol, o-cresol, p-cresol, m-alkylphenol, m-phenylphenol, o-alkylphenol, o-phenylphenol, p-alkylphenol, p-phenylphenol, p-butylphenol, resorcinol, 2,6-xylenol, 3,5-xylenol, 3,4-xylenol, 2,3,4-trimethyl phenol, 3-ethyl phenol, 3,5-diethyl phenol, p-butyl phenol, 3,5-dibutyl phenol, p-amyl phenol, p-cyclohexyl phenol, p-octyl phenol. 3,5-dicyclohexyl phenol, p-phenyl phenol, p-crotyl phenol, 3,5-dimethoxy phenol, 3,4,5-trimethoxy phenol, p- ethoxy phenol, p-butoxy phenol, 3 -methyl -4-methoxy phenol, p-phenoxy phenol m-alkoxyphenol, o-alkoxyphenol, p-phenoxyphenol, o-phenoxyphenol, or mixtures thereof.

The phenolic resins are desirably heat curable. The phenolic resin is desirably not made by the addition of bisphenol A, F, or S (collectively "BPA"). Additionally or in the alternative, the phenolic resin is desirably not made by the addition of a polyhydric phenol.

The phenolic resin can be a reaction product of phenol, meta-, ortho-, or para- cresol, and a stoichiometric excess of formaldehyde. Desirably, the resole phenolic resin is a reaction product based on either un-substituted phenol or meta- substituted phenol. The most preferred resole phenolic resin is based on un-substituted phenol.

The resole is desirably of the type that is soluble in alcohol or water. The resole resin can be liquid at 25°C. The resole resin can have a molecular weight Mn from 300 to 450.

Examples of suitable commercial phenolic resins include, but are not limited to, PHENODUR® PR 516/60B, PHENODUR® PR 371/70B, PHENODUR® PR 612/80B, PHENODUR® PR 285/55/IBB, PHENODUR® PR897, PHENODUR® PR520, and PHENODUR® PR565) available from Allnex; BRJ-473, FB-110 XB-50, FB-209 BT-57, SP-1044, SP-1045, HRJ 10518, SP-103 and HRJ-1367 available from SI Group; those with DUREZ® or VARCUM® trade names available from Durex Corp. (e.g. Durez 33162); and those with Bakelite® trade name available from MOMENTIVE (e.g. Bakelite 6535LB, 6581LB, 6812LB).

Desirably, none of the ingredients in the thermosetting composition are synthesized with the addition of BPA, or with the addition of polyhydric phenols.

There is also provided a solvent containing (as distinguished from an aqueous based coating) coating composition, comprising:
I) the unsaturated curable polyester resin disclosed herein,
II) a crosslinker comprising a resole phenolic resin, and
III) an organic solvent.

Suitable organic solvents for the solvent-based coating composition include xylene, ketones (for example, methyl amyl ketone), 2-butoxyethanol, ethyl-3-ethoxypropionate, toluene, butanol, cyclopentanone, cyclohexanone, ethyl acetate, butyl acetate, and other volatile inert solvents typically used in industrial baking (i.e., thermosetting) enamels, mineral spirits, naptha, toluene, acetone, methyl ethyl ketone, methyl isoamyl ketone, isobutyl acetate, t-butyl acetate, n-propyl acetate, isopropyl acetate, methyl acetate, ethanol, n-propanol, isopropanol, sec-butanol, isobutanol, ethylene glycol monobutyl ether, propylene glycol n-butyl ether, propylene glycol methyl ether, propylene glycol monopropyl ether, dipropylene glycol methyl ether, diethylene glycol monobutyl ether, trimethylpentanediol mono-isobutyrate, ethylene glycol mono-octyl ether, diacetone alcohol, 2,2,4-trimethyl-1,3-pentanediol monoisobutyrate (available commercially from Eastman Chemical Company under the trademark TEXANOL™), or combinations thereof. The coating composition also may comprise reactive solvents such as, for example, diallyl phthalate, SANTOLINK™ XI-100 polyglycidyl allyl ether (available from Cytec), and others as described, for example, in U.S. Patent Nos 5,349,026 and 5,371,148.

The amount of solvent (other than water) is desirably at least 20 wt.%, or at least 25 wt.%, or at least 30 wt.%, or at least 35 wt.%, or at least 40 wt.%, or at least 45 wt.%, or at least 50 wt.%, or at least 55 wt.% based on the weight of the solvent containing coating composition. Additionally or in the alternative, the amount of organic solvent can be up to 85 wt.% based on the weight of the coating composition. Solvent containing coating compositions desirably contain 10 wt.% or less, or 8 wt.% or less, or 5 wt.% or less, or 3 wt.% or less water, based on the weight of the coating composition.

The acid numbers are not particularly limited, but desirably are less than 50, or less than 30, or less than 20, or less than 10, or even less than 5 mg KOH/g, in order to provide improved solubility and lower solution viscosity.

There is further provided an aqueous dispersion, comprising
d) a unsaturated curable polyester resin as disclosed herein,
e) a neutralizing agent, and
f) water.

In aqueous dispersions or waterborne compositions, the unsaturated curable polyester can contain the residues of one or more hydrophilic monomers such as 5-sodiosulfoisophthalic acid, polyetheylene glycol, or Ymer™ N120 (available from Perstorp).

The unsaturated curable polyesters in aqueous or waterborne compositions desirably have high acid numbers (e.g. at least 30, or at least 40, or at least 50, and up to 120 mg KOH/g) and can be neutralized with a base. Neutralization of a polymer means to neutralize carboxylic acid end groups, acetoacetate residues, or the alkali metals cations.

The amount of water is desirably at least 20 wt.%, or at least 25 wt.%, or at least 30 wt.%, or at least 35 wt.%, or at least 40 wt.%, or at least 45 wt.%, or at least 50 wt.%, or at least 55 wt.%, or at least 60 wt.% based on the weight of the aqueous dispersion.

The neutralizing agent may be an amine or an inorganic base. Typical amines include ammonia, trimethylamine, diethylamine, monoethanolamine, monoisopropanolamine, morpholine, ethanolamine, diethanolamine, triethanolamine, N,N-dimethylethanolamine, N, N-diethylethanolamine, and N-methyldiethanolamine.

Typical inorganic bases include bases derived from alkali metals and alkaline earth metals such as, for example, sodium, potassium, magnesium, calcium, and other basic metal compounds. Suitable bases from this first class of bases useful in the present disclosure include, but are not limited to, sodium oxide, potassium oxide, magnesium oxide, calcium oxide, sodium hydroxide, potassium hydroxide, magnesium hydroxide, calcium hydroxide, sodium carbonate, potassium carbonate, sodium bicarbonate, potassium bicarbonate, calcium carbonate, magnesium bicarbonate, alkali metal borate compounds and their hydrates, sodium phosphate, potassium biphosphate, and sodium pyrophosphate.

The aqueous dispersion of this invention may and desirably further comprise an organic co-solvent. Suitable co-solvents include ethanol, n-propanol, isopropanol, n-butanol, sec-butanol, isobutanol, ethylene glycol monobutyl ether, propylene glycol n-butyl ether, propylene glycol methyl ether, propylene glycol monopropyl ether, dipropylene glycol methyl ether, diacetone alcohol, and other water-miscible solvents. If an organic co-solvent is used, the amount is desirably 40 wt.% or less, or 30 wt.% or less, or 15 wt.% or less, or 10 wt.%, or 5 wt.% or less based on the weight of the aqueous composition, and at least 1 wt.%, or at least 3 wt.% based on the weight of the aqueous composition.

Aqueous dispersions of the polyesters disclosed herein are typically prepared by dispersing the unsaturated curable polyester resins with water in the presence of organic co-solvent(s) (e.g. at least 1 or 3 wt.% and up to 15 wt.% based on the weight of the polyester polymers), at a temperature ranging from 60 to 95°C under ambient pressure. The dispersing process may be carried out either by gradually adding the resin to the heated mixture of water, the neutralizing agent, and the co-solvent(s) or by gradually adding water and the neutralizing agent to the heated mixture of the resin and the co-solvent(s). The former method is preferred for resins with a high Tg (e.g. >60°C), which can be pulverized, for example, by using a blender and subsequently added to the heated water and the neutralizing agent. For resins with a lower Tg, it is preferred to add water and the neutralizing agent to the heated resin mixture containing the co-solvent. After the completion of adding either resin or water, the stirring is allowed to continue until a homogeneous dispersion is obtained. The process typically takes one or several hours. It is intended for this terminology to include conditions where the polyester is dissolved to form a true solution as well as those where the polyester is dispersed within the aqueous medium. Often, due to the statistical nature of polyester compositions, it is possible to have a soluble fraction and a dispersed fraction when a single polyester sample is placed in an aqueous medium.

Desirably, the dispersion of the unsaturated curable polyester resin and phenolic resin contains at least 3 wt.%, or at least 5 wt.%, or at least 10 wt.%, or at least 15 wt.%, or at least 20 wt.%, or at least 25 wt.%, or at least 30 wt.% unsaturated curable polyester resin based on the weight of the aqueous dispersion. Additionally or in the alternative, the dispersion contains up to 80 wt.%, or up to 60 wt.%, or up to 50 wt.%, or up to 40 wt.% unsaturated curable polyester resin. Suitable ranges of unsaturated curable polyester resin in wt.% based on the weight of the dispersion include 3-80, or 5-80, or 10-80, or 5-80, or 10-80, or 15-80, or 20-80, or 25-80, or 30-80, or 3-60, or 5-60, or 10-60, or 5-60, or 10-60, or 15-60, or 20-60, or 25-60, or 30-60, or 3-50, or 5-50, or 10-50, or 5-50, or 10-50, or 15-50, or 20-50, or 25-50, or 30-50, or 3-45, or 5-45, or 10-45, or 5-45, or 10-45, or 15-45, or 20-45, or 25-45, or 30-45.

As a further aspect, provided is a curable waterborne coating composition, comprising:
I) the unsaturated curable polyester resin having acid number of50 to 120 mg KOH/g;
II) a resole phenolic crosslinking resin;
III) a neutralizing agent; and
IV) water.

Unsaturated curable polyester resins having glass transition temperature (Tg) greater than 50°C are suitable for powder coating application. The polyester disclosed hereincomprises TACD, which is capable of providing higher Tg.

Although the coating composition contains at least a resole phenolic resin as a crosslinker, the thermosetting composition may also contain other crosslinking agents, such as amino types of crosslinkers. Suitable amino crosslinkers include hexamethoxymethylmelamine, tetramethoxymethylbenzoguanamine, tetramethoxymethylurea, and mixed butoxy/methoxy substituted melamines. Thus, in another embodiment, the thermosetting composition disclosed hereinfurther comprises 5 to 30 weight % of an amino resin, based on the total weight of polyester, phenolic, and amino resins.

### The AcetoAcetate Functionalized Curable Polyester Resin

There is yet further provided a thermosetting composition comprising:
I. a curable polyester resin containing beta-ketoacetate moieties; and
II. a phenolic resin having at least one methylol group.

For convenience, the curable polyester resin containing beta-ketoacetate moieties will be identified as an "acetoacetate functionalized curable polyester resin."

Without being bound to a theory, it is believed that the intermediate carbon between the carbonyl groups on the beta-ketoacetate moiety can act as a nucleophilic agent to attack the electrophilic site on the phenolic equilibrium intermediate (B) having dual nucleophilic and electrophilic sites or quinone methide having diene structure according to the following mechanism:

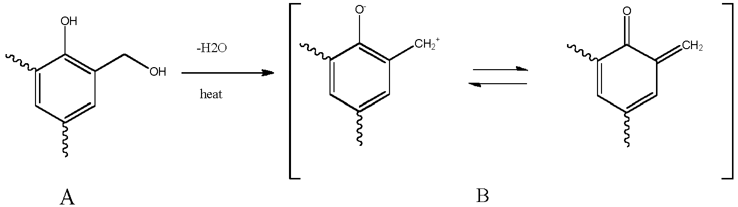

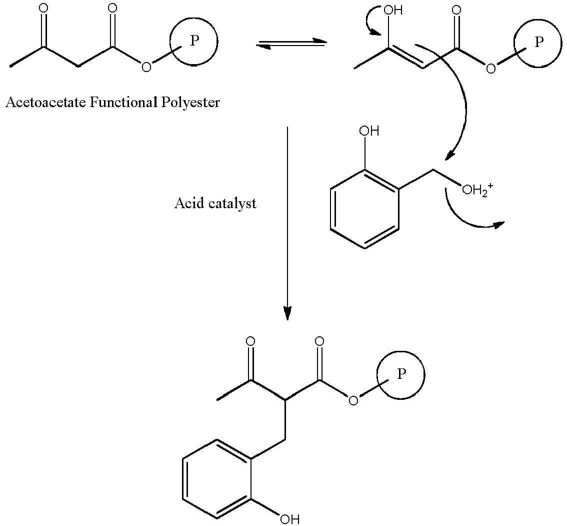

This thermosetting composition comprises a curable polyester (I) comprising beta-ketoacetate moieties that do not contain vinyl unsaturations. The curable polyester resin contains beta-ketoacetate moieties, e.g. the residues of beta-ketoacetate containing compounds. The beta-ketoacetate containing compounds are any compound having a beta-ketoacetate moiety in the compound and do not contain vinyl unsaturations. The beta-ketoacetate moiety, in the beta-ketoacetate containing compound and in the acetoacetate functionalized curable polyester resin, has a molecular formula of -COCHR'COO- , and can be represented by the general structure (Formula 1): 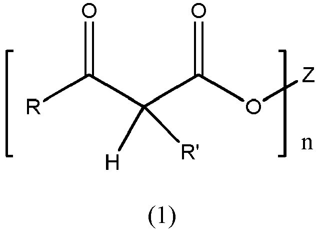 wherein R is a branched or straight chain, saturated or unsaturated alkyl, alicyclic, or aromatic group; R' is a hydrogen or a branched or straight chain, saturated or unsaturated alkyl, alicyclic, or aromatic group; Z is a branched or straight chain, saturated or unsaturated alkyl, alicyclic, or aromatic group, or is a polyester polymer residue, and wherein R does not contain a vinyl unsaturation.

When Z is a polyester residue, n represents the average number of beta-ketoacetate groups per polymer chain and is an average of at least 0.5. When the beta-ketoacetate moiety is in the beta-ketoacetate containing compound, n is equal to 1 and is represented by the structure below:

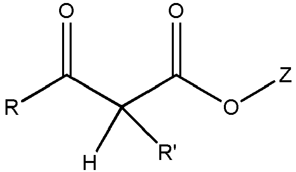

Desirably, R is a branched or straight chain alkyl group having 1-4 carbon atoms, R' is a hydrogen or a branched or straight alkyl having 1-4 carbon atoms; Z is a branched or straight chain alkyl having 1-8 carbon atoms or a polyester polymer residue, with n being an average within a range of 0.5-5.

These compounds or the acetoacetate functionalized curable polyester resin having beta-ketoacetate moiety groups may contain geometric or optical isomers as well as tautomers. It should be recognized that the presently described diketo groups can exist as tautomers in which the same compound can also be depicted as having a structure as shown in general structure below (Formula 2):

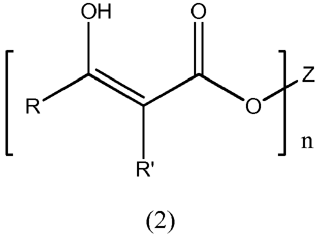

By naming and referring to a compound of formula 1 throughout the specification and claims, the tautomers thereof are also included such as those in Formula 2.

There is provided a thermosetting composition comprising:
I) a curable polyester resin comprising the reaction product of a polyester resin with a compound containing a beta-ketoacetate moiety that does not contain a vinyl unsaturation; and
II) a phenolic resin substituted with at least one methylol group.

The acetoacetate-functionalized polyester resin comprises the reaction product of the polyester resin and the compound having a beta-ketoacetate moiety that does not contains a vinyl unsaturation, and can be represented by the general reaction shown as Formula 3:

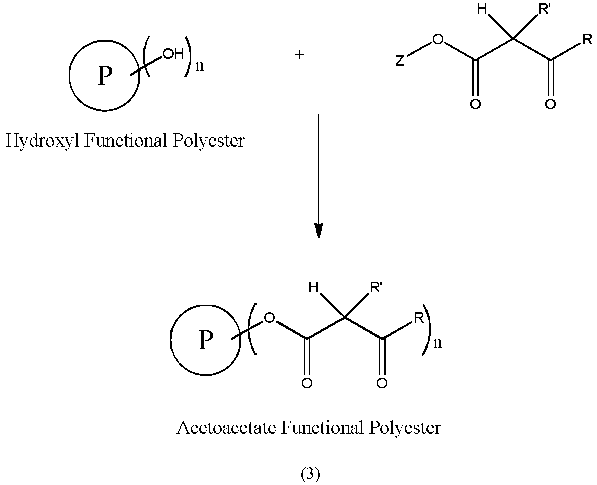

The reaction product described in Formula 3 is also described by Formula 1 when Z is a polymer residue. Typically, the reaction is driven by the removal of the alcohol by-product as it is formed. Although halides are traditionally utilized as leaving groups, the various acetoacetate esters are easier to handle and to store.

The compound having a beta-ketoacetate moiety desirably has a molecular weight of less than 500, or less than 400, or less than 300, or less than 200, or not greater than 175. As mentioned above, this compound does not contain vinyl unsaturation.

Suitable compounds for reaction with the polyester resin are those compounds containing a beta-ketoacetate moiety or those compounds represented by formulas 1 or 2. Examples of these compounds containing a beta-ketoacetate moiety that are suitable for reaction with (esterification or transesterification of) a hydroxyl-containing polyester are desirably alkyl acetoacetate compounds, such as but not limited to t-butyl acetoacetate, ethyl acetoacetate, methyl acetoacetate, isobutyl acetoacetate, isopropyl acetoacetate, n-propyl acetoacetate, n-butyl acetoacetate, t-anyl acetotacetate, and diisopropyl carbinol acetoacetate. Preferred is the use of t-amyl acetoacetate or t-butyl acetoacetate.

The acetoacetate functionalized curable polyester resin (I) may be prepared by reacting a polyester resin containing hydroxyl groups, for example, a polymer having a hydroxyl number of at least 5, desirably 30 to 200, with a compound having the beta-ketoacetate moiety or diketene. Various methods for the preparation of acetoacetylated polyester coating resins have been described by Witzeman et al. in the Journal of Coatings Technology, Vol. 62, No. 789, pp. 101-112 (1990). Suitable amounts of each in a reaction mixture include from 60 to 97, 70 to 97, 80 to 94, or 85 to 90 wt.% of the polyester resin and from 3 to 40, 3 to 30, 6 to 20, or 10 to 15 wt.% of the compound having a beta-ketoacetate moiety or a diketene can be reacted together, wherein the weight percents are based on the total weight of the polyester resin and the compound having the beta-ketoacetate moiety.

There is now also provided a thermosetting composition comprising:
I) a curable polyester resin comprising the reaction product of a polyester resin with a compound containing a beta-ketoacetate moiety that does not contain a vinyl unsaturation, said polyester resin comprising the reaction product of:
   a) polyhydroxyl compounds comprising:
      (i) diol compounds in an amount of 70 mole % - 100 mole %; and
      (ii) polyhydroxyl compounds having 3 or more hydroxyl groups in an amount of 0 to 30 mole %;
      wherein the mole % is based on 100% of all moles of polyhydroxyl compounds a); and
   b) polycarboxyl compounds comprising polycarboxylic acid compounds, derivatives of polycarboxylic acid compounds, the anhydrides of polycarboxylic acids, or combinations thereof; and
II) a phenolic resin substituted with at least one methylol group.

The polyester used to react with the beta-ketoacetate containing compound is desirably made with, and/or contains the residues of:
a) polyhydroxyl compounds comprising:
   (i) a diol in an amount of 70 mole % - 100 mole %; and
   (ii) a polyhydroxyl compound having 3 or more hydroxyl groups in an amount of 0 to 30 mole %, based on 100 mole% of all polyhydroxyl compounds a).

For purposes of calculating quantities, all compounds having at least one hydroxyl group are counted as polyhydroxyl compounds (a). Such compounds include, but are not limited to, mono-ols, diols, polyhydroxyl compounds having 3 or more hydroxyl groups, and for each of the foregoing, can be hydrocarbons of any chain length optionally containing ether groups such as polyether polyols, ester groups such as polyesters polyols, amide groups, amine groups, and anhydrides.

The polyester resin is desirably not an alkyd polyester resin, or desirably is not a polyester resin containing alkyd residues. In addition to or in the alternative, the polyester resin does not contain any residues of vinyl unsaturation containing compounds, such as acrylics, or desirably, is not made with any compound having a vinyl unsaturation.

The diols (a)(i) used to make the acetoacetate functionalized curable polyester resin have 2 hydroxyl groups and can be branched or linear, saturated or unsaturated, aliphatic or cycloaliphatic C₂-C₂₀ compounds, the hydroxyl groups being primary, secondary, and/or tertiary, desirably primary. Desirably, the polyhydroxyl compounds are hydrocarbons and do not contain atoms other than hydrogen, carbon and oxygen. Examples of diols (a)(i) include 2,2,4,4-tetraalkylcyclobutane-1,3-diol (TACD), 2,2-dimethyl-1,3-propanediol (neopentyl glycol), 1,2-cyclohexanedimethanol, 1,3-cyclohexanedimethanol, 1,4-cyclohexanedimethanol, 2,2,4-trimethyl-1,3-pentanediol, hydroxypivalyl hydroxypivalate, 2-methyl-1,3-propanediol, 2-butyl-2-ethyl-1,3-propanediol, 2-ethyl-2-isobutyl-1,3-propanediol, 1,3-butanediol, 1,4-butanediol, 1,5-pentanediol, 1,6-hexanediol, 2,2,4,4-tetramethyl-1,6-hexanediol, 1,10-decanediol, 1,4-benzenedimethanol, ethylene glycol, propylene glycol, diethylene glycol, dipropylene glycol, triethylene glycol, tetraethylene glycol, and polyethylene glycol, and polyols such as 1,1,1-trimethylol propane, 1,1,1-trimethylolethane, glycerin, pentaerythritol, erythritol, threitol, dipentaerythritol, and sorbitol.

The TACD compound can be represented by the general structure: 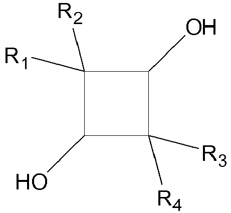 wherein R₁, R₂, R₃, and R₄ each independently represent an alkyl radical, for example, a lower alkyl radical having 1 to 8 carbon atoms; or 1 to 6 carbon atoms, or 1 to 5 carbon atoms, or 1 to 4 carbon atoms, or 1 to 3 carbon atoms, or 1 to 2 carbon atoms, or 1 carbon atom.. The alkyl radicals may be linear, branched, or a combination of linear and branched alkyl radicals. Examples of TACD include 2,2,4,4-tetramethylcyclobutane-1,3-diol (TMCD), 2,2,4,4-tetraethylcyclobutane-1,3-diol, 2,2,4,4-tetra-n-propylcyclobutane-1,3-diol, 2,2,4,4-tetra-n-butylcyclobutane-1,3-diol, 2,2,4,4-tetra-n-pentylcyclobutane-1,3-diol, 2,2,4,4-tetra-n-hexylcyclobutane-1,3-diol, 2,2,4,4-tetra-n-heptylcyclobutane-1,3-diol, 2,2,4,4-tetra-n-octylcyclobutane-1,3-diol, 2,2-dimethyl-4,4-diethylcyclobutane-1,3-diol, 2-ethyl-2,4,4-trimethylcyclobutane-1,3-diol, 2,4-dimethyl-2,4-diethyl-cyclobutane-1,3-diol, 2,4-dimethyl-2,4-di-n-propylcyclobutane-1,3-diol, 2,4-n-dibutyl-2,4-diethylcyclobutane-1,3-diol, 2,4-dimethyl-2,4-diisobutylcyclobutane-1,3-diol, and 2,4-diethyl-2,4-diisoamylcyclobutane-1,3-diol.

Desirably, the diol (a)(i) used to make the acetoacetate functionalized curable polyester resin is 2,2,4,4-tetramethylcyclobutane-1,3-diol (TMCD), 2,2-dimethyl-1,3-propanediol (neopentyl glycol), 1,2-cyclohexanedimethanol, 1,3-cyclohexanedimethanol, 1,4-cyclohexanedimethanol, 2,2,4-trimethyl-1,3-pentanediol, hydroxypivalyl hydroxypivalate, 2-methyl-1,3-propanediol, 2-butyl-2-ethyl-1,3-propanediol, 1,4-butanediol, and 1,6-hexanediol or mixtures thereof. Desirably, at least one of the diols (a)(i) is TMCD.

The diols (a)(i) used to make the acetoacetate functionalized curable polyester resin are desirably present in an amount of at least 70 mole%, or at least 75 mole%, or at least 80 mole%, or at least 85 mole%, or at least 87 mole%, or at least 90 mole%, or at least 92 mole%, based on 100 mole% of all polyhydroxyl compounds. Additionally or in the alternative, the diols (a)(i) can be present in an amount of up to 100 mole%, or up to 98 mole%, or up to 96 mole%, or up to 95 mole%, or up to 93 mole%, or up to 90 mole%, based on 100 mole% of all polyhydroxyl compounds. Suitable ranges include, in mole% based on 100 mole% of all polyhydroxyl compounds (a), 70-100, or 75-100, or 80-100, or 85-100, or 87-100, or 90-100, or 92-100, or 95-100, or 96-100, or 70-98, or 75-98, or 80-98, or 85-98, or 87-98, or 90-98, or 92-98, or 95-93, or 96-93, or 70-93, or 75-93, or 80-93, or 85-93, or 87-93, or 90-93, or 92-93, or 70-90, or 75-90, or 80-90, or 85-90, or 87-90.

The diols (a)(i) used to make the acetoacetate functionalized curable polyester resin are desirably present in an amount of at least 35 mole%, or at least 37 mole%, or at least 40 mole%, or at least 42 mole%, or at least 45 mole%, or at least 46 mole%, based on the total moles of the components of the polyester polymer. Additionally or in the alternative, the diols (a)(i) can be present in an amount of up to 50 mole%, or up to 49 mole%, or up to 48 mole%, or up to 47 mole%, or up to 46 mole%, or up to 45 mole%, based on the total moles of the components of the polyester polymer. Suitable ranges include, in mole% based on the total moles of the components of the polyester polymer, 35-50, or 37-50, or 40-50, or 42-50, or 45-50, or 46-50, or 35-49, or 37-49, or 40-49, or 42-49, or 45-49, or 46-49, or 35-48, or 37-48, or 40-48, or 42-48, or 45-48, or 46-48, or 35-47, or 37-47, or 40-47, or 42-47, or 45-47, or 46-47, or 35-46, or 37-46, or 40-46, or 42-46, or 45-46, or 35-45, or 37-45, or 40-45, or 42-45.

The polyhydroxyl compounds (a)(ii) used to make the acetoacetate functionalized curable polyester resin having 3 or more hydroxyl groups can be branched or linear, saturated or unsaturated, aliphatic or cycloaliphatic C2-C20 compounds, the hydroxyl groups being primary, secondary, and/or tertiary, and desirably at least two of the hydroxyl groups are primary. Desirably, the polyhydroxyl compounds are hydrocarbons and do not contain atoms other than hydrogen, carbon and oxygen. Examples of the polyhydroxyl compounds (a)(ii) include 1,1,1-trimethylol propane, 1,1,1-trimethylolethane, glycerin, pentaerythritol, erythritol, threitol, dipentaerythritol, sorbitol, and mixtures thereof.

The polyhydroxyl compounds (a)(ii) used to make the acetoacetate functionalized curable polyester resin, if present, can be present in an amount of at least 1 mole%, or at least 2 mole%, or at least 5 mole%, or at least 8 mole%, or at least 10 mole%, based on 100 mole% of all polyhydroxyl compounds (a). Additionally or in the alternative, the polyhydroxyl compounds (a)(ii) can be present in an amount of up to 30 mole%, or up to 25 mole%, or up to 20 mole%, or up to 15 mole%, or up to 13 mole%, or up to 10 mole%, or up to 8 mole%, based on 100 mole% of all polyhydroxyl compounds (a). Suitable ranges of the polyhydroxyl compounds (a)(ii) include, in mole% based on 100 mole% of all polyhydroxyl compounds (a), 1-30, or 2-30, or 5-30, or 8-30, or 10-30, or 1-25, or 2-25, or 5-25, or 8-25, or 10-25, or 1-20, or 2-20, or 5-20, or 8-20, or 10-20, or 1-15, or 2-15, or 5-15, or 8-15, or 10-15, or 1-13, or 2-13, or 5-13, or 8-13, or 10-13, or 1-10, or 2-10, or 5-10, or 8-10, or 1-8, or 2-8, or 5-8.

The polyhydroxyl compounds (a)(ii) used to make the acetoacetate functionalized curable polyester resin are desirably present in an amount of at least 0.5 mole%, or at least 1 mole%, or at least 2 mole%, or at least 4 mole%, or at least 5 mole%, based on the total moles of the components of the polyester polymer. Additionally or in the alternative, the polyhydroxyl compounds (a)(ii) can be present in an amount of up to 15 mole%, or up to 13 mole%, or up to 10 mole%, or up to 8 mole%, or up to 6 mole%, or up to 5 mole%, or up to 4 mole%, based on the total moles of the components of the polyester polymer. Suitable ranges include, in mole% based on the total moles of the components of the polyester polymer, 0.5-15, or 1-15, or 2-15, or 4-15 ,or 5-15, or 0.5-13, or 1-13, or 2-13, or 4-13 ,or 5-13, or 0.5-10, or 1-10, or 2-10, or 4-10 ,or 5-10, or 0.5-8, or 1-8, or 2-8, or 4-8 ,or 5-8, or 0.5-6, or 1-6, or 2-6, or 4-6 ,or 5-6, or 0.5-5, or 1-5, or 2-5, or 4-5 ,or 0.5-4, or 1-4, or 2-4.

The mole % of the diol (a)(i) used to make the acetoacetate functionalized curable polyester resin is desirably from 70 to 100, 80 to 97, or 85 to 95, and the mole% of the polyhydroxyl compound (a)(ii) is desirably from 0 to 30, 3 to 20, or 5 to 15.

Desirably, all of the polyhydroxyl compounds (a) used to react with the polycarboxylic compounds (b) for the synthesis of the acetoacetate functionalized curable polyester resin are hydrocarbons, meaning that they contain only oxygen, carbon, and hydrogen. Optionally, none of the polyhydroxyl compounds (a) contain any ester, carboxyl (-COO-), and/or anhydride groups. Optionally, none of the polyhydroxyl compounds (a) have any carbonyl groups (-CO-). Optionally, none of the polyhydroxyl compounds (a) contain any ether groups. Desirably, the polyhydroxyl compounds (a) have from 2 to 20, or 2 to 16, or 2 to 12, or 2 to 10 carbon atoms.

The polycarboxyl compounds I(b) for making the acetoacetate functionalized curable polyester resin contain at least polycarboxylic acid compounds, derivatives of polycarboxylic acid compounds, the anhydrides of polycarboxylic acids, or combinations thereof. Suitable polycarboxylic acid compounds include compounds having at least two carboxylic acid groups. The polycarboxylic acid compounds are capable of forming an ester linkage with a polyhydroxyl compound. For example, a polyester can be synthesized by using a polyhydroxyl compound and a derivative of a dicarboxylic acid such as, for example, dimethyl ester or other dialkyl esters of the diacid, or diacid chloride or other diacid halides, or acid anhydride.

The polycarboxylic acid compounds I(b) for making the acetoacetate functionalized curable polyester resin can be a combination of aromatic polycarboxylic acid compounds and either or both of aliphatic or cycloaliphatic polycarboxylic acid compounds. For example, the polycarboxylic acid compounds I(b) can include aromatic polycarboxylic acid compounds and aliphatic polycarboxylic acids compounds having 2 to 22 carbon atoms; or aromatic polycarboxylic acid compounds and cycloaliphatic polycarboxylic acids compounds having 2 to 22 carbon atoms; or aromatic polycarboxylic acid compounds, aliphatic polycarboxylic acids compounds having 2 to 22 carbon atoms; and cycloaliphatic polycarboxylic acids compounds having 2 to 22 carbon atoms.

Examples of such polycarboxylic compounds I(b) for making the that form the polycarboxylic I(b) residues in the acetoacetate functionalized curable polyester resin include those having two or more, desirably only two, carboxylic acid functional groups or their esters. Examples of these compunds include aliphatic dicarboxylic acids, alicyclic dicarboxylic acids, aromatic dicarboxylic acids, derivatives of each, or mixtures of two or more of these acids, or the C1-C4 ester derivatives thereof. Suitable dicarboxylic acids include, but are not limited to, isophthalic acid (or dimethyl isophthalate), terephthalic acid (or dimethyl terephthalate), phthalic acid, phthalic anhydride, 1,4-cyclohexanedicarboxylic acid, 1,3-cyclohexanedicarboxylic acid, hexahydrophthalic anhydride, tetrahydrophthalic anhydride, tetrachlorophthalic anhydride, dodecanedioic acid, sebacic acid, azelaic acid, succinic anhydride, succinic acid, adipic acid, 2,6-naphthalenedicarboxylic acid, glutaric acid, diglycolic acid; 2,5-norbornanedicarboxylic acid; 1,4-naphthalenedicarboxylic acid; 2,5-naphthalenedicarboxylic acid; diphenic acid; 4,4'-oxydibenzoic acid; 4,4'-sulfonyidibenzoic acid, and mixtures thereof.

Anhydride analogs to each of the polycarboxyl compounds I(b) described above can be used. This would include the anhydrides of polycarboxylic acids having at least two acyl groups bonded to the same oxygen atom. The anhydrides can be symmetrical or unsymmetrical (mixed) anhydrides. The anhydrides have at least one anhydride group, and can include two, three, four, or more anhydride groups. Specific examples of anhydrides of the dicarboxylic acids include, but are not limited to, maleic anhydride, maleic acid, fumaric acid, itaconic anhydride, itaconic acid, citraconic anhydride, citraconic acid, aconitic acid, aconitic anahydride, oxalocitraconic acid and its anhydride, mesaconic acid or its anhydride, beta-acylacrylic acid, phenyl maleic acid or its anhydride, t-butyl maleic acid or its anhydride, monomethyl fumarate, monobutyl fumarate, methyl maleic acid or its anhydride, or mixtures thereof.

Desirably, the polycarboxylic component I(b) for making the acetoacetate functionalized curable polyester resin includes isophthalic acid (or dimethyl isophthalate), terephthalic acid (or dimethyl terephthalate), phthalic acid, phthalic anhydride, 1,4-cyclohexanedicarboxylic acid, 1,3-cyclohexanedicarboxylic acid, adipic acid, 2,6-naphthalenedicarboxylic acid, 1,4-naphthalenedicarboxylic acid; 2,5-naphthalenedicarboxylic acid; hexahydrophthalic anhydride, tetrahydrophthalic anhydride, trimellitic anhydride, succinic anhydride, succinic acid, or mixtures thereof. Trimellitic acid or its anhydride is a useful compound to add in order to increase the acid number of the curable polyester if so desired.

More specific examples of some of the suitable polycarboxylic acids Ib and/or combinations thereof include:
a) (isophthalic acid (or dimethyl isophthalate)) and (1,4-cyclohexanedicarboxylic acid, 1,3-cyclohexanedicarboxylic acid, or mixtures thereof); or
b) (isophthalic acid (or dimethyl isophthalate)) and (dodecanedioic acid, sebacic acid, azelaic acid, maleic acid, fumaric acid, succinic acid, adipic acid, glutaric acid, itatonic acid, diglycolic acid; or mixtures thereof); or
c) (isophthalic acid (or dimethyl isophthalate)); or (1,4-cyclohexanedicarboxylic acid, 1,3-cyclohexanedicarboxylic acid, or mixtures thereof) and (dodecanedioic acid, sebacic acid, azelaic acid, maleic acid, fumaric acid, succinic acid, adipic acid, glutaric acid, itatonic acid, diglycolic acid, or mixtures thereof), or
d) 1,4-cyclohexanedicarboxylic acid.

Optionally, terephthalic acid or derivatives thereof are not included as polycarboxylic acids I(b).

The acetoacetate functionalized curable polyester resin I can have an acid number ranging from 0 to 120 mg KOH/g and a hydroxyl number ranging from greater than 0 to 300 mg KOH/g.

The acid number of the acetoacetate functionalized curable polyester resin I can be adjusted as needed depending on whether a water borne dispersion or solvent borne solution is ultimately desired.

The acid number of the acetoacetate functionalized curable polyester resin I is not particularly limited. The acid number may range from 0 to 120 mgKOH/g. The acid number may vary depending on the application. For example, the desirable acid number for waterborne coating application is 50 to 100 to impart sufficient water dispersibility after neutralization, whereas the desired acid number for solvent-based coating application is 0 to 10 for better solubility and lower solution viscosity.

The hydroxyl number of the polyester resin used to make the acetoacetate functionalized curable polyester resin I can be within a range of from greater than 0 to 300 mg KOH/g. Suitable ranges of hydroxyl number include greater than 0 to 300, or from 10 to 300, or from 30 to 300, or from 50 to 300, or from 60 to 300, or from 80 to 300, or from 100 to 300, or from 120 to 300, or from 140 to 300, or from 160 to 300, or from 180 to 300, or greater than 0 to 260, or from 10 to 260, or from 30 to 260, or from 50 to 260, or from 60 to 260, or from 80 to 260, or from 100 to 260, or from 120 to 260, or from 140 to 260, or from 160 to 260, or from 180 to 260, greater than 0 to 240, or from 10 to 240, or from 30 to 240, or from 50 to 240, or from 60 to 240, or from 80 to 240, or from 100 to 240, or from 120 to 240, or from 140 to 240, or from 160 to 240, or from 180 to 240, or greater than 0 to 220, or from 10 to 220, or from 30 to 220, or from 50 to 220, or from 60 to 220, or from 80 to 220, or from 100 to 220, or from 120 to 220, or from 140 to 220, or from 160 to 220, or from 180 to 220 or greater than 0 to 200, or from 10 to 200, or from 30 to 200, or from 50 to 200, or from 60 to 200, or from 80 to 200, or from 100 to 200, or from 120 to 200, or from 140 to 200, or from 160 to 200, or from 180 to 200 or greater than 0 to 180, or from 10 to 180, or from 30 to 180, or from 50 to 180, or from 60 to 180, or from 80 to 180, or from 100 to 180, or from 120 to 180, or from 140 to 180, or from 160 to 180, or greater than 0 to 160, or from 10 to 160, or from 30 to 160, or from 50 to 160, or from 60 to 160, or from 80 to 160, or from 100 to 160, or from 120 to 160, or from 140 to 160 mgKOH/g.

Desirably, the hydroxyl number of the polyester resin is high to increase the number of sites for reaction with the beta-ketoacetate containing compound. Accordingly, the hydroxyl number of the polyester resin is desirably at least 30, or at least 50, or at least 80 mgKOH/g.

Desirably, the acid number of the acetoacetate functionalized curable polyester resin I is not more than 30, or not more than 25, or not more than 20, or not more than 15, or not more than 10, or not more than 8, or not more than 5 mgKOH/g .

The acid number mentioned herein can be measured by ASTM D1639-90 test method. The hydroxyl numbers mentioned herein can be measured by the ASTM D4274-11 test method.

The glass transition temperature (Tg) of the acetoacetate functionalized curable polyester resin may be from -40°C to 120°C, from - 10°C to 100° C, from 10°C to 80°C, from 10°C to 60° C, from 10°C to 50°C, from 10°C to 45° C, from 10°C to 40°C, from 20°C to 80°C, from 20°C to 60° C, from 20°C to 50° C, from 30°C to 80° C, from 30°C to 70° C, from 30°C to 60° C, from 30°C to 50° C, or from 35°C to 60° C. The Tg is measured on the dry polymer using standard techniques, such as differential scanning calorimetry ("DSC"), well known to persons skilled in the art. The Tg measurements of the polyesters are conducted using a "dry polymer," that is, a polymer sample in which adventitious or absorbed water is driven off by heating to polymer to a temperature of 200oC and allowing the sample to return to room temperature. Typically, the polyester is dried in the DSC apparatus by conducting a first thermal scan in which the sample is heated to a temperature above the water vaporization temperature, holding the sample at that temperature until the vaporization of the water absorbed in the polymer is complete (as indicated by an a large, broad endotherm), cooling the sample to room temperature, and then conducting a second thermal scan to obtain the Tg measurement.

The number average molecular weight (Mn) of the acetoacetate functionalized curable polyester resin I disclosed herein is not limited, and may be from 1,000 to 20,000, from 1,000 to 15,000, from 1,000 to 12,500, from 1,000 to 10,000, from 1,000 to 8,000, from 1,000 to 6,000, from 1,000 to 5,000, from 1,000 to 4000, from 1,000 to 3,000, from 1,000 to 2,500, from 1,000 to 2,250, or from 1,000 to 2,000, from 1,100 to 4000, from 1,100 to 3,000, from 1,100 to 2,500, from 1,100 to 2,250, or from 1,100 to 2,000 in each case g/mole. The Mn is measured by gel permeation chromatography (GPC) using polystyrene equivalent molecular weight.

The weight average molecular weight (Mw) of the acetoacetate functionalized curable polyester resin I can be from 1,000 to 100,000; from 1,500 to 50,000; and desirably is from 2,000 to 10,000 or from 2,500 to 5,000 g/mole. The polyester may be linear or branched.

This acetoacetate functionalized curable polyester resin I desirably has a low molecular weight, typically an Mn from 1000 to 5,000 to render it suitable for coating applications. Desirably, the molecular weight of the curable polyester resin (I) is not suitable for the fabrication of free standing films, sheets, and other shaped objects by extrusion, casting, blow molding, and other thermoforming processes commonly used for higher molecular weight thermoplastic polymers.

The acetoacetate functionalized curable polyester resin I desirably is not obtained with a compound having vinyl unsaturations. Additionally or in the alternative, the curable polyester (I) itself does not contain vinyl unsaturations.

Desirably, in any of the embodiments disclosed hereinto make the acetoacetate functionalized curable polyester resin, the (a)(i) diol includes 2,2-dimethyl-1,3-propanediol (neopentyl glycol); 1,2- cyclohexanedimethanol; 1,3-cyclohexanedimethanol; 1,4-cyclohexanedimethanol; 2-methyl-1,3-propanediol; TMCD; 2,2,4-trimethyl-1,3-pentanediol; hydroxypivalyl hydroxypivalate; 2-butyl-2-ethyl-1,3-propanediol; 1,4-butanediol; 1,6-hexanediol; or combinations thereof.

Desirably, in any of the embodiments disclosed hereinto make the acetoacetate functionalized curable polyester resin, the (a)(ii) polyhydroxyl compound having 3 or more hydroxyl groups include 1,1,1-trimethylol propane, 1,1,1-trimethylolethane, glycerin, pentaerythritol, or combinations thereof.

Desirably, in any of the embodiments disclosed hereinto make the acetoacetate functionalized curable polyester resin, the I(b) compounds include isophthalic acid (or dimethyl isophthalate), 1,4-cyclohexanedicarboxylic acid, 1,3-cyclohexanedicarboxylic acid, adipic acid; phthalic acid; or combinations thereof.

The acetoacetate functionalized curable polyester resin I can be prepared by any conventional process for the preparation of polyesters. For example, the polyester resin can be prepared by combining polyhydroxyl compounds (a) with the polycarboxyl compounds (b) in a reaction vessel under heat to form a reaction mixture comprising the curable polyester I in a batch or continuous process and in one or more stages, optionally with the continuous removal of distillates and applied vacuum during at least part of the residence time. Polyhydroxyl compounds (a) and polycarboxyl compounds (bi) are combined and reacted in at least one reactor at a temperature from 180-250 °C, optionally in the presence of an acid catalyst. Desirably, a distillate is removed from the reactor.

The process for the manufacture of the polyester resin can be batchwise or continuous. The reaction of the polyhydroxyl compounds (a) and the polycarboxyl compounds (b) may be carried out in a melt phase process using conventional polyester polymerization conditions. The polyhydroxyl compounds and polycarboxylic acid compounds are combined to form a reaction mixture, and the reaction mixture is reacted in an esterification reactor at a temperature from 180-250 °C. The esterification reaction many take place in one or more esterification reactors. The polyester composition can be made by a transesterification (ester interchange) reaction or by direct esterification. For example, polycarboxylic acid compounds (for direct esterification) or ester forms of the polycarboxylic acid compounds (for transesterification), and the polyhydroxyl compounds can be fed to an esterification reactor either in a combined stream, separate streams, or a combination of a combined and separate stream, and reacted at elevated temperatures, typically, from 180oC to 250oC. While temperatures in excess of 250°C can be employed, such as temperature up to 280°C, in many instances color bodies and degradation products start to form at temperatures exceeding 250°C. Desirably, the reaction mixture is reacted at any temperature within a range from 180oC to 230oC. In the esterification reactor, the temperature of the reaction mixture to form the polyester intermediate composition may be static or may be increased stepwise or continuously if desired.

It is desirable to start the reaction at a temperature below 210°C, or at 200°C or less, or even at 180°C or less, and increase the temperature over the total residence time of the reaction mixture for making the polyester intermediate composition in order to avoid generating more water by-product than the distillate collection system can efficiently remove. To assist driving the reaction of the polyhydroxyl component and acid component to completion, it is desirable to react 1.05 to 1.6, or 1.1-1.5, or 1.1-1.4 equivalents of polyhydroxyl compounds (a) to one equivalent of the polycarboxylic acid compounds (b). Desirably, a distillate is removed from the reactor. The esterification reactor should be equipped with, and the process for making the polyester intermediate composition operated with, a distillate collection system for removing esterification or ester-exchange vapor by-products since their removal will assist with shifting the equilibrium reaction to the formation of the ester. The typical by-products formed in esterification are water in direct esterification routes, alcohols in transesterification routes, along with other reaction by-products such as aldehydes and color bodies.

The method for the removal of reaction by-products is not limited. A common method for the removal of esterification reaction by-products is a vacuum system connected to the esterification reaction zone in the reactor with a direct contact spray condenser, which is useful when a vacuum is applied to the esterification reaction zone in the esterification reactor, or a distillation column that is packed or contains trays in vapor communication with the esterification vessel for the separation of water from other reaction by-products.

The process for making the polyester resin can be conducted under a pressure within a range of 0 Pa (0 psig) or atmospheric to 1378.95 kPa (200 psig), or from 0 Pa (0 psig) to 689.48 kPa (100 psig), or from 0 Pa (0 psig) to 275.79 kPa (40 psig). However, if desired, at least a portion or the entire residence time of the reaction to make the polyester composition can proceed under a vacuum, especially during polycondensation. If a vacuum is applied to only a portion of the residence time, it can be applied starting when at least 30%, or at least 50%, or at least 75%, or at least 80%, or at least 90% of the residence time for making the polyester resin. By applying a vacuum, the removal of water or alcohol condensate can be further enhanced, and the molecular weight Mn of the polyester can be increased. If a vacuum is applied, suitable pressures can range from 101.19 kPa (759 torr) down to 66.66 Pa (0.5 torr), or 79.99 kPa (600 torr) down to 66.66 Pa (0.5 torr), or 60 kPa (450 torr) down to 66.66 Pa (0.5 torr). Vacuum can be increased with the residence time of the reaction mixture. Alternatively or in addition to the application of a vacuum, the removal of the reaction by-products can be purged or swept with an inert gas during all or a portion of the reaction. An inert gas is any gas which does not cause unwanted reaction or product characteristics at reaction conditions. Suitable gases include, but are not limited to, carbon dioxide, argon, helium, and nitrogen.

At a point when a desired Mn of the polyester resin is achieved, the compound containing the beta-ketoacetate moiety can be added to the reaction mixture containing the polyester resin. As mentioned above, the amount of the compound having a beta-ketoacetate moiety added to a reaction vessel can be from 3 to 40, 3 to 30, 6 to 20, or 10 to 15 wt.% based on the weight of the reaction mixture the polyester resin is not first isolated or based on the weight of the polyester resin if isolated. Additionally or in the alternative, the amount of compound having a beta-ketoacetate moiety added to the polyester resin or reaction mixture is sufficient to consume at least 20%, or at least 30%, or at least 40%, or at least 50%, or at least 60%, or at least 70%, or at least 80%, or at least 90%, or at least 95%, or at least 99% of the hydroxyl groups on the polyester resin. Desirable, at least 70%, or at least 80%, or at least 90%, or at least 95% of the hydroxyl groups are consumed.

The reaction for making the polyester resin does not have to be discontinued after the desired molecular weight is achieved, and can be continued with the addition of the compound having the beta-ketoacetate moiety. Alternatively the reaction can be discontinued, the polyester resin solidified, and subsequently re-melted and reacted with the compound having the beta-ketoacetate moiety. If the compound having the beta-ketoacetate moiety is added to a reaction mixture containing the polyester resin without first isolating and solidifying the polyester resin, it is desirably added when at least 80%, or at least 90%, or at least 95% of the actual Mn of the curable poleyster resin is obtained. Adding diketene or the beta-ketoacetate containing compound to a reaction mixture before the target Mn of the polyester resin is obtained results in the consumption of diketene or the beta-ketoacetate containing compound with free diols/polyhydroxyl compounds that have not yet reacted. Accordingly, it is desirable to add the compound having the beta-ketoacetate moiety to a polyester resin composition having less than 1 wt.%, or less than 0.5 wt.%, or less than 0.1 wt.%, or less than 0.01 wt.% unreacted diols (a)(i) or polyhdroxyl compounds (a)(ii), based on the weight of the polyester rresin composition or the reaction mixture..

Desirably, the process disclosed hereinmelts a polyester resin and combines the molten polyester resin with the compound containing the beta-ketoacetate moiety to form a reaction mixture in a reaction zone. The reaction mixture can be reacted in the presence of a catalyst at a temperature ranging from 100 to 150°C, desirably from 120 to 140°C. The pressure in the reaction zone can be from 0 Pa (0 psig) or atmospheric to 1378.95 kPa (200 psig), or from 0 Pa (0 psig) to 689.48 kPa (100 psig), or from 0 Pa (0 psig) to 275.79 kpa (40 psig). However, if desired, at least a portion or the entire residence time of the reaction to make the curable polyester composition can proceed under a vacuum, such as from 101.19 kPa (759 torr) down to 66.66 Pa (0.5 torr), or 79.99 kPa (600 torr) down to 66.66 Pa (0.5 torr), or 60 kPa (450 torr) down to 66.66 Pa (0.5 torr). Vacuum can be increased with the residence time of the reaction mixture. Alternatively or in addition to the application of a vacuum, the removal of the reaction by-products can be purged or swept with an inert gas during all or a portion of the reaction. An inert gas is any gas which does not cause unwanted reaction or product characteristics at reaction conditions. Suitable gases include, but are not limited to, carbon dioxide, argon, helium, and nitrogen. As with the esterification vessel used to make the polyester resin, the reactor used to make the curable polyester can be equipped with a means for removing the distillate alcohols continuously during the course of at least a portion of the reaction.

The catalyst can be an acid catalyst. A typical catalyst is an organometallic acid catalyst, such as, for example, a carboxylate of tin, e.g. butylstannoic acid

The acetoacetate functionalized curable polyester resin can be made in the same vessel as the vessel used to make the polyester resin.

Each of the esterification vessels can be agitated if desired to assist with the mass transfer of reactants and disengagement of reaction by-products.

The reaction to make the polyester is facilitated by reacting the polyhydroxyl compounds (a) and the polycarboxylic acid compounds (b) in the presence of appropriate catalysts such as, for example, alkoxy titanium compounds, alkali metal hydroxides and alcoholates, salts of organic carboxylic acids, alkyl tin compounds, metal oxides, and other metal carboxylates or benzoates such as zinc, manganese, or magnesium acetates or benzoates. A typical catalyst is an organometallic acid catalyst, such as, for example, a carboxylate of tin, e.g. butylstannoic acid. The amount of the catalyst added may be determined by routine experimentation as understood by those skilled in the art. The catalyst can be added in amounts ranging from 0.01 to 1.0 weight percent, based on the total weight of the reactants.

In a continuous process, the polycarboxylic acid compounds and the polyhydroxyl compounds are continuously fed to the esterification reactor, the polyester resin composition is continuously withdrawn from the esterification reactor and fed to a second esterification reactor continuously to form the curable polyester composition, and the curable polyester composition is continuously withdrawn from the second esterification reactor.

Additives can be added to the reactor or reaction mixture to enhance the performance properties of the curable polyester polymer. For example, crystallization aids, impact modifiers, surface lubricants, denesting agents, stabilizers, antioxidants, ultraviolet light absorbing agents, metal deactivators, colorants, nucleating agents, acetaldehyde lowering compounds, reheat rate enhancing aids such as elemental antimony or reduced antimony or reducing agents to form such species in situ, silicon carbide, carbon black, graphite, activated carbon, black iron oxide, and red iron oxide, sticky bottle additives such as talc, and fillers can be included. All of these additives and many others and their use are well known in the art and do not require extensive discussion. Any of these compounds can be used in the present composition.

The thermosetting composition desirably contains (I) a acetoacetate functionalized curable polyester resin in an amount of 5 to 95, or 10 to 90, or 20 to 85, or 30 to 80, or 35 to 75 weight % based on the total weight of (I) and (II). Desirably, the thermosetting composition desirably contains (I) a acetoacetate functionalized curable polyester resin in an amount of 30 o 80 weight %, or 35 to 75, or 45-60 wt.% based on the weight of (I) and (II).

There is also provided a solvent containing (as distinguished from an aqueous based coating) coating composition, comprising:
I. the acetoacetate functionalized curable polyester resin disclosed herein,
II. a crosslinker comprising a resole phenolic resin, and
III. an organic solvent.

Suitable organic solvents for the solvent-based coating composition include xylene, ketones (for example, methyl amyl ketone), 2-butoxyethanol, ethyl-3-ethoxypropionate, toluene, butanol, cyclopentanone, cyclohexanone, ethyl acetate, butyl acetate, and other volatile inert solvents typically used in industrial baking (i.e., thermosetting) enamels, mineral spirits, naptha, toluene, acetone, methyl ethyl ketone, methyl isoamyl ketone, isobutyl acetate, t-butyl acetate, n-propyl acetate, isopropyl acetate, methyl acetate, ethanol, n-propanol, isopropanol, sec-butanol, isobutanol, ethylene glycol monobutyl ether, propylene glycol n-butyl ether, propylene glycol methyl ether, propylene glycol monopropyl ether, dipropylene glycol methyl ether, diethylene glycol monobutyl ether, trimethylpentanediol mono-isobutyrate, ethylene glycol mono-octyl ether, diacetone alcohol, 2,2,4-trimethyl-1,3-pentanediol monoisobutyrate (available commercially from Eastman Chemical Company under the trademark TEXANOL™), or combinations thereof. The coating composition also may comprise reactive solvents such as, for example, diallyl phthalate, SANTOLINK™ XI-100 polyglycidyl allyl ether (available from Cytec), and others as described, for example, in U.S. Patent Nos 5,349,026 and 5,371,148.

The amount of solvent (other than water) is desirably at least 20 wt.%, or at least 25 wt.%, or at least 30 wt.%, or at least 35 wt.%, or at least 40 wt.%, or at least 45 wt.%, or at least 50 wt.%, or at least 55 wt.% based on the weight of the solvent containing coating composition. Additionally or in the alternative, the amount of organic solvent can be up to 85 wt.% based on the weight of the coating composition. Solvent containing coating compositions desirably contain 10 wt.% or less, or 8 wt.% or less, or 5 wt.% or less, or 3 wt.% or less water, based on the weight of the coating composition.

The solvent containing composition is desirably a solution in which the curable polyester is dissolved or solubilized in the solvent. While other solids can be present in the solvent containing composition (and typically are in a fully formulated or pigmented coating composition), the solvent containing composition desirably has less than 3 wt.% curable polyester resin as solid particles, or less than 1 wt.% curable polyester resin as solid particles, or not more than 0.5 wt.% polyester resin as solid particles, based on the total weight of the curable polyester (a).

There is further provided an aqueous dispersion, comprising:
I. the acetoacetate functionalized curable polyester resin disclosed hereinat least partially neutralized with a neutralizing agent,
II. a crosslinker comprising a resole phenolic resin, and
III. water.

The amount of water is desirably at least 20 wt.%, or at least 25 wt.%, or at least 30 wt.%, or at least 35 wt.%, or at least 40 wt.%, or at least 45 wt.%, or at least 50 wt.%, or at least 55 wt.%, or at least 60 wt.% based on the weight of the aqueous dispersion.

The neutralizing agent may be an amine or an inorganic base. Typical amines include ammonia, trimethylamine, diethylamine, monoethanolamine, monoisopropanolamine, morpholine, ethanolamine, diethanolamine, triethanolamine, N,N-dimethylethanolamine, N, N-diethylethanolamine, and N-methyldiethanolamine.

Typical inorganic bases include bases derived from alkali metals and alkaline earth metals such as, for example, sodium, potassium, magnesium, calcium, and other basic metal compounds. Suitable bases from this first class of bases useful in the present disclosure include, but are not limited to, sodium oxide, potassium oxide, magnesium oxide, calcium oxide, sodium hydroxide, potassium hydroxide, magnesium hydroxide, calcium hydroxide, sodium carbonate, potassium carbonate, sodium bicarbonate, potassium bicarbonate, calcium carbonate, magnesium bicarbonate, alkali metal borate compounds and their hydrates, sodium phosphate, potassium biphosphate, and sodium pyrophosphate.

The aqueous dispersion containing the acetoacetate functionalized curable polyester resin may and desirably further comprise an organic co-solvent. Suitable co-solvents include ethanol, n-propanol, isopropanol, n-butanol, sec-butanol, isobutanol, ethylene glycol monobutyl ether, propylene glycol n-butyl ether, propylene glycol methyl ether, propylene glycol monopropyl ether, dipropylene glycol methyl ether, diacetone alcohol, and other water-miscible solvents. If an organic co-solvent is used, the amount is desirably 40 wt.% or less, or 30 wt.% or less, or 15 wt.% or less, or 10 wt.% or 5 wt.% less based on the weight of the aqueous composition, and at least 1 wt.%, or at least 3 wt.% based on the weight of the aqueous composition.

Aqueous dispersions containing the acetoacetate functionalized curable polyester resin are typically prepared by dispersing the curable polyester resins with water in the presence of organic co-solvent(s) (e.g. at least 1 or 3 wt.% and up to 15 wt.% based on the weight of the polyester polymers), at a temperature ranging from 60 to 95°C under ambient pressure. The dispersing process may be carried out either by gradually adding the resin to the heated mixture of water, the neutralizing agent, and the co-solvent(s) or by gradually adding water and the neutralizing agent to the heated mixture of the resin and the co-solvent(s). The former method is preferred for resins with a high Tg (e.g. >60°C), which can be pulverized, for example, by using a blender and subsequently added to the heated water and the neutralizing agent. For resins with a lower Tg, it is preferred to add water and the neutralizing agent to the heated resin mixture containing the co-solvent. After the completion of adding either resin or water, the stirring is allowed to continue until a homogeneous dispersion is obtained. The process typically takes one or several hours. It is intended for this terminology to include conditions where the polyester is dissolved to form a true solution as well as those where the polyester is dispersed within the aqueous medium. Often, due to the statistical nature of polyester compositions, it is possible to have a soluble fraction and a dispersed fraction when a single polyester sample is placed in an aqueous medium.

Desirably, the dispersion contains up to 80 wt.%, or up to 60 wt.%, or up to 50 wt.%, or up to 40 wt.% curable polyester resin. Suitable ranges of curable polyester resin in wt.% based on the weight of the dispersion include 3-80, or 5-80, or 10-80, or 5-80, or 10-80, or 15-80, or 20-80, or 25-80, or 30-80, or 3-60, or 5-60, or 10-60, or 5-60, or 10-60, or 15-60, or 20-60, or 25-60, or 30-60, or 3-50, or 5-50, or 10-50, or 5-50, or 10-50, or 15-50, or 20-50, or 25-50, or 30-50, or 3-45, or 5-45, or 10-45, or 5-45, or 10-45, or 15-45, or 20-45, or 25-45, or 30-45.

Acetoacetate functionalized curable polyester resins having glass transition temperature (Tg) greater than 50°C are suitable for powder coating application. The acetoacetate functionalized curable polyester resin desirably comprises TACD residues, thereby imparting to the resin a higher Tg.

Thus, there is further provided a curable powder coating composition comprising:
I. the acetoacetate functionalized curable polyester resin having a Tg greater than 50 °C and,
II. a crosslinker composition comprising a resole phenolic resin.

The resole phenolic resins used in the thermosetting compositions containing the acetoacetate functionalized curable polyester resin are described above in connection with the thermosetting compositions containing the unsaturated curable polyester resin. However, the desirable phenolic crosslinking agents for thermosetting compositions containing the acetoacetate functionalized curable polyester resins are resole type phenolic resins containing the residues of at least 50 wt.% or at least 60 wt.% or at least 70 wt.% or at least 80 wt.% or at least 90 wt.% un-substituted phenol and/or meta-substituted phenol, based on the total phenolic residues of the crosslinker resin.

### Thermosetting Coating Compositions Containing Un-substituted Or Meta-Substituted Phenolic Resins

There is also provided a thermosetting coating composition that contains a particular resole resin that exhibits good reactivity with curable polyester resins. In particular, there is provided a thermosetting composition comprising:
I) a curable polyester resin comprising the residues of
   a) polyhydroxyl compounds comprising:
      (i) diol compounds in an amount of 70 mole % - 100 mole %; and
      (ii) polyhydroxyl compounds having 3 or more hydroxyl groups in an amount of 0 to 30 mole %;
      wherein the mole % is based on 100% of all moles of polyhydroxyl compounds a); and
   b) polycarboxyl compounds comprising polycarboxylic acid compounds, derivatives of polycarboxylic acid compounds, the anhydrides of polycarboxylic acids, or combinations thereof; and
II) a crosslinker composition comprising a resole phenolic resin, said phenolic resin containing the residues of un-substituted phenol and/or meta-substituted phenols.

These particular resole resins exhibit good reactivity with any of the above mentioned modified curable polyester resins, as well as other or unmodified conventional curable polyester resins.

The crosslinker composition contains resole phenolic resins. Desirably, the amount of resole phenolic resin is at least 50 wt.% or greater than 60 wt.% or greater than 70 wt.% or greater than 80 wt.% or greater than 90 wt.% resole phenolic resin, based on the weight of all cross-linker compounds.

The resole phenolic resin present in the crosslinking composition contains methylol groups on the phenolic rings. Phenolic resins having methylol functionalities are referred to as resole type phenolic resins. As is known in the art, the methylol group (--CH2OH) may be etherated with an alcohol and present as --CH2OR, wherein R is C1-C8 alkyl group, in order to improve resin properties such as storage stability and compatibility. For purpose of the description, the term "methylol" used herein includes both-CH2OH and --CH2OR and an un-substituted methylol group is CH2OH. Said methylol groups (either --CH2OH or --CH2OR) are the end groups attached to the resole resins. The methylol groups are formed during the resole resin synthesis and can further react with another molecule to form ether or methylene linkages leading to macromolecules.

The phenolic resin contains the residues of un-substituted phenols or meta-substituted phenols. When starting with phenol or meta-substituted phenols to make a resole, the para and ortho positions are both available for bridging reactions to form a branched network with final methylol end groups on the resin being in the para or ortho positions relative to the phenolic hydroxyl group. To make the phenolic resole, a phenol composition is used as a starting material. The phenol composition contains un-substituted and/or meta-substituted phenols. The amount of un-substituted, meta-substituted, or a combination of the two, that is present in the phenol compositions used as a reactant to make the phenolic resole resin, is at least 50 wt.%, or at least 60 wt.%, or at least 70 wt.%, or at least 75 wt.%, or at least 80 wt.%, or at least 85 wt.%, or at least 90 wt.%, or at least 95 wt.%, or at least 98 wt.%, based on the weight of the phenol composition used as a reactant starting material.

The phenol composition is reacted with a reactive compound such as an aldehyde at an aldehyde:phenol molar ratio (using aldehyde as an example) of greater than 1:1, or at least 1.05:1, or at least 1.1:1, or at least 1.2:1, or at least 1.25:1, or at least 1.3:1, or at least 1.35:1, or at least 1.4:1, or at least 1.45:1, or at least 1.5:1, or at least 1.55:1, or at least 1.6:1, or at least 1.65:1, or at least 1.7:1, or at least 1.75:1, or at least 1.8:1, or at least 1.85:1, or at least 1.9:1, or at least 1.95:1, or at least 2:1. The upper amount of aldehyde is not limited and can be as high as 30:1, but generally is up to 5:1, or up to 4:1, or up to 3:1, or up to 2.5:1. Typically, the ratio of aldehyde:phenol is at least 1.2:1 or more, or 1.4:1 or more or 1.5:1 or more, and typically up to 3:1. Desirably, these ratios also apply to the aldehyde/un-substituted phenol or meta-substituted phenol ratio.

The resole phenolic resin can contain an average of at least 0.3, or at least 0.4, or at least 0.45, or at least 0.5, or at least 0.6, or at least 0.8, or at least 0.9 methylol groups per one phenolic hydroxyl group, and "methylol" includes both --CH2OH and --CH2OR.

The phenolic resin obtained by the condensation of phenols with aldehydes of the general formula (RCHO)n, where R is hydrogen or a hydrocarbon group having 1 to 8 carbon atoms and n is 1, 2, or 3. Specific examples include formaldehyde, paraldehyde, acetaldehyde, glyoxal, propionaldehyde, furfuraldehyde, or benzaldehyde. Desirably, the phenolic resin is the reaction product of phenols with formaldehyde.

At least a part of the crosslinker in (ii) comprises a resole type phenolic resin that is prepared by reacting either un-substituted phenol or meta-substituted phenol or a combination thereof with an aldehyde. The un-substituted phenol is phenol (C6H5OH). Examples of meta-substituted phenols include m-cresol, m-ethylphenol, m-propylphenol, m-butylphenol, m-octylphenol, m-alkylphenol, m-phenylphenol, m-alkoxyphenol, 3,5-xylenol, 3,5-diethyl phenol, 3,5-dibutyl phenol, 3,5-dialkylphenol, 3,5-dicyclohexyl phenol, 3,5-dimethoxy phenol, and 3-alkyl-5-alkyoxy phenol.

Although other substituted phenol compounds can be used in combination with said un-substituted phenols or meta-substituted phenols for making phenolic resins, it is desirable that at least 50%, or at least 70%, or at least 80%, or at least 90%, or at least 95%, or at least 98%, or at least 100%of the phenolic compounds used to make the resole resin are un-substituted phenol or meta-substituted phenol.

Examples of suitable commercial phenolic resins include, but are not limited to, PHENODUR® PR 516/60B (based on cresol and formaldehyde) available from Allnex and PHENODUR® PR 371/70B (based on un-substituted phenol and formaldehyde) also available from Allnex.

The phenolic resins are desirably heat curable. The phenolic resin is desirably not made by the addition of bisphenol A, F, or S (collectively "BPA").

The resole is desirably of the type that is soluble in alcohol or water. The resole resin can be liquid at 25°C. The resole resin can have a weight average molecular weight from 200 to 2000, generally from 300 to 1000, or from 400 to 800, or from 500 to 600.

This resole resin obtained with unsubstituted or meta-substituted phenols is reactive and cures well with a variety of curable polyester resins. Suitable types of curable polyester resins include any of those mentioned above; that is, those having:
(i) an acid number ranging from 20 to 120 mg KOH/g, a hydroxyl number ranging from greater than 0 to 100 mg KOH/g, and an acid number:hydroxyl (AN:OH) number ratio of at least 0.5:1; or those having
(ii) residues of an α,β-unsaturated polycarboxylic acid compound, said α,β-unsaturated polycarboxylic acid compound having at least two carboxylic acid groups or at least one anhydride group, and having at least one unsaturation that is in the α,β position relative to a carbonyl group and is not located on an aromatic ring; or those having
(iii) beta-ketoacetate moieties without vinyl unsaturation.

In addition to any of these curable polyesters, the resole resin obtained with unsubstituted or meta-substituted phenols is reactive with and cures well with other types of curable polyester resins that have -OH or - COOH groups or both. These curable polyesters have a cumulative acid number and hydroxyl number in a range of 30 to 200 mgKOH/g, or 40 to 150 mgKOH/g, or 50-100 mgKOH/g. The acid number or hydroxyl number can be zero, provided that the cumulative number is at least 30 mgKOH/g. These curable polyesters can comprise the residues of:
a) polyhydroxyl compounds comprising:
   (i) diol compounds in an amount of 70 mole % - 100 mole %; and
   (ii) polyhydroxyl compounds having 3 or more hydroxyl groups in an amount of 0 to 30 mole %;
   wherein the mole % is based on 100% of all moles of polyhydroxyl compounds a); and
b) polycarboxyl compounds comprising polycarboxylic acid compounds, derivatives of polycarboxylic acid compounds, the anhydrides of polycarboxylic acids, or combinations thereof.

There is also provided a solvent containing (as distinguished from an aqueous based coating) coating composition, comprising:
I. any of the above mentioned curable polyester resins,
II. a crosslinker composition comprising a resole phenolic resin, said phenolic resin containing the residues of un-substituted phenol and/or meta-substituted phenols; and
III. an organic solvent.

Suitable organic solvents for the solvent-based coating composition include xylene, ketones (for example, methyl amyl ketone), 2-butoxyethanol, ethyl-3-ethoxypropionate, toluene, butanol, cyclopentanone, cyclohexanone, ethyl acetate, butyl acetate, and other volatile inert solvents typically used in industrial baking (i.e., thermosetting) enamels, mineral spirits, naptha, toluene, acetone, methyl ethyl ketone, methyl isoamyl ketone, isobutyl acetate, t-butyl acetate, n-propyl acetate, isopropyl acetate, methyl acetate, ethanol, n-propanol, isopropanol, sec-butanol, isobutanol, ethylene glycol monobutyl ether, propylene glycol n-butyl ether, propylene glycol methyl ether, propylene glycol monopropyl ether, dipropylene glycol methyl ether, diethylene glycol monobutyl ether, trimethylpentanediol mono-isobutyrate, ethylene glycol mono-octyl ether, diacetone alcohol, 2,2,4-trimethyl-1,3-pentanediol monoisobutyrate (available commercially from Eastman Chemical Company under the trademark TEXANOL™), or combinations thereof. The coating composition also may comprise reactive solvents such as, for example, diallyl phthalate, SANTOLINK™ XI-100 polyglycidyl allyl ether (available from Cytec), and others as described, for example, in U.S. Patent Nos 5,349,026 and 5,371,148.

The amount of solvent (other than water) is desirably at least 20 wt.%, or at least 25 wt.%, or at least 30 wt.%, or at least 35 wt.%, or at least 40 wt.%, or at least 45 wt.%, or at least 50 wt.%, or at least 55 wt.% based on the weight of the solvent containing coating composition. Additionally or in the alternative, the amount of organic solvent can be up to 85 wt.% based on the weight of the coating composition. Solvent containing coating compositions desirably contain 10 wt.% or less, or 8 wt.% or less, or 5 wt.% or less, or 3 wt.% or less water, based on the weight of the coating composition.

A coating made with the solvent borne coating compositions containing the crosslinker composition comprising a resole phenolic resin, said phenolic resin containing the residues of un-substituted phenol and/or meta-substituted phenols, is capable of having solvent resistance of at least 50, at least 100, at least 150, at least 200, or at least 300, and even at least 500, according to the double rub MEK test described in the examples below.

There is further provided an aqueous dispersion, comprising:
I. any of the above mentioned curable polyester resins at least partially neutralized with a neutralizing agent,
II. a crosslinker composition comprising a resole phenolic resin, said phenolic resin containing the residues of un-substituted phenol and/or meta-substituted phenols; and
III. water.

The amount of water is desirably at least 20 wt.%, or at least 25 wt.%, or at least 30 wt.%, or at least 35 wt.%, or at least 40 wt.%, or at least 45 wt.%, or at least 50 wt.%, or at least 55 wt.%, or at least 60 wt.% based on the weight of the aqueous dispersion.

The neutralizing agent may be an amine or an inorganic base. Typical amines include ammonia, trimethylamine, diethylamine, monoethanolamine, monoisopropanolamine, morpholine, ethanolamine, diethanolamine, triethanolamine, N,N-dimethylethanolamine, N, N-diethylethanolamine, and N-methyldiethanolamine.

Typical inorganic bases include bases derived from alkali metals and alkaline earth metals such as, for example, sodium, potassium, magnesium, calcium, and other basic metal compounds. Suitable bases from this first class of bases useful in the present disclosure include, but are not limited to, sodium oxide, potassium oxide, magnesium oxide, calcium oxide, sodium hydroxide, potassium hydroxide, magnesium hydroxide, calcium hydroxide, sodium carbonate, potassium carbonate, sodium bicarbonate, potassium bicarbonate, calcium carbonate, magnesium bicarbonate, alkali metal borate compounds and their hydrates, sodium phosphate, potassium biphosphate, and sodium pyrophosphate.

The aqueous dispersion may and desirably further comprises an organic co-solvent. Suitable co-solvents include ethanol, n-propanol, isopropanol, n-butanol, sec-butanol, isobutanol, ethylene glycol monobutyl ether, propylene glycol n-butyl ether, propylene glycol methyl ether, propylene glycol monopropyl ether, dipropylene glycol methyl ether, diacetone alcohol, and other water-miscible solvents. If an organic co-solvent is used, the amount is desirably 40 wt.% or less, or 30 wt.% or less, or 15 wt.% or less, or 10 wt.% or 5 wt.% less based on the weight of the aqueous composition, and at least 1 wt.%, or at least 3 wt.% based on the weight of the aqueous composition.

Aqueous dispersions containing the curable polyester resin are typically prepared by dispersing the curable polyester resins with water in the presence of organic co-solvent(s) (e.g. at least 1 or 3 wt.% and up to 15 wt.% based on the weight of the polyester polymers), at a temperature ranging from 60 to 95°C under ambient pressure. The dispersing process may be carried out either by gradually adding the resin to the heated mixture of water, the neutralizing agent, and the co-solvent(s) or by gradually adding water and the neutralizing agent to the heated mixture of the resin and the co-solvent(s). The former method is preferred for resins with a high Tg (e.g. >60°C), which can be pulverized, for example, by using a blender and subsequently added to the heated water and the neutralizing agent. For resins with a lower Tg, it is preferred to add water and the neutralizing agent to the heated resin mixture containing the co-solvent. After the completion of adding either resin or water, the stirring is allowed to continue until a homogeneous dispersion is obtained. The process typically takes one or several hours. It is intended for this terminology to include conditions where the polyester is dissolved to form a true solution as well as those where the polyester is dispersed within the aqueous medium. Often, due to the statistical nature of polyester compositions, it is possible to have a soluble fraction and a dispersed fraction when a single polyester sample is placed in an aqueous medium.

Desirably, the dispersion contains up to 80 wt.%, or up to 60 wt.%, or up to 50 wt.%, or up to 40 wt.% curable polyester resin. Suitable ranges of curable polyester resin in wt.% based on the weight of the dispersion include 3-80, or 5-80, or 10-80, or 5-80, or 10-80, or 15-80, or 20-80, or 25-80, or 30-80, or 3-60, or 5-60, or 10-60, or 5-60, or 10-60, or 15-60, or 20-60, or 25-60, or 30-60, or 3-50, or 5-50, or 10-50, or 5-50, or 10-50, or 15-50, or 20-50, or 25-50, or 30-50, or 3-45, or 5-45, or 10-45, or 5-45, or 10-45, or 15-45, or 20-45, or 25-45, or 30-45.

There is further provided a curable powder coating composition comprising:
I. any of the above mentioned curable polyester resins having a Tg greater than 50 °C and,
II. a crosslinker composition comprising a resole phenolic resin, said phenolic resin containing the residues of un-substituted phenol and/or meta-substituted phenols.

Any of the resole phenolic resins described above with respect to the aqueous or solvent borne coatings are useful for powder coatings.

### Other Ingredients Useful In Any Of The Thermosetting Compositions

In any of the thermosetting compositions containing any curable polyester resin, including the acetoacetate functionalized curable polyester resin, the unsaturated polyester resin, of the acid modified curable polyester resin, crosslinking compounds other than the phenolic resole resins can be used in combination with the phenolic resins. These include the other types of phenolic resins, or amino, epoxide, or isocyanate based crosslinkers. The amino resin crosslinker (or cross-linking agent) can be a melamine-formaldehyde type cross-linking agent, i.e., a cross-linking agent having a plurality of --N(CH2OR3)2 functional groups, wherein R3 is C1 -C4 alkyl, preferably methyl. The amino cross-linking agent may also be a modified melamine-formaldehyde type resin such as toluene sulfonamide modified melamine-formaldehyde resins.

In general, the amino cross-linking agent may be selected from compounds of the following formulae, wherein R³ is independently C₁ -C₄ alkyl:

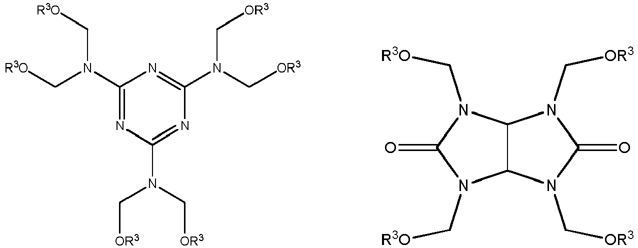

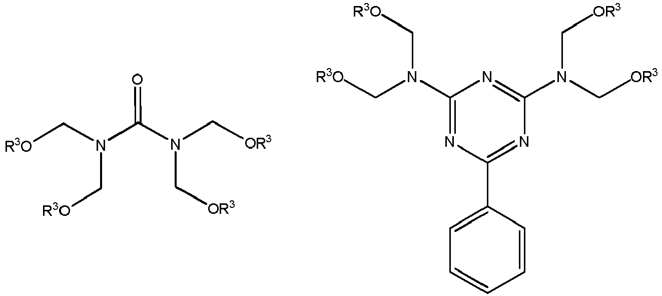

The amino containing cross-linking agents are desirably hexamethoxymethylmelamine, tetramethoxymethylbenzo-guanamine, tetramethoxymethylurea, and mixed butoxy/methoxy substituted melamines. Alternatively, a toluene sulfonamide methylated melaminformaldehyde resin powder may be utilized as a cross-linking agent.

The crosslinking agent may also be blocked or non-blocked isocyanate type. Examples of suitable isocyanate crosslinking agents include, but are not limited to, 1,6-hexamethylene diisocyanate, methylene bis (4-cyclohexyl isocyanate), isophorone diisocyanate, 2,4-toluene diisocyanate, and Bayhydur® 302 (BAYER MaterialScience).

The crosslinking agent can be an epoxidized phenolic resin type. An example is the reaction product of epichlorohydrin and phenolformaldehyde novolac such as D.E.N.- 431, -438, -439, or D.E.R. 354 available from Dow Chemical Company.

In the case of thermosetting powder coating compositions, the cross-linking agents can be cross-linking compounds with epoxy groups such as triglycidyl isocyanurate. Desirable epoxy functional compounds generally have a molecular weight of 300 to 4000, and have approximately 0.05 to 0.99 epoxy groups per 100 g of resin (i.e., 100-2000 weight per epoxy (WPE)). Such resins are widely known and are commercially-available under EPON™ trade name available from MOMENTIVE.

Additionally, the present inventors have surprisingly found that when a combination of resole phenolic resin and amino resin is used for curing, the resulting cured coating films exhibit much less color than those with only phenolic resins as the crosslinker. Thus, there is further provided a crosslinking system comprising a resole phenolic resin and an amino resin.

Desirably, in all the types of thermosetting compositions, the cross-linker composition contains greater than 50 wt.% or greater than 60 wt.% or greater than 70 wt.% or greater than 80 wt.% or greater than 90 wt.% resole phenolic resin, based on the weight of the cross-linker composition. In addition to or in the alternative, the remainder of the cross-linking compounds in the cross-linking composition, if any, are amine based crosslinking compounds as described above.

Any of the thermosetting compositions of the invention can also include one or more cross-linking catalysts. Representative crosslinking catalysts include from carboxylic acids, sulfonic acids, tertiary amines, tertiary phosphines, tin compounds, or combinations of these compounds. Some specific examples of crosslinking catalysts include p-toluenesulfonic acid, the NACURE™ 155, 5076, and 1051 catalysts sold by King Industries, BYK 450, 470, available from BYK-Chemie U.S.A., methyl tolyl sulfonimide, p-toluenesulfonic acid, dodecylbenzene sulfonic acid, dinonylnaphthalene sulfonic acid, and dinonylnaphthalene disulfonic acid, benzoic acid, triphenylphosphine, dibutyltindilaurate, and dibutyltindiacetate.

The crosslinking catalyst can depend on the type of crosslinker that is used in the coating composition. For example, the crosslinker can comprise an epoxide, and the crosslinking catalyst can comprise at least one compound chosen from p-toluenesulfonic acid, benzoic acid, tertiary amines, and triphenylphosphine. In another example, the crosslinker can comprise a melamine or "amino" crosslinker and the crosslinking catalyst can comprise p-toluenesulfonic acid, unblocked and blocked dodecylbenzene sulfonic (abbreviated herein as "DDBSA"), dinonylnaphthalene sulfonic acid (abbreviated herein as "DNNSA") and dinonylnaphthalene disulfonic acid (abbreviated herein as "DNNDSA"). Some of these catalysts are available commercially under trademarks such as, for example, NACURE™ 155, 5076, 1051, and 5225 (available from King Industries), BYK-CATALYSTS™ (available from BYK-Chemie USA), and CYCAT™ catalysts (available from Cytec Surface Specialties). The coating compositions of the invention can comprise one or more isocyanate crosslinking catalysts such as, for example, FASCAT™ 4202 (dibutyltindilaurate), FASCAT™ 4200 (dibutyltindiacetate, both available from Arkema), DABCO™ T-12 (available from Air Products) and K-KAT™ 348, 4205, 5218, XC-6212™ non-tin catalysts (available from King Industries), and tertiary amines.

The thermosetting composition can contain an acid or base catalyst in an amount ranging from 0.1 to 2 weight %, based on the total weight of any of the aforementioned curable polyester resins and the crosslinker composition.

The compositions of the invention can also contain one or more leveling, rheology, and flow control agents such as silicones, fluorocarbons or cellulosics; flatting agents; pigment wetting and dispersing agents; surfactants; ultraviolet (UV) absorbers; UV light stabilizers; tinting pigments; defoaming and antifoaming agents; anti-settling, anti-sag and bodying agents; anti-skinning agents; anti-flooding and anti-floating agents; fungicides and mildewicides; corrosion inhibitors; thickening agents; or coalescing agents. Specific examples of such additives can be found in Raw Materials Index, published by the National Paint & Coatings Association, 1500 Rhode Island Avenue, N.W., Washington, D.C. 20005.

Examples of flatting agents include, but are not limited to, synthetic silica, available from the Davison Chemical Division of W. R. Grace & Company as SYLOID™; polypropylene, available from Hercules Inc., as HERCOFLAT™; and synthetic silicate, available from J. M. Huber Corporation, as ZEOLEX™.

Examples of dispersing agents include, but are not limited to, sodium bis(tridecyl) sulfosuccinate, di(2-ethyl hexyl) sodium sulfosuccinate, sodium dihexylsulfosuccinate, sodium dicyclohexyl sulfosuccinate, diamyl sodium sulfosuccinate, sodium dusobutyl sulfosuccinate, disodium isodecyl sulfosuccinate, disodium ethoxylated alcohol half ester of sulfosuccinic acid, disodium alkyl amido polyethoxy sulfosuccinate, tetra-sodium N-(1,2-dicarboxyethyl)-N-octadecyl sulfosuccinamate, disodium N-octasulfosuccinamate, sulfated ethoxylated nonylphenol, and 2-amino-2-methyl-1-propanol.

Examples of viscosity, suspension, and flow control agents include polyaminoamide phosphate, high molecular weight carboxylic acid salts of polyamine amides, and alkylene amine salts of an unsaturated fatty acid, all available from BYK Chemie USA as ANTI TERRA™. Further examples include, but are not limited to, polysiloxane copolymers, polyacrylate solution, cellulose esters, hydroxyethyl cellulose, hydroxypropyl cellulose, polyamide wax, polyolefin wax, hydroxypropyl methyl cellulose, and polyethylene oxide.

Several proprietary antifoaming agents are commercially available and include, but are not limited to, BUBREAK™, available from Buckman Laboratories Inc., BYK™, available from BYK Chemie, U.S.A., FOAMASTER™ and NOPCO™, available from Henkel Corporation Coating Chemicals, DREWPLUS™, available from the Drew Industrial Division of Ashland Chemical Company, TROYSOL™ and TROYKYD™, available from Troy Chemical Corporation, and SAG™, available from Union Carbide Corporation.

Some examples of UV absorbers and UV light stabilizers are substituted benzophenone, substituted benzotriazoles, hindered amines, and hindered benzoates, available from Cytec Specialty Chemicals as CYASORB® UV, and available from Ciba Specialty Chemicals as TINUVIN®; diethyl-3acetyl-4-hydroxy-benzyl-phosphonate, 4-dodecyloxy-2-hydroxy benzophenone, and resorcinol monobenzoate.

The coating composition may also comprise at least one pigment. Typically, the pigment is present in an amount of 20 to 60 weight percent, based on the total weight of the composition. Examples of pigments include those generally recognized by persons of ordinary skill in the art of surface coatings. For example, the pigment may be a typical organic or inorganic pigment, especially those set forth in the Colour Index, 3rd ed., 2nd Rev., 1982, published by the Society of Dyers and Colourists in association with the American Association of Textile Chemists and Colorists. Other examples of suitable pigments include titanium dioxide, barytes, clay, calcium carbonate, CI Pigment White 6 (titanium dioxide), CI Pigment Red 101 (red iron oxide), CI Pigment Yellow 42, CI Pigment Blue 15,15:1,15:2,15:3,15:4 (copper phthalocyanines); CI Pigment Red 49:1 and CI Pigment Red 57:1. Colorants such as, for example, phthalocyanine blue, molybdate orange, or carbon black also may be added to the coating composition. For example, the solventborne, thermosetting coating formulations can contain titanium dioxide as the pigment.

After formulation, the coating composition can be applied to a substrate or article. Thus, a further aspect disclosed hereinis a shaped or formed article that has been coated with the coating compositions disclosed herein. The substrate can be any common substrate such as paper; polymer films such as polyethylene or polypropylene; wood; metals such as aluminum, steel or galvanized sheeting; glass; urethane elastomers; and primed (painted) substrates. The coating composition can be coated onto a substrate using techniques known in the art, for example, by spraying, draw-down, roll-coating, etc., 0.00254 mm to 0.1016 mm (0.1 to 4 mils), or 0.0127 mm to 0.0762 mm (0.5 to 3 mils), or 0.0127 mm to 0.0508 mm (0.5 to 2 mils), or 0.0127 mm to 0.0254 mm (0.5 to 1 mils) of wet coating onto a substrate. The coating can be cured at ambient (room) temperature or heated in a forced air oven to a temperature of 50°C to 175°C, for a time period that typically ranges 5 to 90 minutes and allowed to cool. Further examples of typical application and curing methods can be found in US Pat. Nos. 4,737,551 and 4,698,391 and 3,345,313.

Other examples of the present disclosure and invention of the above compositions are further described as follows. There is provided at least four categories. The compositions, methods, powders, and dispersions within each category that reference compositions or methods above refer to the compositions and methods within the same category.

### CATEGORY 1

A composition comprising a curable polyester resin, said polyester resin comprising the residues of:
a) polyhydroxyl compounds comprising:
   (i) 2,2,4,4-tetraalkylcyclobutane-1,3-diol (TACD) compounds, and
   (ii) polyhydroxyl compounds other than TACD, and
b) polycarboxyl compounds comprising:
   (i) a polycarboxylic acid compound, a derivative of polycarboxylic acid compound other than (bii), or a combination thereof, and
   (ii) a polycarboxylic anhydride compound;
   wherein said curable polyester resin has an acid number ranging from 20 to 120 mg KOH/g, a hydroxyl number ranging from greater than 0 to 100 mg KOH/g, and an acid number:hydroxyl number ratio (AN:OH) of at least 0.5:1.

The above composition, wherein the TACD comprises 2,2,4,4-tetramethylcyclobutane-1,3-diol.

Any one of the above compositions, wherein a polyhydroxyl compound (a)(ii) comprises 2,2-dimethyl-1,3-propanediol (neopentyl glycol), 1,4-cyclohexanedimethanol, or 1,1,1-trimethylol propane, or mixtures thereof.

Any of the above compositions, wherein the polycarboxylic acid (b)(i) comprises isophthalic acid, dimethyl isophthalate, terephthalic acid, dimethyl terephthalate, 1,4-cyclohexanedicarboxylic acid, adipic acid, or mixtures thereof.

Any of the above compositions, wherein the polycarboxylic acid (b)(i) comprises:
a) (isophthalic acid or dimethyl isophthalate) and (1,4-cyclohexanedicarboxylic acid, 1,3-cyclohexanedicarboxylic acid, or mixtures thereof); or
b) (isophthalic acid or dimethyl isophthalate), and (dodecanedioic acid, sebacic acid, azelaic acid, maleic acid, fumaric acid, succinic acid, adipic acid, glutaric acid, itatonic acid, diglycolic acid; or mixtures thereof); or
c) isophthalic acid or dimethyl isophthalate; or
d) (1,4-cyclohexanedicarboxylic acid, 1,3-cyclohexanedicarboxylic acid, or mixtures thereof) and (dodecanedioic acid, sebacic acid, azelaic acid, maleic acid, fumaric acid, succinic acid, adipic acid, glutaric acid, itatonic acid, diglycolic acid, or mixtures thereof), or
e) 1,4-cyclohexanedicarboxylic acid.

Any of the above compositions, wherein terephthalic acid or derivatives thereof are not present as polycarboxylic acids (b).

Any of the above compositions, wherein the polycarboxylic anhydrides (b)(ii) comprise isobutyric anhydride, acetic anhydride, 2-ethyl hexanoic anhydride, phthalic anhydride, maleic anhydride, or trimellitic anhydride, or mixtures thereof.

Any of the above compositions, wherein the molar quantity of TACD (ai) exceeds the molar quantity of any other polyhydroxyl compound, based on the total moles of polyhydroxyl compounds (a).

Any of the above compositions, wherein the quantity of TACD is more than 50 mole% and up to 90 mole%, based on the total moles of polyhydroxyl compounds (b).

Any of the above compositions, wherein the curable polyester resin contains TACD residues in an amount of 25-47 mole%, based on the total moles of all components of the curable polyester resin.

Any of the above compositions, wherein the molar quantity of polycarboxylic anhydride compounds (bii) is in a range of 8-30 mole%, based on the total moles of polycarboxylic acid (b).

Any of the above compositions, wherein the molar quantity of polycarboxylic anhydride compounds (b)(ii) is in a range of 3-15 mole% based on the total moles of all components of the curable polyester resins.

Any of the above compositions, wherein the acid number is in a range from 50 to 120.

Any of the above compositions, wherein the hydroxyl number is in a range from 20 to 100.

Any of the above compositions, wherein the AN:OH ratio is least 0.8:1 and up to 20:1.

Any of the above compositions, wherein the curable polyester resin has an acid number, a hydroxyl number, and an AN:OH ratio that is within the range of any one box designated with an "x" in Table 3:

**Table 3**

| **OH#** | **Acid #** | | | | | | | | | |
|---|---|---|---|---|---|---|---|---|---|---|
| | 50-100 | 50-90 | 60-120 | 65-100 | 70-100 | 45-90 | 50-85 | 60-90 | 65-90 | 30-90 |
| 15-90 | | x | x | x | x | | x | x | x | |
| 15-75 | | x | x | x | x | | x | x | x | |
| 20-70 | x | | x | | x | | x | x | | |
| 20-65 | x | | x | | x | | x | x | | |
| 20-60 | x | | x | | x | | x | x | | |
| 20-50 | | | x | | x | | x | x | | |
| 15-45 | x | x | x | x | x | | x | x | x | |
| 10-40 | x | x | x | x | x | x | x | x | x | x |
| 40-100 | | | x | | | | | | | |
| 50-100 | | | x | | | | | | | |
| 60-100 | | | x | | | | | | | |
| **AN:OH Ratio** | 0.8:1-5:1 | 1.5:1-5:1 | 0.5:1-2:1 | 1:1-6:1 | 0.5:1-4:1 | 1.3:1-6:1 | 2:1-4:1 | 0.5:1-3:1 | 1.5:1-5:1 | 1:1-8:1 |

Any of the above compositions, wherein the acid number of the polyester can be from 50 to 100 and hydroxyl number is 10 to 50.

Any of the above compositions, wherein the curable polyester resin has a glass transition temperature (Tg) from 40°C to 85° C.

Any of the above compositions, wherein the number average molecular weight (Mn) of the curable polyester is within a range of 1,000 to 20,000.

Any of the above compositions, wherein the Mn of the curable polyester is within a range of 1,000 to 2,500.

Any of the above compositions, comprising the residues of:
a) polyhydroxyl compounds comprising:
   i) 2,2,4,4-tetramethylcyclobutane-1,3-diol in an amount ranging from 3 to 98 mole %, based on the total moles of polyhydroxyl compounds (a), and
   ii) polyhydroxyl compounds other than 2,2,4,4-tetramethylcyclobutane-1,3-diol comprising
      (1) a diol in an amount ranging from 0 to 95 mole %, based on the total moles of (a), and
      (2) a polyhydroxyl compound having 3 or more hydroxyl groups in an amount ranging from 2 to 20 mole %, based on the total moles of (a), and
b) polycarboxyl compounds comprising
   i) a polycarboxylic acid, a derivative of polycarboxylic acid compound (other than bii)), or a combination thereof in an amount ranging from 70 to 95 mole %, based on the total moles of (b), and
   ii) a polycarboxylic anhydride in an amount ranging from 5 to 30 mole %, based on the total moles of (b),
   wherein said polyester has an acid number ranging from 30 to 100 mg KOH/g and a hydroxyl number ranging from 3 to 80 mg KOH/g.

Any one of the above compositions, comprising the residues of:
a) polyhydroxyl compounds comprising:
   i) 2,2,4,4-tetramethylcyclobutane-1,3-diol in an amount ranging from 60 to 97 mole %, based on the total moles of polyhydroxyl compounds (a), and
   ii) polyhydroxyl compounds other than 2,2,4,4-tetramethylcyclobutane-1,3-diol comprising
      (1) a diol in an amount ranging from 0 to 37 mole %, based on the total moles of (a), and
      (2) a polyhydroxyl compound having 3 or more hydroxyl groups in an amount ranging from 3 to 15 mole %, based on the total moles of (a), and
b) polycarboxyl compounds comprising
   i) a polycarboxylic acid, a derivative of polycarboxylic acid compound (other than bii)), or a combination thereof in an amount ranging from 75 to 90 mole %, based on the total moles of (b), and
   ii) a polycarboxylic anhydride in an amount ranging from 10 to 25 mole %, based on the total moles of (b),
   wherein said polyester has an acid number ranging from 30 to 100 mg KOH/g and a hydroxyl number ranging from 3 to 80 mg KOH/g.

Any one of the above compositions, wherein the AN:OH ratio is at least 0.9:1.

Any one of the above compositions, wherein the (a)(ii)(1) diol comprises 2,2-dimethyl-1,3-propanediol, 1,3-cyclohexanedimethanol, 1,4-cyclohexanedimethanol, 2-methyl-1,3-propanediol or combinations thereof; the (a)(ii)(2) polyhydroxyl compound having 3 or more hydroxyl groups comprises 1,1,1-trimethylol propane, 1,1,1-trimethylolethane, glycerin, pentaerythritol, sorbitol, 1,2,6-hexanetriol, or combinations thereof; the (b)(i) polycarboxylic acid comprises isophthalic acid (or dimethyl isophthalate), terephthalic acid (or dimethyl terephthalate), 1,4-cyclohexanedicarboxylic acid, 1,3-cyclohexanedicarboxylic acid, or adipic acid or combinations thereof; and the (b)(ii) polycarboxylic anhydride (b)(ii) comprises trimellitic anhydride, hexahydrophthalic anhydride, pyromellitic anhydride, maleic anhydride, succinic anhydride, or combinations thereof.

Any one of the above compositions, comprising both an (a)(ii)(1) diol and an (a)(ii)(2) polyhydroxyl compound having 3 or more hydroxyl groups.

Any one of the above compositions, wherein the (a)(ii)(2) polyhydroxyl compound having 3 or more hydroxyl groups comprises 1,1,1-trimethylol propane, 1,1,1-trimethylolethane, glycerin, or combinations thereof; the (b)(i) polycarboxylic acid comprises isophthalic acid, 1,4-cyclohexanedicarboxylic acid, or combinations thereof; and the (b)(ii) polycarboxylic anhydride (b)(ii) comprises trimellitic anhydride, hexahydrophthalic anhydride, pyromellitic anhydride, maleic anhydride, succinic anhydride, or combinations thereof.

A method for the preparation of a curable polyester resin composition comprising:
a) a first stage for making a polyester intermediate composition by combining polyhydroxyl compounds and polycarboxylic acid compounds to form a reaction mixture, and reacting the reaction mixture in a reactor at a temperature from 180-250 °C, optionally in the presence of an acid catalyst, until the reaction mixture has an acid number of 0 to 20 mg KOH/g, and
b) thereafter, a second stage for forming a curable polyester composition by reacting a polycarboxylic anhydride with the reaction mixture at a temperature of 140 °C to 180 °C to thereby obtain a polyester composition having an acid number of greater than 20 mg KOH/g.

The above method, wherein the reaction mixture is cooled to 180°C or less prior to contact with a polycarboxylic anhydride.

Any of the above methods, wherein a distillate is removed from the reactor during step (a).

Any of the above methods, wherein the reaction in stage a) proceeds at a temperature of at least 200°C for at least 80% of the residence time of the reaction measured as commencing on when the temperature within the reactor reaches 160°C or more and ending when the acid number of the reaction mixture reaches or falls through 20 mg KOH/g.

Any of the above methods, wherein the reaction in stage a) proceeds under a vacuum to a portion of the residence time.

Any of the above methods, wherein the vacuum is within a range of 79.99 kPa (600 torr) to 66.66 Pa (0.5 torr).

Any of the above methods, wherein the polycarboxylic anhydride is reacted at a temperature within a range of 150°C to 180°C.

A solvent containing coating composition, comprising:
a) the curable polyester resin composition of claim 1,
b) a crosslinker compound comprising an amino resin, phenolic resin, isocyanate resin, or an epoxy resin, and
c) an organic solvent.

The solvent composition above, wherein the amount of organic solvent is at least 40 wt.%, based on the weight of the solvent containing coating composition.

The solvent composition above,, wherein the composition comprises 3 wt.% or less water.

The solvent composition above, wherein said composition comprises less than 3 wt.% curable polyester resin as solid particles, based on the total weight of the curable polyester (a).

The solvent composition above, wherein said composition comprises less than 1 wt.% curable polyester resin as solid particles, based on the total weight of the curable polyester (a).

The solvent composition above, wherein the crosslinker compound comprises a resole type phenolic resin.

The solvent composition above, wherein the crosslinker compound comprises a resole type phenolic resin containing at least 50 wt.% of the residues of un-substituted phenol and/or meta-substituted phenol, based on the total phenolic residues of the crosslinker resin.

The solvent composition above, wherein the crosslinker compound comprises a resole type phenolic resin and an amino resin.

An aqueous dispersion comprising:
a) the curable polyester resin as described in any of the embodiments above,
b) a neutralizing agent, and
c) water.

The dispersion above, wherein the amount of water is at least 55 wt.% based on the weight of the aqueous dispersion.

Any one of the dispersions above, wherein the neutralizing comprises an amine.

Any one of the dispersions above, further comprising an alcohol as a co-solvent in an amount of 15 wt.% or less based on the weight of the dispersion.

Any one of the dispersions above, wherein the dispersion comprises 20 wt.% to 60 wt.% curable polyester resin.

Any one of the dispersions above, wherein the dispersion comprises 25 wt% to 45 wt.% curable polyester resin.

A curable waterborne coating composition, comprising
a) any one of the curable polyester resin compositions described above, said composition having acid number within a range of 50 to 120 mg KOH/g,
b) a neutralizing agent,
c) water, and
d) a crosslinker comprising an amino resin, phenolic resin, isocyanate resin, or an epoxy resin.

The curable waterborne coating composition described above, wherein the crosslinker compound comprises a resole type phenolic resin.

Any one of the curable waterborne coating compositions described above, wherein the crosslinker compound contains at least 50 wt.% of the residues of un-substituted phenol and/or meta-substituted phenol, based on the total phenolic residues of the crosslinker resin.

Any one of the curable waterborne coating compositions described above, wherein the crosslinker compound comprises a resole type phenolic resin and an amino resin.

A powder coating composition comprising:
a) the curable polyester resin of claim 1 having a glass transition temperature greater than 50°C, and
b) a crosslinker comprising an amino resin, blocked isocyanate resin, phenolic resins, epoxy resin, or an epoxidized phenolic resin.

### CATEGORY 2

A thermosetting composition comprising:
I) an unsaturated curable polyester comprising the residues of an α,β-unsaturated polycarboxylic acid compound, said α,β-unsaturated polycarboxylic acid compound having at least two carboxylic acid groups or at least one anhydride group, and having at least one unsaturation in a position that is α,β relative to a carbonyl group and not located on an aromatic ring; and
II) a phenolic resin having at least one methylol group.

The thermosetting composition described above, comprising:
I) an unsaturated curable polyester comprising the residues of:
   a) polyhydroxy compounds comprising:
      (i) a diol in an amount of 70 mole % - 100 mole %; and
      (ii) a polyhydroxyl compound having 3 or more hydroxyl groups in an amount of 0 to 30 mole %;
      wherein the mole % is based on 100% of all moles of all polyhydroxyl compounds; and
   b) polycarboxylic compounds comprising
      (i) an α,β-unsaturated polycarboxylic acid compound; and
      (ii) a polycarboxylic acid compound other than the (b)(i) α,β-unsaturated polycarboxylic acid compound.
II) a phenolic resin substituted with at least one methylol group.

Any of the thermosetting compositions described above, wherein at least a portion of the methylol groups are in the ortho position relative to a phenolic hydroxyl group.

Any of the thermosetting compositions described above,, wherein the phenolic resin is obtained by the reaction of phenolic compounds and an aldehyde at an aldehyde:phenol ratio of at least 1.1:1.

Any of the thermosetting compositions described above, wherein the phenolic resin has at least one methylol substituent in the ortho position relative to the phenolic hydroxyl group.

Any of the thermosetting compositions described above, wherein the phenolic resin contains an average of one o-methylol substituent per phenolic hydroxyl group.

Any of the thermosetting compositions described above, wherein the phenolic resin is the reaction product of phenolic compounds with formaldehyde.

Any of the thermosetting compositions described above, wherein the phenolic resin is not made by the addition of bisphenol A, F, or S.

Any of the thermosetting compositions described above, wherein the phenolic resin is not made by the addition of a polyhydric phenol.

Any of the thermosetting compositions described above,wherein α,β-unsaturated polycarboxylic acid compound comprises maleic anhydride, maleic acid, fumaric acid, itaconic anhydride, itaconic acid, citraconic anhydride, citraconic acid, aconitic acid, aconitic anahydride, oxalocitraconic acid, oxalocitraconic anhydride, mesaconic acid, mesaconic anhydride, beta-acylacrylic acid, beta-acylacrylic anhydride, phenyl maleic acid, phenyl maleic anhydride, t-butyl maleic acid, t-butyl maleic anhydride, monomethyl fumarate, monobutyl fumarate, methyl maleic acid, methyl maleic anhydride, or mixtures thereof.

Any of the thermosetting compositions described above, wherein the α,β-unsaturated polycarboxylic acid compound comprises maleic acid or maleic anhydride.

Any of the thermosetting compositions described above, wherein said unsaturated curable polyester contains at least one non-terminal ethylenically unsaturated bond in an α,β position relative to an ester group in the polymer.

Any of the thermosetting compositions described above, wherein the unsaturated curable polyester contains ethylenically unsaturated carbons pendant to the polymer backbone.

Any of the thermosetting compositions described above, wherein the unsaturated curable polyester contains ethylenically unsaturated carbons that are within the linear polymer backbone.

Any of the thermosetting compositions described above, wherein the unsaturated curable polyester does not contain terminal or vinyl unsaturation.

Any of the thermosetting compositions described above, wherein said unsaturated polyester is not made with a monocarboxylic acid compound having a vinyl group.

Any of the thermosetting compositions described above, wherein the unsaturated polyester contains residues of α,β-unsaturated polycarboxylic acid compound in an amount of at least 5 mole% based on the total moles of the components of the polyester.

Any of the thermosetting compositions described above, wherein the unsaturated curable polyester contains residues of α,β-unsaturated polycarboxylic acid compound in an amount of 10 to 25 mole% based on the total moles of the components of the unsaturated curable polyester.

Any of the thermosetting compositions described above, wherein the amount of α,β-unsaturated polycarboxylic acid compound is 30 to 40 mole%, based on 100 mole% of all polycarboxylic compounds (b).

Any of the thermosetting compositions described above, wherein the polycarboxylic acid compounds (bii) comprise isophthalic acid, dimethyl isophthalate, terephthalic acid, dimethyl terephthalate, phthalic acid, phthalic anhydride, 1,4-cyclohexanedicarboxylic acid, 1,3-cyclohexanedicarboxylic acid, adipic acid, 2,6-naphthalenedicarboxylic acid, 1,4-naphthalenedicarboxylic acid, 2,5-naphthalenedicarboxylic acid, hexahydrophthalic anhydride, tetrahydrophthalic anhydride, trimellitic anhydride, succinic anhydride, succinic acid, or mixtures thereof.

Any of the thermosetting compositions described above,, wherein the polycarboxylic acid compounds (bii) comprise isophthalic acid, dimethyl isophthalate, phthalic acid, phthalic anhydride, 1,4-cyclohexanedicarboxylic acid, adipic acid, hexahydrophthalic anhydride, tetrahydrophthalic anhydride, trimellitic anhydride, or mixtures thereof.

Any of the thermosetting compositions described above, wherein the poycarboxylic acid compounds (b)(ii) do not include terephthalic acid or a derivative of terephthalic acid.

Any of the thermosetting compositions described above, wherein the unsaturated polyester contains residues of polycarboxylic compounds, other than α,β-unsaturated polycarboxylic acid compounds, present in an amount of 10 to 25 mole% based on the total moles of the components of the unsaturated curable polyester.

Any of the thermosetting compositions described above, wherein the amount of polycarboxylic compounds (b)(ii) is 50 to 80 mole%, based on 100% of all moles of the polycarboxylic compounds (b).

Any of the thermosetting compositions described above, wherein all of the polyhydroxyl compounds (a) are hydrocarbons and do not contain atoms other than hydrogen, carbon and oxygen.

Any of the thermosetting compositions described above, wherein the diols (a)(i) comprise 2,2,4,4-tetraalkylcyclobutane-1,3-diol (TACD).

Any of the thermosetting compositions described above, wherein the diols (a)(i) comprise 2,2-dimethyl-1,3-propanediol (neopentyl glycol).

Any of the thermosetting compositions described above, wherein the diols (a)(i) are present in an amount of 80 to 98 mole%, based on 100 mole% of all polyhydroxyl compounds (a).

Any of the thermosetting compositions described above, wherein the unsaturated polyester contains residues of the diols in an amount of 37 to 49 mole% based on the total moles of the components of the unsaturated polyester.

Any of the thermosetting compositions described above, wherein the polyhydroxyl compounds comprise polyhydroxyl compounds (a)(ii) having 3 or more hydroxyl groups, said polyhydroxyl compounds (a)(ii) comprising 1,1,1-trimethylol propane, 1,1,1-trimethylolethane, glycerin, pentaerythritol, erythritol, threitol, dipentaerythritol, sorbitol, or mixtures thereof.

Any of the thermosetting compositions described above, wherein the amount of polyhydroxyl compounds (a)(ii) is 2 to 15 mole%, based on 100 mole% of all polyhydroxyl compounds (a).

Any of the thermosetting compositions described above, wherein the unsaturated polyester contains residues of polyhydroxyl compounds having at least 3 hydroxyl groups present in an amount of 1 to 10 mole% based on the total moles of the components of the unsaturated polyester.

Any of the thermosetting compositions described above, wherein none of the polyhydroxyl compounds (a) contain any ester or carboxyl (-COO-) groups.

Any of the thermosetting compositions described above, wherein none of the polyhydroxyl compounds (a) have any carbonyl groups (-CO-).

Any of the thermosetting compositions described above, wherein none of the polyhydroxyl compounds (a) contain any ether groups.

Any of the thermosetting compositions described above, wherein the unsaturated polyester has an acid number in a range of 0-10 mg KOH/g.

Any of the thermosetting compositions described above, wherein the unsaturated polyester has an acid number of 40-120 mg KOH/g.

Any of the thermosetting compositions described above, wherein the unsaturated polyester has a hydroxyl number in the range of 40 to 100.

Any of the thermosetting compositions described above, wherein the unsaturated polyester has a Tg within a range of 35°C to 60° C.

Any of the thermosetting compositions described above, wherein the unsaturated polyester has an Mn within a range of 1,100 to 3,000 g/mole.

Any of the thermosetting compositions described above, comprising:
I) an unsaturated curable polyester resin comprising the residues of:
   a) polyhydroxyl compounds comprising:
      (i) diol compounds in an amount ranging from 85 to 98 mole %; and
      (ii) polyhydroxyl compounds having at least three hydroxyl groups in an amount ranging from 2 to 15 mole %;
      wherein the amount of (a)(i) and (a)(ii) are based on the total moles of polyhydroxyl compounds (a); and
   (b) polycarboxyl compounds comprising
      (i) α,β-unsaturated polycarboxylic acid compounds in an amount ranging from 25 to 50 mole%; and
      (ii) polycarboxyl compounds other than (b)(i) in an amount ranging from 50 to 75 mole%;
      wherein the amount of (b)(i) and (b)(ii) are based on the total moles of polycarboxyl compounds (b).
II) a phenolic resin substituted with at least one methylol group.

Any of the thermosetting compositions described above, wherein said phenolic resin comprises a resole phenolic resin.

Any of the thermosetting compositions described above, wherein said phenolic resin comprises a resole phenolic resin based on un-substituted phenol and/or meta- substituted phenol.

Any of the thermosetting compositions described above, wherein said phenolic resin comprises a resole phenolic resin based on un-substituted phenol.

Any of the thermosetting compositions described above, wherein the unsaturated curable polyester has an acid number ranging from 0 to 5 or 35-60 mg KOH/g, a hydroxyl number ranging from 30-90 mg KOH/g.

Any of the thermosetting compositions described above, wherein the (a)(i) diol comprises TMCD.

Any of the thermosetting compositions described above, wherein the (a)(ii) polyhydroxyl compound comprises 1,1,1-trimethylol propane, 1,1,1-trimethylolethane, glycerin, pentaerythritol, or combinations thereof.

Any of the thermosetting compositions described above, wherein the (b)(i) α,β-unsaturated polycarboxylic acid compounds comprise maleic anhydride, maleic acid, fumaric acid, itaconic anhydride, itaconic acid, citraconic anhydride, citraconic acid, aconitic acid, aconitic anahydride, oxalocitraconic acid, oxalocitraconic anhydride, mesaconic acid, mesaconic anhydride, beta-acylacrylic acid, beta-acylacrylic anhydride, phenyl maleic acid, phenyl maleic anhydride, t-butyl maleic acid, t-butyl maleic anhydride, monomethyl fumarate, monobutyl fumarate, methyl maleic acid, methyl maleic anhydride, or mixtures thereof.

Any of the thermosetting compositions described above, wherein the polycarboxyl (b)(ii) compounds comprise isophthalic acid, dimethyl isophthalate, 1,4-cyclohexanedicarboxylic acid, 1,3-cyclohexanedicarboxylic acid, adipic acid; phthalic acid; or combinations thereof.

Any of the thermosetting compositions described above, wherein said composition comprises:
I) any of the unsaturated polyesters described above having acid number within a range of 50 to 120 mg KOH/g;
II) a resole phenolic crosslinking resin;
III) a neutralizing agent; and
IV) water.

Any of the thermosetting compositions described above, further comprising an acid catalyst in an amount ranging from 0.1 to 2 weight %, based on the total weight of polyester and phenolic resin.

A solvent based coating composition, comprising:
I) any of the unsaturated curable polyester resins above;
II) a crosslinker comprising a resole phenolic resin, and
III) an organic solvent.

The solvent coating composition described above, wherein said organic solvent comprises xylene, 2-butoxyethanol, ethyl-3-ethoxypropionate, toluene, butanol, cyclopentanone, cyclohexanone, ethyl acetate, butyl acetate, mineral spirits, naptha, toluene, acetone, methyl ethyl ketone, methyl isoamyl ketone, isobutyl acetate, t-butyl acetate, n-propyl acetate, isopropyl acetate, methyl acetate, ethanol, n-propanol, isopropanol, sec-butanol, isobutanol, ethylene glycol monobutyl ether, propylene glycol n-butyl ether, propylene glycol methyl ether, propylene glycol monopropyl ether, dipropylene glycol methyl ether, diethylene glycol monobutyl ether, trimethylpentanediol mono-isobutyrate, ethylene glycol mono-octyl ether, diacetone alcohol, 2,2,4-trimethyl-1,3-pentanediol monoisobutyrate, or combinations thereof.

Any of the solvent coating compositions described above, wherein the amount of solvent (other than water) is least 40 wt.%, based on the weight of the solvent containing coating composition.

Any of the solvent coating compositions described above, wherein said solvent composition contains 3 wt.% or less water, based on the weight of the coating composition.

Any of the solvent coating compositions described above, wherein the acid number of said unsaturated polyester is less than 5 mg KOH/g.

An aqueous dispersion, comprising
I) any of the unsaturated curable polyester resins described above;
II) a neutralizing agent, and
III) water.

The aqueous dispersion described above, wherein the unsaturated curable polyester contains residues of 5-sodiosulfoisophthalic acid, polyetheylene glycol, or a combination thereof.

Any of the aqueous dispersions described above, wherein the unsaturated polyester has an acid number of at least 50 mg KOH/g.

Any of the aqueous dispersions described above, wherein the amount of water is at least 50 wt.%, based on the weight of the aqueous dispersion.

Any of the aqueous dispersions described above, wherein the neutralizing agent comprises an amine.

Any of the aqueous dispersions described above, further comprising an organic co-solvent in an amount of 3 wt.% to 15 wt.% based on the weight of the unsaturated polyester.

Any of the aqueous dispersions described above, wherein the dispersion contains at least 25 wt.% unsaturated curable polyester resin based on the weight of the aqueous dispersion.

A method for making a thermosetting coating composition comprising combining a solvent coating composition with coating ingredients, said solvent coating composition comprising
I) an unsaturated curable polyester comprising the residues of an α,β-unsaturated polycarboxylic acid compound, said α,β-unsaturated polycarboxylic acid compound having at least two carboxylic acid groups or at least one anhydride group, and having at least one unsaturation in a position that is in α,β position relative to a carbonyl group and not located on an aromatic ring; and
II) a phenolic resin having at least one methylol group; and
III) a solvent;

The method as described above, wherein thermosetting coating composition contains a pigment in an amount of 20 to 60 wt.%, based on the total weight of the thermosetting composition.

Any of the methods described above, comprising applying a thermosetting coating composition to a substrate and allowing the coating composition to cure to form a dry coating, wherein said thermosetting composition comprises the composition of claim 53, and the thickness of said dry coating is within a range of 0.00254 mm to 0.0508 mm (0.1 to 2 mils).

### CATEGORY 3

A thermosetting composition comprising:
I. a curable polyester resin containing beta-ketoacetate moieties without vinyl unsaturation; and
II. a phenolic resin having at least one methylol group.

A thermosetting composition comprising:
I) a curable polyester resin comprising the reaction product of a polyester resin with a compound containing a beta-ketoacetate moiety that does not contain a vinyl unsaturation; and
II) a phenolic resin substituted with at least one methylol group.

Any of the thermosetting compositions described above, comprising:
I) a curable polyester resin comprising the reaction product of a polyester resin with a compound containing a beta-ketoacetate moiety that does not contain a vinyl unsaturation, said polyester resin comprising the reaction product of:
   a) polyhydroxyl compounds comprising:
      (i) diol compounds in an amount of 70 mole % - 100 mole %; and
      (ii) polyhydroxyl compounds having 3 or more hydroxyl groups in an amount of 0 to 30 mole %;
      wherein the mole % is based on 100% of all moles of polyhydroxyl compounds a); and
   b) polycarboxyl compounds comprising polycarboxylic acid compounds, derivatives of polycarboxylic acid compounds, the anhydrides of polycarboxylic acids, or combinations thereof; and
II) a phenolic resin substituted with at least one methylol group.

Any of the thermosetting compositions described above, wherein the phenolic resin is obtained by the reaction of phenolic compounds and an aldehyde at an aldehyde:phenol ratio of at least 1.1:1.

Any of the thermosetting compositions described above, wherein the phenolic resin has at least one methylol substituent in the ortho position relative to the phenolic hydroxyl group.

Any of the thermosetting compositions described above, wherein the phenolic resin contains an average of at least one methylol substituent per phenolic hydroxyl group.

Any of the thermosetting compositions described above, wherein the phenolic resin is the reaction product of phenolic compounds with formaldehyde.

Any of the thermosetting compositions described above, wherein the phenolic resin is not made by the addition of bisphenol A, F, or S.

Any of the thermosetting compositions described above, wherein the phenolic resin is not made by the addition of a polyhydric phenol.

Any of the thermosetting compositions described above, wherein the curable polyester does not contain vinyl unsaturation and does not contain alkyd residues.

Any of the thermosetting compositions described above, wherein said compound having a beta-ketoacetate moiety comprises a compound represented by the following formula: 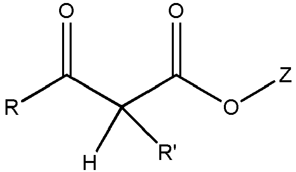 wherein R is a branched or straight chain, saturated or unsaturated alkyl, alicyclic, or aromatic group; R' is a hydrogen or a branched or straight chain, saturated or unsaturated alkyl, alicyclic, or aromatic group; Z is a branched or straight chain, saturated or unsaturated alkyl, alicyclic, or aromatic group; , and wherein R does not contain a vinyl unsaturation.

Any of the thermosetting compositions described above, wherein R is a branched or straight chain alkyl group having 1-4 carbon atoms, R' is a hydrogen or a branched or straight alkyl having 1-4 carbon atoms; and Z is a branched or straight chain alkyl having 1-8 carbon atoms.

Any of the thermosetting compositions described above, wherein the compound having a beta-ketoacetate moiety has molecular weight of less than 200.

Any of the thermosetting compositions described above, wherein the compound having a beta-ketoacetate moiety comprises diketene or an alkyl acetoacetate compound.

Any of the thermosetting compositions described above, wherein the compound having a beta-ketoacetate moiety comprises t-butyl acetoacetate, ethyl acetoacetate, methyl acetoacetate, isobutyl acetoacetate, isopropyl acetoacetate, n-propyl acetoacetate, n-butyl acetoacetate, t-anyl acetotacetate, or diisopropyl carbinol acetoacetate.

Any of the thermosetting compositions described above, wherein the compound having a beta-ketoacetate moiety comprises t-butyl acetoacetate.

Any of the thermosetting compositions described above, wherein the thermosetting composition comprises said polyester resin (I) in an amount of 70 to 97 wt.% and said phenolic resin (II) in an amount of 3 to 30 wt.%, based on the total weight of (I) and (II).

Any of the thermosetting compositions described above, wherein the polycarboxylic acid compounds (b) comprise isophthalic acid, dimethyl isophthalate, terephthalic acid, dimethyl terephthalate, phthalic acid, phthalic anhydride, 1,4-cyclohexanedicarboxylic acid, 1,3-cyclohexanedicarboxylic acid, adipic acid, 2,6-naphthalenedicarboxylic acid, 1,4-naphthalenedicarboxylic acid, 2,5-naphthalenedicarboxylic acid, hexahydrophthalic anhydride, tetrahydrophthalic anhydride, trimellitic anhydride, succinic anhydride, succinic acid, or mixtures thereof.

Any of the thermosetting compositions described above, wherein the polycarboxylic acid compounds (b) comprise isophthalic acid, dimethyl isophthalate, phthalic acid, phthalic anhydride, 1,4-cyclohexanedicarboxylic acid, adipic acid, hexahydrophthalic anhydride, tetrahydrophthalic anhydride, trimellitic anhydride, or mixtures thereof.

Any of the thermosetting compositions described above, wherein the poycarboxylic acid compounds (b) do not include terephthalic acid or a derivative of terephthalic acid.

Any of the thermosetting compositions described above, wherein all of the polyhydroxyl compounds (a) are hydrocarbons and do not contain atoms other than hydrogen, carbon and oxygen.

Any of the thermosetting compositions described above, wherein the diols (a)(i) comprise 2,2,4,4-tetraalkylcyclobutane-1,3-diol (TACD).

Any of the thermosetting compositions described above, wherein the diols (a)(i) comprise 2,2-dimethyl-1,3-propanediol (neopentyl glycol).

Any of the thermosetting compositions described above, wherein the diols (a)(i) are present in an amount of 80 to 98 mole%, based on 100 mole% of all polyhydroxyl compounds (a).

Any of the thermosetting compositions described above, wherein the polyhydroxyl compounds comprise polyhydroxyl compounds (a)(ii) having 3 or more hydroxyl groups, said polyhydroxyl compounds (a)(ii) comprising 1,1,1-trimethylol propane, 1,1,1-trimethylolethane, glycerin, pentaerythritol, erythritol, threitol, dipentaerythritol, sorbitol, or mixtures thereof.

Any of the thermosetting compositions described above, wherein the amount of polyhydroxyl compounds (a)(ii) is 2 to 15 mole%, based on 100 mole% of all polyhydroxyl compounds (a).

Any of the thermosetting compositions described above, wherein none of the polyhydroxyl compounds (a) contain any ester or carboxyl (-COO-) groups.

Any of the thermosetting compositions described above, wherein none of the polyhydroxyl compounds (a) have any carbonyl groups (-CO-).

Any of the thermosetting compositions described above, wherein none of the polyhydroxyl compounds (a) contain any ether groups.

Any of the thermosetting compositions described above, wherein the compound having a beta-ketoacetate moiety is reacted with the polyester resin in an amount of 3 to 40 wt.% based on the based on the weight of the compound and the polyester resin.

Any of the thermosetting compositions described above, wherein the polyester resin has a hydroxyl number of 50-240 mg KOH/g, and at least 70% of the hydroxyl groups on the polyester resin are consumed with the residues of the compound having the beta-ketoacetate moiety.

Any of the thermosetting compositions described above, wherein the curable polyester (I) has an acid number in a range of 0-10 mg KOH/g.

Any of the thermosetting compositions described above, wherein the polyester resin used to make the curable polyester (I) has a hydroxyl number in the range of 30-240 mgKOH/g.

Any of the thermosetting compositions described above, wherein said polyester resin has a hydroxyl number in a range of 80-240 mgKOH/g.

Any of the thermosetting compositions described above, wherein said polyester resin has a hydroxyl number in a range of 80-150 mg.KOH/g.

Any of the thermosetting compositions described above, wherein the curable polyester (I) has an Mn within a range of 1,100 to 3,000 g/mole.

Any of the thermosetting compositions described above, wherein said phenolic resin comprises a resole phenolic resin.

Any of the thermosetting compositions described above, wherein said phenolic resin comprises a resole phenolic resin comprising the residues of un-substituted phenol and/or meta- substituted phenol.

Any of the thermosetting compositions described above, wherein said phenolic resin comprises a resole phenolic resin comprising the residues of un-substituted phenol.

Any of the thermosetting compositions described above, further comprising an amino containing crosslinking resin.

Any of the thermosetting compositions described above, wherein the composition comprises a crosslinking composition comprising greater than 60 wt.% of said phenolic resin (II) and the remainder an amine based crosslinking resin, based on the weight of all crosslinking compounds present in the thermosetting composition.

Any of the thermosetting compositions described above, wherein the (a)(i) diol comprises TMCD.

Any of the thermosetting compositions described above, wherein the (a)(ii) polyhydroxyl compound comprises 1,1,1-trimethylol propane, 1,1,1-trimethylolethane, glycerin, pentaerythritol, or combinations thereof.

Any of the thermosetting compositions described above, wherein said composition comprises:
I. the curable polyester (I) having acid number within a range of 50 to 120 mg KOH/g and at least partially neutralized with a neutralizing agent;
II. a resole phenolic crosslinking resin; and
III. water.

A solvent based coating composition, comprising:
I. any of the curable polyester resins described above;
II. a crosslinker comprising a resole phenolic resin, and
III. an organic solvent.

The solvent coating composition described above, wherein said organic solvent comprises xylene, 2-butoxyethanol, ethyl-3-ethoxypropionate, toluene, butanol, cyclopentanone, cyclohexanone, ethyl acetate, butyl acetate, mineral spirits, naptha, toluene, acetone, methyl ethyl ketone, methyl isoamyl ketone, isobutyl acetate, t-butyl acetate, n-propyl acetate, isopropyl acetate, methyl acetate, ethanol, n-propanol, isopropanol, sec-butanol, isobutanol, ethylene glycol monobutyl ether, propylene glycol n-butyl ether, propylene glycol methyl ether, propylene glycol monopropyl ether, dipropylene glycol methyl ether, diethylene glycol monobutyl ether, trimethylpentanediol mono-isobutyrate, ethylene glycol mono-octyl ether, diacetone alcohol, 2,2,4-trimethyl-1,3-pentanediol monoisobutyrate, or combinations thereof.

Any of the solvent coating compositions described above, wherein the amount of solvent (other than water) is at least 40 wt.%, based on the weight of the solvent containing coating composition.

Any of the solvent coating compositions described above, wherein said solvent composition contains 3 wt.% or less water, based on the weight of the coating composition.

Any of the solvent coating compositions described above, wherein the solvent coating containing composition comprises less than 1 wt.% curable polyester resin as solid particles.

Any of the solvent coating compositions described above, wherein the acid number of said curable polyester (I) is less than 5 mg KOH/g.

An aqueous dispersion, comprising
I. any of the curable polyester resins described above at least partially neutralized with a neutralizing agent;
II. said phenolic resin; and
III. water.

The aqueous dispersion described above, wherein the curable polyester further comprises residues of 5-sodiosulfoisophthalic acid, polyethylene glycol, or a combination thereof.

Any of the aqueous dispersions described above, wherein the curable polyester (I) has an acid number of at least 50 mg KOH/g.

Any of the aqueous dispersions described above, wherein the amount of water is at least 50 wt.%, based on the weight of the aqueous dispersion.

Any of the aqueous dispersions described above, wherein the neutralizing agent comprises an amine.

Any of the aqueous dispersions described above, further comprising an organic co-solvent in an amount of 3 wt.% to 15 wt.% based on the weight of the curable polyester (I).

Any of the aqueous dispersions described above, wherein the dispersion contains at least 25 wt.% curable polyester resin based on the weight of the aqueous dispersion.

Any of the thermosetting compositions described above, wherein said curable polyester resin containing beta-ketoacetate moieties without vinyl unsaturation is represented by the following formula: 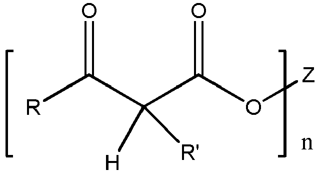 wherein R is a branched or straight chain, saturated or unsaturated alkyl, alicyclic, or aromatic group; R' is a hydrogen or a branched or straight chain, saturated or unsaturated alkyl, alicyclic, or aromatic group; Z is a polyester polymer residue; and n is an average number of groups per polyester chain in said polyester resin of at least 0.5.

Any of the thermosetting compositions described above, wherein R is a branched or straight chain alkyl group having 1-4 carbon atoms, R' is a hydrogen or a branched or straight alkyl having 1-4 carbon atoms; and n is an average number within a range of 0.5 to 5.

A method for making a thermosetting coating composition comprising combining a solvent coating composition with coating ingredients, said solvent coating composition comprising:
I) a curable polyester resin comprising the reaction product of a polyester resin with a compound containing a beta-ketoacetate moiety that does not contain a vinyl unsaturation; and
II) a phenolic resin substituted with at least one methylol group.
III. a solvent;

The method described above, wherein thermosetting coating composition contains a pigment in an amount of 20 to 60 wt.%, based on the total weight of the thermosetting composition.

Any of the methods described above, comprising applying a thermosetting coating composition to a substrate and allowing the coating composition to cure to form a dry coating, wherein said thermosetting composition comprises the composition of claim 120, and the thickness of said dry coating is within a range of 0.1 to 2 mils.

Any of the methods described above, wherein said curable polyester resin containing beta-ketoacetate moieties without vinyl unsaturation is represented by the following formula: 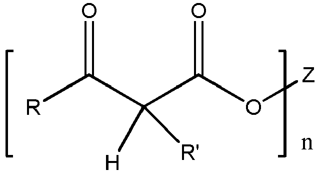 wherein R is a branched or straight chain, saturated or unsaturated alkyl, alicyclic, or aromatic group; R' is a hydrogen or a branched or straight chain, saturated or unsaturated alkyl, alicyclic, or aromatic group; Z is a polyester polymer residue; and n is an average number of groups per polyester chain in said polyester resin of at least 0.5.

Any of the methods described above, wherein R is a branched or straight chain alkyl group having 1-4 carbon atoms, R' is a hydrogen or a branched or straight alkyl having 1-4 carbon atoms; and n is an average number within a range of 0.5 to 5.

### CATEGORY 4

The present invention relates to a thermosetting composition comprising:
I) a curable polyester resin; and
II) a crosslinker composition comprising a resole phenolic resin,
said phenolic resin containing the residues of meta-substituted phenols and optionally un-substituted phenol,
wherein said curable polyester comprises a polyester having beta-ketoacetate moieties without vinyl unsaturation and
wherein the resole phenolic resin is obtained with a phenol composition as a starting material, said phenol composition comprising meta-substituted phenols.

The composition described above, wherein the crosslinker composition comprises resole phenolic resin in an amount of at least 70 wt.%, based on the weight of the crosslinker composition.

Any of the compositions described above, wherein the crosslinker composition comprises resole phenolic resin in an amount of at least 90 wt.%, based on the weight of the crosslinker composition.

Any of the compositions described above, wherein said resole phenolic resin is obtained with a phenol composition as a starting material, said phenol composition comprising un-substituted phenols.

Any of the compositions described above, wherein said resole phenolic resin is obtained with a phenol composition as a starting material, said phenol composition comprising un-substituted phenols in an amount of at least 60 wt.% based on the weight of the phenol composition.

Any of the compositions described above, wherein said resole phenolic resin is obtained with a phenol composition as a starting material, said phenol composition comprising meta-substituted phenols in an amount of at least 60 wt.% based on the weight of the phenol composition.

Any of the compositions described above, wherein said resole phenolic resin is obtained by reacting a phenol composition with an aldehyde at an aldehyde:phenol molar ratio of at least 1.2:1, said phenol composition comprising un-substituted phenols and/or meta-substituted phenols.

Any of the compositions described above, wherein the aldehyde:phenol molar ratio is at least 1.4:1 and up to 4:1.

Any of the compositions described above, wherein the aldehyde:phenol molar ratio is at least 1.5:1.

Any of the compositions described above, wherein the resole phenolic resin contains an average of at least 0.3 methylol groups (including either or both of --CH2OH and --CH₂OR) per one phenolic hydroxyl group.

Any of the compositions described above, wherein the resole phenolic resin contains an average of at least 0.4 methylol groups per one phenolic hydroxyl group.

Any of the compositions described above, wherein the resole phenolic resin contains an average of at least 0.5 methylol groups per one phenolic hydroxyl group.

Any of the compositions described above, wherein the resole phenolic resin contains residues of m-cresol.

Any of the compositions described above, wherein the resole phenolic resin contains residues of phenol.

Any of the compositions described above, wherein at least 90% of the phenolic compounds used to make the resole phenolic resin are un-substituted phenol or meta-substituted phenol.

Any of the compositions described above, wherein the resole phenolic resin is not made with the addition of bisphenol A, F, or S.

Any of the compositions described above, wherein said curable polyester comprise a polyester having an acid number ranging from 20 to 120 mg KOH/g, a hydroxyl number ranging from greater than 0 to 100 mg KOH/g, and an acid number:hydroxyl (AN:OH) number ratio of at least 0.5:1.

Any of the compositions described above, wherein said curable polyester comprises a polyester having residues of an α,β-unsaturated polycarboxylic acid compound, said α,β-unsaturated polycarboxylic acid compound having at least two carboxylic acid groups or at least one anhydride group, and having at least one unsaturation that is in the α,β position relative to a carbonyl group and is not located on an aromatic ring.

Any of the compositions described above, wherein said curable polyester has a cumulative acid number and hydroxyl number in a range of 30 to 200 mgKOH/g.

Any of the compositions described above, wherein said range is from 40 to 150 mgKOH/g.

Any of the compositions described above, wherein said range is from 50-100 mgKOH/g.

Any of the compositions described above, wherein said curable polyester comprises the residues of:
a) polyhydroxyl compounds comprising:
   (i) diol compounds in an amount of 70 mole % - 100 mole %; and
   (ii) polyhydroxyl compounds having 3 or more hydroxyl groups in an amount of 0 to 30 mole %;
   wherein the mole % is based on 100% of all moles of polyhydroxyl compounds a); and
b) polycarboxyl compounds comprising polycarboxylic acid compounds, derivatives of polycarboxylic acid compounds, the anhydrides of polycarboxylic acids, or combinations thereof.

A coating obtained with any of the thermoplastic compositions described above.

A process for applying a coating, comprising spraying, roll coating, or brushing onto a substrate any of the compositions described above.

A solvent containing coating composition, comprising:
I. a curable polyester resin,
II. a crosslinker composition comprising a resole phenolic resin, said phenolic resin containing the residues of un-substituted phenol and/or meta-substituted phenols; and
III. an organic solvent.

The solvent composition described above, wherein said organic solvent is present in an amount of at least 30 wt.% based on the weight of the solvent containing coating composition.

Any of the solvent compositions described above, wherein the composition comprises 8 wt.% or less water.

A coating made with any of the solvent borne coating compositions described above, said coating having a MEK double rub solvent resistance of at least 200.

An aqueous dispersion, comprising:
I. a curable polyester resin at least partially neutralized with a neutralizing agent,
II. a crosslinker composition comprising a resole phenolic resin, said phenolic resin containing the residues of un-substituted phenol and/or meta-substituted phenols; and
III. water.

The aqueous dispersion described above, wherein the dispersion contains water in an amount of at least 25 wt.%, based on the weight of the aqueous dispersion.

Any of the aqueous dispersions described above, wherein the dispersion contains water in an amount of at least 35 wt.%, based on the weight of the aqueous dispersion.

Any of the aqueous dispersions described above, wherein the dispersion contains water in an amount of at least 25 wt.%, based on the weight of the aqueous dispersion, and an organic co-solvent in an amount of 1 wt.% to 15 wt.%, based on the weight of the aqueous composition.

Any of the aqueous dispersions described above, wherein the dispersion contains curable poleyster resin in an amount of 10-45 wt.% based on the weight of the aqueous dispersion.

A curable powder coating composition comprising:
I. a curable polyester resin having a Tg greater than 50 °C and,
II. a crosslinker composition comprising a resole phenolic resin, said phenolic resin containing the residues of un-substituted phenol and/or meta-substituted phenols.

The invention is further illustrated by the following examples.

### EXAMPLES

### Example 1 (Preparative): Synthesis of Carboxyl-Functional TMCD-Based Polyester Using CHDA and IPA as the Diacids With AN:OH Ratio Of At Least 0.5:1 (Resin 1)

A 500 mL, three-neck, round-bottom flask was equipped with a mechanical stirrer, a heated partial condenser, a Dean-Stark trap, and a water condenser. To the flask were charged 2,2,4,4-tetramethyl-13-cyclobutanediol (TMCD) (62.5g); trimethylolpropane (TMP) (5.95g); 1,4-cyclohexanedicarboxylic acid (CHDA) (34.4g), isophthalic acid (IPA) (33.2g), and the acid catalyst, Fascat-4100 (Arkema Inc.) (0.20g). The reaction was allowed to react under nitrogen at 180°C for 20 min., at 200°C for 60 min., at 220°C for 120 min., and at 230°C for about 2 hours to yield a clear, viscous mixture. A total of 12.5 mL of distillate was collected in the Dean-Stark trap.

The reaction mixture was then allowed to cool to 150°C, followed by the addition of trimellitic anhydride (TMA) (14.06g). After the addition of TMA, the temperature was increased to 170°C and the mixture allowed to react for about 1.5 hours. The resulting mixture was allowed to cool to room temperature and subsequently placed in dry ice to chill for ease to break and collect the solid product (133.03g).

Using the same method as above, resins 3, 5, and 6 were synthesized, in which no vacuum was used in the process. For resins 2 and 4, vacuum was applied at the end of the first stage reaction before addition of TMA in order to build up resin molecular weights. In the process, the reactor was reassembled to be connected to a glass vacuum tube for further reaction under reduced pressures. The reaction was allowed to continue at 230 °C under vacuum (gradually reduced to <1 mmHg) for one hour. After that, the reactor was assembled for reaction with TMA as described previously.

The relative amounts and the results are reported in Tables 4 and 5.

**Table 4**

| **Synthesized Carboxyl Functional TMCD-Based Polyesters Using CHDA and IPA with R-Value Variation** | | | | | | | |
|---|---|---|---|---|---|---|---|
| | Resin Composition as Charged | | | | | Post React TMA | |
| | Equivalent (eq.) Ratio Based on Total Alcohols (%) | | Eq. Ratio Based on Total Diacids (%) | | | TMA/Total Diacids (mole %) | |
| | TMCD | TMP | CHDA | IPA | total eq. of OH/total eq. of COOH (R value) | Vacuum before TMA | TMA |
| Resin 1 | 86.7 | 13.3 | 50 | 50 | 1.25 | N | 18.29 |
| Resin 2 | 86.7 | 13.3 | 50 | 50 | 1.25 | Y | 18.29 |
| Resin 3 | 86.7 | 13.3 | 50 | 50 | 1.30 | N | 18.29 |
| Resin 4 | 86.7 | 13.3 | 50 | 50 | 1.30 | Y | 18.29 |
| Resin 5 | 86.7 | 13.3 | 50 | 50 | 1.35 | N | 18.29 |
| Resin 6 | 86.7 | 13.3 | 50 | 50 | 1.40 | N | 18.29 |

**Table 5**

| **Analysis of Synthesized Carboxyl Functional TMCD-Based Polyesters Using CHDA and IPA with R-Value Variation** | | | | | | |
|---|---|---|---|---|---|---|
| | | | | | | |

| | Resin Properties | | | | | |
|---|---|---|---|---|---|---|
| | Tg, C | Mn | Mw | Acid Number Analyzed | OH Number Analyzed | AN:OH |
| Resin 1 | 90.7 | 1185 | 4214 | 73 | 37 | 1.97 |
| Resin 2 | 89.4 | 2029 | 7843 | 73 | 17 | 4.3 |
| Resin 3 | 96.4 | 1299 | 5639 | 77 | 34 | 2.26 |
| Resin 4 | 100.7 | 2173 | 9721 | 68 | 26 | 2.6 |
| Resin 5 | 95.6 | 1869 | 11379 | 78 | 28 | 2.78 |
| Resin 6 | 89.6 | 1659 | 5470 | 58 | 97 | 0.59 |

### Example 3 (Preparative): Synthesis of Carboxyl-Functional TMCD-Based Polyester Using IPA and AD as the Diacids With AN:OH At Least 0.5:1 (Resin 8)

A 500 mL, three-neck, round-bottom flask was equipped with a mechanical stirrer, a heated partial condenser, a Dean-Stark trap, and a water condenser. To the flask were charged 2,2,4,4-tetramethyl-13-cyclobutanediol (TMCD) (62.5g); trimethylolpropane (TMP) (5.95g); isophthalic acid (IPA) (46.5g), adipic acid (17.5g), and the acid catalyst, Fascat-4100 (Arkema Inc.) (0.20g). The reaction was allowed to react under nitrogen at 180°C for 30 min., at 200°C for 75 min., at 220°C for 90 min., and at 230°C for about 2 hours to yield a clear, viscous mixture. A total of 7.5 mL of distillate was collected in the Dean-Stark trap.

The reactor was then reassembled to be connected to a glass vacuum tube for further reaction under reduced pressures. The reaction was allowed to continue at 230 °C under vacuum (gradually reduced to <1 mmHg) for one hour. After that, vacuum was removed and the reactor assembled back as before. The reaction mixture was then allowed to cool to 150°C, followed by the addition of trimellitic anhydride (TMA) (14.06g). After the addition of TMA, the temperature was increased to 170°C and the mixture allowed to react for about 1.5 hours. The resulting mixture was allowed to cool to room temperature and subsequently placed in dry ice to chill for ease to break and collect the solid product (126.43g). Using the same method, Resins 7-12 were prepared with or without the application of vacuum.

**Table 6**

| **Synthesized Carboxyl Functional TMCD-Based Polyesters Using IPA and AD with R-Value Variation** | | | | | | | |
|---|---|---|---|---|---|---|---|
| | Resin Composition as Charged | | | | | Post React TMA | |
| | Eq. Ratio Based on Total Alcohols (%) | | Eq. Ratio Based on Total Diacids (%) | | | TMA/Total Diacids (mole %) | |
| | TMCD | TMP | IPA | AD | OH/COOH (R value) | Vacuum before TMA | TMA |
| Resin 7 | 86.7 | 13.3 | 70 | 30 | 1.25 | N | 18.29 |
| Resin 8 | 86.7 | 13.3 | 70 | 30 | 1.25 | Y | 18.29 |
| Resin 9 | 86.7 | 13.3 | 70 | 30 | 1.30 | N | 18.29 |
| Resin 10 | 86.7 | 13.3 | 70 | 30 | 1.30 | Y | 18.29 |
| Resin 11 | 86.7 | 13.3 | 70 | 30 | 1.35 | N | 18.29 |
| Resin 12 | 86.7 | 13.3 | 70 | 30 | 1.40 | N | 18.29 |

**Table 7**

| **Analysis of Synthesized Carboxyl Functional TMCD-Based Polyesters Using IPA and AD with R-Value Variation** | | | | | | |
|---|---|---|---|---|---|---|
| | | | | | | |

| | Resin Properties | | | | | |
|---|---|---|---|---|---|---|
| | Tg, C | Mn | Mw | Acid Number Analyzed | OH Number Analyzed | AN/OH |
| Resin 7 | 80.4 | 1712 | 7481 | 79 | 30 | 2.66 |
| Resin 8 | 86.4 | 2278 | 15130 | 68 | 17 | 4 |
| Resin 9 | 81.2 | 1794 | 7436 | 68 | 32 | 2.13 |
| Resin 10 | 82.9 | 2074 | 10565 | 66 | 22 | 3 |
| Resin 11 | 81.8 | 1892 | 9233 | 61 | 36 | 1.69 |
| Resin 12 | 62.6 | 1293 | 4031 | 58 | 90 | 0.64 |

### Example 3 (Preparative): Synthesis of Carboxyl-Functional TMCD-Based Polyester Using CHDA and AD as the Diacids With An AN:OH Of At Least 0.5:1 (Resin 15)

A 500 mL, three-neck, round-bottom flask was equipped with a mechanical stirrer, a heated partial condenser, a Dean-Stark trap, and a water condenser. To the flask were charged 2,2,4,4-tetramethyl-13-cyclobutanediol (TMCD) (65.0g); trimethylolpropane (TMP) (6.19g); 1,4-cyclohexanedicarboxylic acid (CHDA) (48.2g), adipic acid (AD) (17.5g), and the acid catalyst, Fascat-4100 (Arkema Inc.) (0.21g). The reaction was allowed to react under nitrogen at 180°C for 50 min., at 200°C for 60 min., at 220°C for 80 min., and at 230°C for about 2 hours to yield a clear, viscous mixture. A total of 12 mL of distillate was collected in the Dean-Stark trap.

The reaction mixture was then allowed to cool to 150°C, followed by the addition of trimellitic anhydride (TMA) (14.06g). After the addition of TMA, the temperature was increased to 170°C and the mixture allowed to react for about 1.5 hours. The resulting mixture was allowed to cool to room temperature and subsequently placed in dry ice to chill for ease to break and collect the solid product (129.7g). Using the same method, Resins 13-18 were prepared with or without the application of vacuum.

**Table 8**

| **Synthesized Carboxyl Functional TMCD-Based Polyesters Using CHDA and AD with R-Value Variation** | | | | | | | |
|---|---|---|---|---|---|---|---|
| | Resin Composition as Charged | | | | | Post React TMA | |
| | Eq. Ratio Based on Total Alcohols (%) | | Eq. Ratio Based on Total Diacids (%) | | | TMA/Diacids (mole %) | |
| | TMCD | TMP | CHDA | AD | OH/COOH (R value) | Vacuum before TMA | TMA |
| Resin 13 | 86.7 | 13.3 | 70 | 30 | 1.25 | N | 18.29 |
| Resin 14 | 86.7 | 13.3 | 70 | 30 | 1.25 | Y | 18.29 |
| Resin 15 | 86.7 | 13.3 | 70 | 30 | 1.30 | N | 18.29 |
| Resin 16 | 86.7 | 13.3 | 70 | 30 | 1.30 | Y | 18.29 |
| Resin 17 | 86.7 | 13.3 | 70 | 30 | 1.35 | N | 18.29 |
| Resin 18 | 86.7 | 13.3 | 70 | 30 | 1.40 | N | 18.29 |

**Table 9**

| **Analysis of Synthesized Carboxyl Functional TMCD-Based Polyesters Using CHDA and AD with R-Value Variation** | | | | | | |
|---|---|---|---|---|---|---|
| | Resin Properties | | | | | |
| | Tg, C | Mn | Mw | Acid Number Analyzed | OH Number Analyzed | AN:OH |
| Resin 13 | 59.0 | 2115 | 20605 | 84 | 31 | 2.71 |
| Resin 14 | 56.0 | 1621 | 21907 | 77 | 11 | 7 |
| Resin 15 | 53.3 | 1648 | 10418 | 72 | 25 | 2.88 |
| Resin 16 | 55.9 | 1155 | 27532 | 77 | 15 | 5.13 |
| Resin 17 | 52.9 | 1920 | 9412 | 64 | 32 | 2 |
| Resin 18 | 46.5 | 1612 | 5221 | 65 | 48 | 1.35 |

### Example 4 (Preparative): Preparation of Aqueous Dispersions of Various Polyesters

Below is a typical procedure for the preparation of aqueous dispersions of the polyesters synthesized.

A Parr reactor was used for the preparation of the resin dispersion. Resin 1 was first ground to about 6mm pellets. The resin pellets (42.0g) were then placed in the reaction vessel along with distilled water (78.0g) and dimethylethanolamine (DMEA) (7.36g) for neutralization. The amount of DMEA added for neutralization (100%) is calculated according to the measured acid number of the resin. The Parr reactor was then assembled and heated first to 95°C and then to 110°C. The stirring was allowed to continue at 110°C for 45 min. and subsequently allowed to cool to 50°C. The resulting dispersion was filtered with a standard paint filter and collected.

Aqueous dispersion (35% solids) was prepared from each resin. Particle size and pH were analyzed for each dispersion. Particle size was measured using Nanotrac (Microtrac Inc.). The results are listed in Table10. The particle size, MV, represents the mean diameter in nanometer (nm) of the volume distribution.

**Table 10**

| **Particle Size and pH of Various TMCD Polyester Dispersions** | | |
|---|---|---|
| | Dispersion (35% Solids) | |
| | Particle size, MV (nm) | pH |
| Resin 1 | 11.29 | 9.30 |
| Resin 2 | 12.80 | 7.15 |
| Resin 3 | 10.95 | 7.96 |
| Resin 4 | 13.20 | 6.95 |
| Resin 5 | 13.12 | 8.57 |
| Resin 6 | 14.08 | 7.88 |
| Resin 7 | 13.03 | 7.80 |
| Resin 8 | 14.74 | 7.08 |
| Resin 9 | 12.49 | 8.74 |
| Resin 10 | 16.89 | 6.79 |
| Resin 11 | 13.31 | 7.26 |
| Resin 12 | 19.86 | 7.34 |
| Resin 13 | 16.42 | 7.60 |
| Resin 14 | 32.70 | 6.61 |
| Resin 15 | 15.77 | 7.92 |
| Resin 16 | 55.50 | 6.15 |
| Resin 17 | 16.55 | 7.92 |
| Resin 18 | 17.91 | 7.52 |

### Example 5 (Preparative): Synthesis of Carboxyl-Functional TMCD-Based Curable Polyester Resin With AN:OH Of At Least 0.5:1 (Resin 25)

A 500 mL, three-neck, round-bottom flask was equipped with a mechanical stirrer, a heated partial condenser, a Dean-Stark trap, and a water condenser. To the flask were charged neopentyl glycol (NPG) (9.7g); 2,2,4,4-tetramethyl-13-cyclobutanediol (TMCD) (56.5g); trimethylolpropane (TMP) (6.66g); 1,4-cyclohexanedicarboxylic acid (CHDA) (68.9g), and the acid catalyst, Fascat-4100 (Arkema Inc.) (0.21g). The reaction was allowed to react under nitrogen at 180°C for 30 min., at 200°C for 60 min., at 220°C for 90 min., and at 230°C for about 2 hours to yield a clear, viscous mixture. A total of 11.0 mL of distillate was collected in the Dean-Stark trap.

The reaction mixture was then allowed to cool to 150°C, followed by the addition of trimellitic anhydride (TMA) (14.95g). After the addition of TMA, the temperature was increased to 170°C and the mixture allowed to react for about 2 hours. The resulting mixture was allowed to cool to room temperature and subsequently placed in dry ice to chill for ease to break and collect the solid product (134.81g).

Using the same method as above, the following TMCD polyesters were synthesized with variation in branching level and using CHDA as the diacid (Table 11), variation in branching level and using CHDA and AD as the diacids (Table 13), variation in TMCD level and having fixed branching level (Table 15), and variation in CHDA and AD and having fixed branching level (Table 17). The analysis of each follows in the subsequent Table.

**Table 11**

| **Synthesized Carboxyl Functional TMCD Polyesters with Variation in Branching Level and Using CHDA as the Diacid** | | | | | |
|---|---|---|---|---|---|
| | Resin Composition as Charged | | | | Post React TMA |
| | Eq. Ratio Based on Total Alcohols (%) | | Eq. Ratio Based on Total Dicids (%) | | TMA/Diacids (mole %) |
| | TMCD | TMP | CHDA | OH/COOH (R value) | TMA |
| Resin 19 | 86.7 | 13.3 | 100.0 | 1.40 | 18.33 |
| Resin 20 | 93.4 | 6.7 | 100.0 | 1.40 | 18.33 |
| Resin 21 | 96.7 | 3.3 | 100.0 | 1.40 | 18.33 |

**Table 12**

| **Analysis of Synthesized Carboxyl Functional Polyesters with Variation in Branching Level and Using CHDA as the Diacid** | | | | | | |
|---|---|---|---|---|---|---|
| | Resin Properties | | | | | |
| | Tg, C | Mn | Mw | Acid Number Analyzed | OH Number Analyzed | AN:OH Ratio |
| Resin 19 | 75.2 | 1949 | 6126 | 66.0 | 47.0 | 1.4 |
| Resin 20 | 70.6 | 1748 | 3618 | 68.0 | 45.0 | 1.51 |
| Resin 21 | 77.0 | 1806 | 3564 | 68.0 | 38.0 | 1.79 |

**Table 13**

| **Synthesized Carboxyl Functional TMCD Polyesters with Variation in Branching Level and Using CHDA and AD as the Diacids** | | | | | | |
|---|---|---|---|---|---|---|
| | Resin Composition as Charged | | | | | Post React TMA |
| | Eq. Ratio Total Alc Based on ohols (%) | | Eq. Ratio Diacids Based on Total (%) | | | TMA/Diacids (mole %) |
| | TMCD | TMP | CHDA | AD | OH/COOH (R value) | TMA |
| Resin 22 | 93.3 | 6.7 | 50 | 50 | 1.40 | 18.33 |
| Resin 23 | 86.7 | 13.3 | 50 | 50 | 1.40 | 18.33 |
| Resin 24 | 80.0 | 20.0 | 50 | 50 | 1.40 | 18.33 |

**Table 14**

| **Analysis of Synthesized Carboxyl Functional TMCD-Based Polyesters with Variation in Branching Level and Using CHDA and AD as the Diacids** | | | | | | |
|---|---|---|---|---|---|---|
| | Resin Properties | | | | | |
| | Tg, C | Mn | Mw | Acid Number Analyzed | OH Number Analyzed | AN:OH Ratio |
| Resin 22 | 34.6 | 1720 | 4176 | 60 | 55 | 1.09 |
| Resin 23 | 39.0 | 1779 | 6651 | 66 | 54 | 1.22 |
| Resin 24 | 37.6 | 1752 | 12871 | 63 | 46 | 1.37 |

**Table 15**

| **Synthesized Carboxyl Functional TMCD Polyesters with Variation in TMCD Level and Having Fixed Branching Level** | | | | | | |
|---|---|---|---|---|---|---|
| | Resin Composition as Charged | | | | | Post React TMA |
| | Eq. Ratio Based on Total Alcohols (%) | | | Eq. Ratio Based on Total Diacids (%) | | TMA/Diacids (mole %) |
| | TMCD | TMP | NPG | CHDA | OH/COOH (R value) | TMA |
| Resin 25 | 70.0 | 13.3 | 16.7 | 100.0 | 1.40 | 18.33 |
| Resin 26 | 80.0 | 13.3 | 6.7 | 100.0 | 1.40 | 18.33 |
| Resin 27 | 86.7 | 13.3 | 0.0 | 100.0 | 1.40 | 18.33 |

**Table 16**

| **Analysis of Synthesized Carboxyl Functional TMCD-Based Polyesters with Variation in CHDA and AD and Having Fixed Branching Level** | | | | | | |
|---|---|---|---|---|---|---|
| | Resin Properties | | | | | |
| | Tg, C | Mn | Mw | Acid Number Analyzed | OH Number Analyzed | AN:OH Ratio |
| Resin 28 | 53.8 | 1490 | 4301 | 63 | 40 | 1.5 |
| Resin 29 | 41.7 | 1556 | 5640 | 63 | 51 | 1.23 |
| Resin 30 | 39.0 | 1779 | 6651 | 66 | 54 | 1.22 |

**Table 17**

| **Synthesized Carboxyl Functional TMCD Polyesters with Variation in CHDA and AD and Having Fixed Branching Level** | | | | | | |
|---|---|---|---|---|---|---|
| | Resin Composition as Charged | | | | | Post React TMA |
| | Eq. Ratio Based on Total Alcohols (%) | | Eq. Ratio Based on Total Diacids (%) | | | TMA/Diacids (mole %) |
| | TMCD | TMP | CHDA | AD | OH/COOH (R value) | TMA |
| Resin 28 | 86.7 | 13.3 | 70 | 30 | 1.40 | 18.33 |
| Resin 29 | 86.7 | 13.3 | 60 | 40 | 1.40 | 18.33 |
| Resin 30 | 86.7 | 13.3 | 50 | 50 | 1.40 | 18.33 |

**Table 18**

| **Analysis of Synthesized Carboxyl Functional TMCD-Based Polyesters with Variation in TMCD Level and Having Fixed Branching Level** | | | | | | |
|---|---|---|---|---|---|---|
| | Resin Properties | | | | | |
| | Tg, C | Mn | Mw | Acid Number Analyzed | OH Number Analyzed | AN:OH Ratio |
| Resin 25 | 55.0 | 1579 | 4570 | 63.0 | 63.0 | 1 |
| Resin 26 | 68.7 | 1844 | 5498 | 62.0 | 48.0 | 1.29 |
| Resin 27 | 75.2 | 1949 | 6126 | 66.0 | 47.0 | 1.4 |

### Example 6 (Preparative): Preparation of Aqueous Dispersions of Various Polyesters

Below is a typical procedure for the preparation of aqueous dispersions of the polyesters synthesized.

Polyester was first ground to pellets (about 6 mm). An amount of 50 g polyester was used for making dispersion with about 35% solids. Water (92.86g) was charged to a 500mL three-necked round bottom flask and heated to 80°C, followed by the addition of ammonium hydroxide solution (6.00g; 28-30% ammonia in water) as the neutralizing agent. To the stirred mixture was added polyester (50.0g) gradually (scoop by scoop). The addition was complete in about 30 minutes. A defoamer (about 6 drops) (BYK-024) and additional NH4OH (0.50g) were then added. The stirring was allowed to continue at 80°C for one hour and subsequently allowed to cool to room temperature. The resulting dispersion was filtered and collected.

Aqueous dispersions (35% solids) were prepared from each resin. Particle size and pH were analyzed for each dispersion. Particle size was measured using Nanotrac (Microtrac Inc.). The results are listed in Table 19. The particle size, MV, represents the mean diameter in nanometer (nm) of the volume distribution.

**Table 19**

| **Particle Size and pH of Various TMCD Polyester Dispersions** | | |
|---|---|---|
| | Dispersion | |
| | | pH (ammonium |
| | Particle size, MV (nm) | neutralized) |
| Resin 19 | 16.6 | 7.43 |
| Resin 20 | 14.4 | 7.38 |
| Resin 21 | 13.0 | 7.39 |
| Resin 22 | 36.8 | 8.06 |
| Resin 23 | 17.8 | 7.21 |
| Resin 24 | 42.6 | 7.04 |
| Resin 25 | 18.1 | 8.80 |
| Resin 26 | 16.7 | 8.20 |
| Resin 27 | 16.6 | 7.43 |
| Resin 28 | 13.70 | 7.74 |
| Resin 29 | 29.3 | 6.95 |
| Resin 30 | 17.8 | 7.21 |

### Example 7 (Comparative): Preparation of Various Solvent-Based Formulations

As listed in Table 20, solvent-based formulations were prepared by using Resins 5, 6, 10, and 14. Polyester solutions (35% solids) were first prepared by dissolving the polyesters in methyl amyl ketone (MAK). Three formulations were then prepared from each polyester by mixing respectively the polyester solution with a phenolic resin (PHENODUR® PR 516/60B or PHENODUR® PR 371/70B) or a combination of phenolic resin and an amino resin (Cymel 303 available from Allnex) in the presence of an acid catalyst, p-toluenesulfonic acid (pTSA).

**Table 20**

| **Compositions of Various Formulations** | | | | | | |
|---|---|---|---|---|---|---|
| **Formulation** | **Polyester (35% in MAK); grams** | **Phenolic Resin; grams** | **Cymel 303 (100%); grams** | **pTSA (5% in isopropanol); grams** | **Resin Ratio** | **Catalyst Ratio** |
| **1** | 10 (Resin 5) | 2.5 (PR516/60B) | | 0.5 | 70/30 | 0.5 phr |
| **2** | 10 (Resin 5) | 2.14 (PR371/70B) | | 0.5 | 70/30 | 0.5 phr |
| **3** | 10 (Resin 5) | 1.43 (PR371/70B) | 0.5 | 0.5 | 70/20/10 | 0.5 phr |
| **4** | 10 (Resin 6) | 2.5 (PR516/60B) | | 0.5 | 70/30 | 0.5 phr |
| **5** | 10 (Resin 6) | 2.14 (PR371/70B) | | 0.5 | 70/30 | 0.5 phr |
| **6** | 10 (Resin 6) | 1.43 (PR371/70B) | 0.5 | 0.5 | 70/20/10 | 0.5 phr |
| **7** | 10 (Resin 10) | 2.5 (PR516/60B) | | 0.5 | 70/30 | 0.5 phr |
| **8** | 10 (Resin 10) | 2.14 (PR371/70B) | | 0.5 | 70/30 | 0.5 phr |
| **9** | 10 (Resin 10) | 1.43 (PR371/70B) | 0.5 | 0.5 | 70/20/10 | 0.5 phr |
| **10** | 10 (Resin14) | 2.5 (PR516/60B) | | 0.5 | 70/30 | 0.5 phr |
| **11** | 10 (Resin 14) | 2.14 (PR371/70B) | | 0.5 | 70/30 | 0.5 phr |
| **12** | 10 (Resin 14) | 1.43 (PR371/70B) | 0.5 | 0.5 | 70/20/10 | 0.5 phr |

### Example 8 (Comparative): Evaluation of Cured Films by MEK Double Rub Test

Formulations 1-12 prepared in Example 7 were drawn down respectively on cold-rolled steel test panels (ACT 3x9x032 from Advanced Coating Technologies) using a draw-down bar and subsequently baked in an oven at 205°C for 10 minutes. The thickness of the coating films was about 20 to 25 µm. The degree of crosslinking of the cured films was determined by their solvent resistance using MEK Double Rub Method (ASTM D4752). The results are collected in Table 21. Typically a result of >30 is considered acceptable and >200 is preferred. It was also found that formulations 3, 6, 9, 12, which contained 10% amino crosslinker, Cymel 303, formed cured coatings with much less color as compared to the ones without Cymel 303-slightly yellow vs. gold color by visual appearance to the eye.

**Table 21**

| **MEK Double Rub Test of the Cured Films from Various Formulations** | | | | | | | | | | | | |
|---|---|---|---|---|---|---|---|---|---|---|---|---|
| Formulation | 1 | 2 | 3 | 4 | 5 | 6 | 7 | 8 | 9 | 10 | 11 | 12 |
| MEK double rubs (slight or no effect) | 30 | 500 | 500 | 30 | 500 | 500 | 50 | 500 | 500 | 30 | 200 | 400 |

### Example 9 (Preparative): Synthesis of Phenolic Resin Based on m-Cresol (m-Cresol/HCHO)

To a round-bottom flask equipped with a water-jacketed condenser were added m-cresol (30.0 g), paraformaldehyde (16.7 g), triethylamine (5.6 g), and toluene (200 mL). The reaction mixture was stirred and allowed to react at 60 °C for 5 hours. After the reaction, the resulting mixture was cooled to room temperature, which was separated into two layers- an oily resin layer and a toluene layer at the top. The resin layer was collected and washed repeatedly with fresh toluene using a rotary evaporator. The resulting viscous resin was dissolved in methyl ethyl ketone and subsequently filtered to remove the insoluble impurities. The solvent was removed under reduced pressure, and the resulting resin was mixed with toluene to further remove the volatiles using the rotary evaporator. A highly viscous, brown-yellow resin was obtained. The yield was 25 g.

### Example 10 (Preparative): Synthesis of Phenolic Resin Based on o-Cresol (o-Cresol/HCHO)

To a round-bottom flask equipped with a water-jacketed condenser were added o-cresol (43.2 g), aqueous formaldehyde solution (37 wt.%, 162 g), and NaOH (20 wt.% in water, 15 mL). The reaction mixture was stirred and allowed to react at 60 °C for three days. After the reaction, the resulting mixture was cooled to room temperature, which was separated into two layers- an oily resin layer and a water layer at the top. The resin layer was collected and subsequently dissolved in ethanol. To the resin solution was added dilute aqueous HCl solution. The resin layer was collected and washed repeatedly with ethanol using a rotary evaporator. The resulting resin solid was collected and dried under vacuum at 40- 45 °C to yield a yellow powdery product. The yield was 50 g.

### Example 11 (Preparative): Synthesis of Phenolic Resin Based on p-Cresol (p-Cresol/HCHO)

To a round-bottom flask equipped with a water-jacketed condenser were added p-cresol (43.2 g), aqueous formaldehyde solution (37 wt.%, 162 g), and NaOH (20 wt.% in water, 15 mL). The reaction mixture was stirred and allowed to react at 60 °C for three days. After the reaction, the resulting mixture was cooled to room temperature and aqueous HCl solution added to yield a precipitate. The resulting resin solid was collected, washed repeated with water, and dried under vacuum at 40- 45 °C to yield a yellow powdery product. The yield was 45 g.

### Example 12 (Comparative): Preparation of Solvent-Based Formulations Using Various Cresol- Based Phenolic Resins

As listed in Table 22, solvent-based formulations were prepared by using Resins 6 and various cresol based phenolic resins, m-Cresol/HCHO, o-Cresol/HCHO, and p-Cresol/HCHO, prepared in Example 9-11. Polyester solutions (35% solids) were first prepared by dissolving the polyester (Resin 6) in methyl amyl ketone (MAK). Three formulations were then prepared by mixing respectively the polyester solution with a phenolic resin (m-Cresol/HCHO, o-Cresol/HCHO, and p-Cresol/HCHO) in the presence of an acid catalyst, p-toluenesulfonic acid (pTSA).

**Table 22**

| **Compositions of Various Formulations** | | | | | | |
|---|---|---|---|---|---|---|
| Formulation | Polyester (35% in MAK); grams | Phenolic Resin Solution | Phenolic Resin Solution; grams | pTSA (5% in isopropanol); grams | Resin Ratio | Catalyst Ratio |
| 13 | 10 (Resin 6) | m-Cresol/HCHO (70% in MAK) | 2.14 | 0.5 | 70/30 | 0.5 phr |
| 14 | 10 (Resin 6) | o-Cresol/HCHO (50% in MAK) | 3 | 0.5 | 70/30 | 0.5 phr |
| 15 | 10 (Resin 6) | p-Cresol/HCHO (50% in cyclopentanone) | 3 | 0.5 | 70/30 | 0.5 phr |

### Example 13 (Comparative): Evaluation of Cured Films by MEK Double Rub Test

Formulations 13-15 prepared in Example 12 were drawn down respectively on cold-rolled steel test panels (ACT 3x9x032 from Advanced Coating Technologies) using a draw-down bar and subsequently baked in an oven at 205°C for 10 minutes. The thickness of the coating films was about 20 to 25 µm. The degree of crosslinking of the cured films was determined by their solvent resistance using MEK Double Rub Method (ASTM D4752). The results are collected in Table 23. Typically a result of >30 is considered acceptable and >200 is preferred.

**Table 23**

| **MEK Double Rub Test of the Cured Films from Various Formulations** | | | |
|---|---|---|---|
| Formulation | 13 | 14 | 15 |
| MEK double rubs (slight or no effect) | 300 | <20 | <20 |

### Example 14 (Preparative). Synthesis of Unsaturated Polyester (Resin 31) (NPG Based, Branched)

A 500 mL, three-neck, round-bottom flask was equipped with a mechanical stirrer, a heated partial condenser, a Dean-Stark trap, and a water condenser. To the flask were charged neopentyl glycol (NPG) (68.82g, 0.662 mole); trimethylolpropane (TMP) (4.44g, 0.033 mole); isophthalic acid (IPA) (59.17g, 0.356 mole); maleic anhydride (MA) (17.47g, 0.178 mole), and the acid catalyst, Fascat-4100 (Arkema Inc.) (0.22g). The reaction was allowed to react under nitrogen at 180°C for 55min., at 200°C for 50 min., at 220°C for 85 min., and at 230°C for about 2.5 hours to yield a clear, viscous mixture. A total of 13.5 mL of distillate was collected in the Dean-Stark trap. The resulting mixture was allowed to cool to room temperature and subsequently collected. Acid number: <1.0 mgKOH/g; hydroxyl number: 64.0 mgKOH/g; glass transition temperature (Tg): 39.9 °C; number average molecular weight (Mn): 2865; weight average molecular weight (Mw): 60323.

### Example 15 (Preparative). Synthesis of Unsaturated Polyester (Resin 32) (NPG/TMCD Based. Branched)

A 500 mL, three-neck, round-bottom flask was equipped with a mechanical stirrer, a heated partial condenser, a Dean-Stark trap, and a water condenser. To the flask were charged 2,2,4,4-tetramethylcyclobutane-1,3-diol (TMCD) (47.64g, 0.331 mole), neopentyl glycol (NPG) (34.41g, 0.331 mole); trimethylolpropane (TMP) (4.44g, 0.033 mole); isophthalic acid (IPA) (59.17g, 0.356 mole); maleic anhydride (MA) (17.47g, 0.178 mole), and the acid catalyst, Fascat-4100 (Arkema Inc.) (0.24g). The reaction was allowed to react under nitrogen at 180°C for 75min., at 200°C for 2 hours, at 220°C for 50 min., and at 230°C for about 80 min. to yield a clear, viscous mixture. A total of 15.5 mL of distillate was collected in the Dean-Stark trap. The resulting mixture was allowed to cool to room temperature and subsequently collected. Acid number: <1.0 mgKOH/g; hydroxyl number: 88.8 mgKOH/g; glass transition temperature (Tg): 51.5 °C; number average molecular weight (Mn): 2312; weight average molecular weight (Mw): 11538.

### Example 16 (Preparative). Synthesis of Unsaturated Polyester (Resin 33) (NPG/TMCD Based, Linear)

A 500 mL, three-neck, round-bottom flask was equipped with a mechanical stirrer, a heated partial condenser, a Dean-Stark trap, and a water condenser. To the flask were charged 2,2,4,4-tetramethylcyclobutane-1,3-diol (TMCD) (47.64g, 0.331 mole), neopentyl glycol (NPG) (34.41g, 0.331 mole); isophthalic acid (IPA) (59.17g, 0.356 mole); maleic anhydride (MA) (17.47g, 0.178 mole), and the acid catalyst, Fascat-4100 (Arkema Inc.) (0.24g). The reaction was allowed to react under nitrogen at 180°C for 30min., at 200°C for 65 min., at 220°C for 75 min., and at 230°C for about 2 hours to yield a clear, viscous mixture. A total of 17.5 mL of distillate was collected in the Dean-Stark trap. The resulting mixture was allowed to cool to room temperature and subsequently collected. Acid number: <2.2 mgKOH/g; hydroxyl number: 48.8 mgKOH/g; glass transition temperature (Tg): 61.2 °C; number average molecular weight (Mn): 4354; weight average molecular weight (Mw): 28180.

### Example 17 (Comparative). Formulation and Evaluation of Curing of Resins 31-33 with Various Phenolic Resins

Polyester resin solutions (35% solids) were prepared by dissolving resins 31-33 respectively in methyl amyl ketone (MAK). Separately, phenolic resins solutions (50% solids) were prepared by dissolving SP-103 and HRJ-1367 (both from SI Group) respectively in MAK. Formulations (polyester/phenolic= 70/30) were then prepared by mixing each polyester resin solution (10g, 35% in MAK) with various phenolic resins respectively and p-toluenesulfonic acid (pTSA) (0.5 g, 5% in isopropanol). Besides SP-103 and HRJ-1367, the phenolic resins used were Phenodur PR516/60B (60% in n-butanol) and Phenodur PR371/70B (70% in n-butanol), both from Allnex. According to ventor's literature, Phenodur PR371/70B is based on unsubstituted phenol.

### Evaluation of Curing:

Each of the above formulations was drawn down on a Bonderite 1000 cold-rolled steel test panel (ACT Test Panel Technologies) using a drawdown bar. The coated panels were baked at 205 °C for 10 min. The coatings (dried film thickness: about 20 µm) were then evaluated for curing by MEK double rubs (ASTM D4752). The results are listed in Table 24.

**Table 24**

| **Curing Evaluation of Formulations Based on Polyester Resins 31-33 and Various Phenolic Resins (Polyester/Phenolic= 70/30) by MEK Double Rubs** | | | | |
|---|---|---|---|---|
| Formulation | SP-103 | HRJ-1367 | PR516/60B | PR371/70B |
| Resin 31 | Moderate mar at 20 double rubs | Moderate mar at 30 | Moderate mar at 100 | No effect at 500 |
| Resin 32 | Moderate mar at 30 | Moderate mar at 40 | Slight mar at 50 | No effect at 500 |
| Resin 33 | severe mar at 20 | severe mar at 50 | Moderate mar at 400 | No effect at 500 |

Additionally, formulations having polyester/phenolic = 50/50 were prepared by mixing polyester resin 33 solution (7.14g, 35% in MAK) with various phenolic resins respectively and p-toluenesulfonic acid (pTSA) (0.5 g, 5% in isopropanol). The formulation was evaluated for curing as described above. The results are listed in Table 25.

**Table 25**

| **Curing Evaluation of Formulations Based on Polyester Resins 33 and Various Phenolic Resins (Polyester/Phenolic= 50/50) by MEK Double Rubs** | | | | |
|---|---|---|---|---|
| Formulation | SP-103 | HRJ-1367 | PR516/60B | PR371/70B |
| Resin 33 | Moderate mar at 50 double rubs | Slight mar at 20 | Slight mar at 100 | No effect at 500 |

### Example 18 (Preparative). Synthesis of Waterborne Unsaturated Polyester (Resin 34)

A 500 mL, three-neck, round-bottom flask was equipped with a mechanical stirrer, a heated partial condenser, a Dean-Stark trap, and a water condenser. To the flask were charged neopentyl glycol (NPG) (61.0g, 0.586 mole); trimethylolpropane (TMP) (3.94g, 0.0294 mole); isophthalic acid (IPA) (50.1g, 0.3015 mole); maleic anhydride (MA) (14.6g, 0.1485 mole), and the acid catalyst, Fascat-4100 (Arkema Inc.) (0.19g). The reaction was allowed to react under nitrogen at 180°C for 15min., at 200°C for one hour, at 220°C for 2 hours, and at 230°C for about 95 min. to yield a clear, viscous mixture. A total of 11.5 mL of distillate was collected in the Dean-Stark trap. The resulting mixture was allowed to cool to 140°C; trimellitic anhydride (TMA) (12.33g, 0.0642 mole) was then added. The reaction was allowed to continue at 170 C for 2 hours and subsequently isolated. Acid number: 48.8 mgKOH/g; hydroxyl number: 41.9 mgKOH/g; glass transition temperature (Tg): 51.7 °C; number average molecular weight (Mn): 2796; weight average molecular weight (Mw): 19620.

### Example 19 (Preparative). Preparation of Aqueous Dispersions of Polyester Resin 34

A Parr reactor was used for the preparation of the resin dispersion. Polyester resin 34 was first ground to about 6mm pellets. The resin pellets (42.0g) was then placed in the reaction vessel along with distilled water (78.0g) and DMEA (3.34) for neutralization. The amount of DMEA needed for neutralization is calculated according to the measured acid number of the resin being dispersed. The Parr reactor was then assembled and heated first to 95°C and then to 110°C. The stirring was allowed to continue at 110°C for 45 min. and subsequently allowed to cool to 50°C. The resulting dispersion was filtered with a standard paint filter and collected to yield a milky dispersion (35% solids).

### Example 20 (Preparative). Synthesis of Acetoacetate Functional Polyester (Curable Polyester Resin 35)

### Hydroxyl Functional Polyester 35:

A 500 mL, three-neck, round-bottom flask was equipped with a mechanical stirrer, a heated partial condenser, a Dean-Stark trap, and a water condenser. To the flask were charged 2,2,4,4-tetramethyl-13-cyclobutanediol (TMCD) (376.9g); trimethylolpropane (TMP) (16.66g); isophthalic acid (IPA) (232.6g); adipic acid (AD) (87.7g), and the acid catalyst, Fascat-4100 (Arkema Inc.) (1.07g). The reaction was allowed to react under nitrogen at 180°C for 30 min., at 200°C for 45 min., at 220°C for 90 min., and at 230°C for about 2 hours to yield a clear, viscous mixture. A total of 72.5 mL of distillate was collected in the Dean-Stark trap. The resulting mixture was allowed to cool to room temperature and subsequently collected (612g). Acid number: <1.0 mgKOH/g; hydroxyl number: 113.4 mgKOH/g; glass transition temperature (Tg): 39.2 °C; number average molecular weight (Mn): 1459; weight average molecular weight (Mw): 2673.

### Curable Polyester 35:

To a 500 mL, three-neck, round-bottom flask equipped with a mechanical stirrer, a heated partial condenser, a Dean-Stark trap, and a water condenser were added the above hydroxyl-functional polyester 35 (80.0g) and t-butyl acetoacetate (6.75g). The mixture was gradually heated and allowed to react at 120° C for 40 minutes and at 140° C for two hours. A total of 2.5 ml of the condensate (t-butanol) was collected in the Dean-Stark adapter. The resulting viscous resin was allowed to cool and subsequently collected. Glass transition temperature (Tg): 33.1 °C; number average molecular weight (Mn): 1526; weight average molecular weight (Mw): 2723.

### Example 21 (Preparative). Synthesis of Acetoacetate Functional Polyester (Curable Polyester Resin 36)

To a 500 mL, three-neck, round-bottom flask equipped with a mechanical stirrer, a heated partial condenser, a Dean-Stark trap, and a water condenser were added the above hydroxyl-functional polyester 35 (80.0g) and t-butyl acetoacetate (11.27g). The mixture was gradually heated and allowed to react at 120° C for 50 minutes and at 140° C for two hours. A total of 5.5 ml of the condensate (t-butanol) was collected in the Dean-Stark adapter. The resulting viscous resin was allowed to cool and subsequently collected. Glass transition temperature (Tg): 28.4 °C; number average molecular weight (Mn): 1550; weight average molecular weight (Mw): 2752.

### Example 22 (Preparative). Synthesis of Acetoacetate Functional Polyester (Curable Polyester Resin 37)

To a 500 mL, three-neck, round-bottom flask equipped with a mechanical stirrer, a heated partial condenser, a Dean-Stark trap, and a water condenser were added the above hydroxyl-functional polyester 35 (80.0g) and t-butyl acetoacetate (15.77g). The mixture was gradually heated and allowed to react at 120° C for 25 minutes and at 140° C for 2.5 hours. A total of 7.5 ml of the condensate (t-butanol) was collected in the Dean-Stark adapter. The resulting viscous resin was allowed to cool and subsequently collected. Glass transition temperature (Tg): 23.5 °C; number average molecular weight (Mn): 1575; weight average molecular weight (Mw): 2765.

### Example 23. Formulation and Evaluation of Curing of Curable Polyester Resins 35-37

### Formulation A (polyester/phenolic= 50/50):

Resin solutions (40% solids) were prepared by dissolving curable polyester resins 35-37 respectively in xylene. Formulations were then prepared by mixing each resin solution (6.25g) with Phenodur PR516/60B (available from Allnex) (4.17g, 60% in n-butanol) and p-toluenesulfonic acid (pTSA) (0.625 g, 4% in isopropanol).

### Formulation B (polyester/phenolic/melamine= 70/20/10):

Resin solutions (40% solids) were prepared by dissolving resins 35-37 respectively in xylene. Formulations were then prepared by mixing each resin solution (8.75g) with Phenodur PR516/60B (available from Allnex) (1.67g, 60% in n-butanol), Cymel 303 (Allnex) (0.5g), and p-toluenesulfonic acid (pTSA) (0.625 g, 4% in isopropanol).

### Formulation C (polyester/phenolic= 70/30):

Resin solutions (40% solids) were prepared by dissolving resins 35-37 respectively in xylene. Formulations were then prepared by mixing each resin solution (8.75g) with Phenodur PR516/60B (available from Allnex) (2.5g, 60% in n-butanol) and p-toluenesulfonic acid (pTSA) (0.625 g, 4% in isopropanol).

### Evaluation of Curing:

Each of the above formulations was drawn down on a Bonderite 1000 cold-rolled steel test panel (ACT Test Panel Technologies) using a drawdown bar. One set of the coated panels was then baked at 200 °C for 5 min, and the other set baked at 160 °C for 30 min. The baked panels (dried film thickness: about 20 µm) were then evaluated for curing by MEK double rubs (ASTM D4752). All panels were stopped at 100 double rubs and visually inspected for their effects. It was found that all coatings showed various degrees of mars with the most effect on two ends. Those cured at 200 °C for 5 min. were slightly better than those at 160 °C for 30 min. The following trend was observed:
Degree of mars: Formulations A >C >B
Degree of mars for formulation B: Curable Polyester Resins 35>36>37
Degree of mars for formulation C: Curable Polyester Resins 35>36≥37

In addition, it was found that those with 10% melamine in the formulation had significantly lower color (yellow) than those with phenolic resin only (brown). Two comparative formulations were prepared using hydroxyl functional polyester 35 and the phenolic resin according to formulations A and C and subsequently evaluated for curing. The resulting coatings were found to have little MEK resistance; the films were rubbed off.

### Example 24 (Preparative). Synthesis of Acetoacetate Functional Polyester (Curable Polyester Resin 38)

### Hydroxyl Functional Polyester 38:

A 500 mL, three-neck, round-bottom flask was equipped with a mechanical stirrer, a heated partial condenser, a Dean-Stark trap, and a water condenser. To the flask were charged neopentyl glycol (NPG) (163.3g); trimethylolpropane (TMP) (9.99g); 1,4-cyclohexanedicarboxylic acid (CHDA) (103.3g); adipic acid (AD) (87.7g), and the acid catalyst, Fascat-4100 (Arkema Inc.) (0.55). The reaction was allowed to react under nitrogen at 180°C for 70 min., at 200°C for 70 min., at 220°C for 85 min., and at 230°C for about 2 hours to yield a clear, viscous mixture. A total of 42 mL of distillate was collected in the Dean-Stark trap. The resulting mixture was allowed to cool to room temperature and subsequently collected (365g). Acid number: <1.0 mgKOH/g; hydroxyl number: 116.9 mgKOH/g; glass transition temperature (Tg): -31.2 °C; number average molecular weight (Mn): 1519; weight average molecular weight (Mw): 2841.

### Curable Polyester Resin 38:

To a 500 mL, three-neck, round-bottom flask equipped with a mechanical stirrer, a heated partial condenser, a Dean-Stark trap, and a water condenser were added the above hydroxyl-functional polyester 38 (80.0g) and t-butyl acetoacetate (6.76g). The mixture was gradually heated and allowed to react at 120° C for 20 minutes and at 140° C for two hours. A total of 3 ml of the condensate (t-butanol) was collected in the Dean-Stark adapter. The resulting viscous resin was allowed to cool and subsequently collected. Glass transition temperature (Tg): -33.4 °C; number average molecular weight (Mn): 1595; weight average molecular weight (Mw): 2974.

### Example 25 (Preparative). Synthesis of Acetoacetate Functional Polyester (Curable Polyester Resin 39)

To a 500 mL, three-neck, round-bottom flask equipped with a mechanical stirrer, a heated partial condenser, a Dean-Stark trap, and a water condenser were added the above hydroxyl-functional polyester 38 (80.0g) and t-butyl acetoacetate (11.27g). The mixture was gradually heated and allowed to react at 120° C for 15 minutes and at 140° C for two hours. A total of 5 ml of the condensate (t-butanol) was collected in the Dean-Stark adapter. The resulting viscous resin was allowed to cool and subsequently collected. Glass transition temperature (Tg): -35.7 °C; number average molecular weight (Mn): 1520; weight average molecular weight (Mw): 2931.

### Example 26 (Preparative). Synthesis of Acetoacetate Functional Polyester (Curable Polyester Resin 40)

To a 500 mL, three-neck, round-bottom flask equipped with a mechanical stirrer, a heated partial condenser, a Dean-Stark trap, and a water condenser were added the above hydroxyl-functional polyester 38 (80.0g) and t-butyl acetoacetate (15.77g). The mixture was gradually heated and allowed to react at 120° C for 15 minutes and at 140° C for 2 hours. A total of 8 ml of the condensate (t-butanol) was collected in the Dean-Stark adapter. The resulting viscous resin was allowed to cool and subsequently collected. Glass transition temperature (Tg): -37.1 °C; number average molecular weight (Mn): 1529; weight average molecular weight (Mw): 2887.

### Example 27 (Comparative). Formulation and Evaluation of Curing of Curable Polyester Resins 35-40

Resin solutions (40% solids) were prepared by dissolving curable polyester resins 35-40 respectively in xylene. Formulations 16-21 (polyester/phenolic= 70/30) were then prepared by mixing each resin solution (8.75g) with Phenodur PR371/70B (available from Allnex) (2.14g, 70% in n-butanol) and p-toluenesulfonic acid (pTSA) (0.625 g, 4% in isopropanol).

### Evaluation of Curing:

Each of the above formulations was drawn down on a Bonderite 1000 cold-rolled steel test panel (ACT Test Panel Technologies) using a drawdown bar. The coated panels were then baked at 200 °C for 5 min. The baked panels (dried film thickness: about 20 µm) were then evaluated for curing by MEK double rubs (ASTM D4752). The results are listed in Table 26.

**Table 26**

| **Curing Evaluation of Formulations Based on Various Polyester Resins and Phenolic Resin** | | | | | | |
|---|---|---|---|---|---|---|
| Polyester used in the formulation | 16: Resin 35 | 17: Resin 36 | 18: Resin 37 | 19: Resin 38 | 20: Resin 39 | 21: Resin 40 |
| MEK Double Rubs (200 rubs) | Slight effect | Almost no effect | Almost no effect | Moderate effect | Slight effect | Slight effect |

### Example 28 (Preparative). Synthesis of Acetoacetate Functional Polyester (Curable Polyester Resin 41)

### Hydroxyl Functional Polyester 41:

A 500 mL, three-neck, round-bottom flask was equipped with a mechanical stirrer, a heated partial condenser, a Dean-Stark trap, and a water condenser. To the flask were charged neopentyl glycol (NPG) (163.3g); trimethylolpropane (TMP) (9.99g); isophthalic acid (IPA) (139.6g); adipic acid (AD) (52.6g), and the acid catalyst, Fascat-4100 (Arkema Inc.) (0.55). The reaction was allowed to react under nitrogen at 180°C for 60 min., at 200°C for 60 min., at 220°C for 90 min., and at 230°C for about 2 hours to yield a clear, viscous mixture. A total of 45 mL of distillate was collected in the Dean-Stark trap. The resulting mixture was allowed to cool to room temperature and subsequently collected (298g). Acid number: <1.0 mgKOH/g; hydroxyl number: 106.2 mgKOH/g; glass transition temperature (Tg): 0.2 °C; number average molecular weight (Mn): 1563; weight average molecular weight (Mw): 3156.

### Curable Polyester Resin 41:

To a 500 mL, three-neck, round-bottom flask equipped with a mechanical stirrer, a heated partial condenser, a Dean-Stark trap, and a water condenser were added the above hydroxyl-functional polyester 41 (80.0g) and t-butyl acetoacetate (11.27g). The mixture was gradually heated and allowed to react at 140° C for two hours. A total of 5.5 ml of the condensate (t-butanol) was collected in the Dean-Stark adapter. The resulting viscous resin was allowed to cool and subsequently collected. Glass transition temperature (Tg): -7.4 °C; number average molecular weight (Mn): 1472; weight average molecular weight (Mw): 3242.

### Example 29. Formulation and Evaluation of Curing of Curable Polyester Resin 41

Formulations (polyester/phenolic= 70/30) were prepared by mixing curable polyester resin 7 solution (10g, 35% in MAK) with various phenolic resins respectively and p-toluenesulfonic acid (pTSA) (0.5 g, 5% in isopropanol).

### Evaluation of Curing:

Each of the above formulations was drawn down on a Bonderite 1000 cold-rolled steel test panel (ACT Test Panel Technologies) using a drawdown bar. The coated panels were then baked at 205 °C for 10 min. The baked panels (dried film thickness: about 20 µm) were then evaluated for curing by MEK double rubs (ASTM D4752). The results are listed below in Table 27:

**Table 27**

| **Curing Evaluation of Formulations Based on Polyester Resin 41 and Various Phenolic Resins** | | | | |
|---|---|---|---|---|
| Phenolic resin used in the formulation | SP-103 (SI Group) (50% in MAK) | HRJ-1367 (SI Group) (50% in MAK) | PR516/60B (60% in butanol) | PR371/70B (70% in butanol)* |
| MEK Double Rubs (film rubbed off at one end) | 40 | 100 | 100 | 200 |

| | | | | |
|---|---|---|---|---|
| *: Comparative | | | | |

### Example 30 (Preparative): Synthesis of Carboxyl-Functional Polyester (Resin 42)

A 500 mL, three-neck, round-bottom flask was equipped with a mechanical stirrer, a heated partial condenser, a Dean-Stark trap, and a water condenser. To the flask were charged 2,2,4,4-tetramethyl-13-cyclobutanediol (TMCD) (70.0g); trimethylolpropane (TMP) (6.66g); 1,4-cyclohexanedicarboxylic acid (CHDA) (34.4g), isophthalic acid (IPA) (33.2g), and the acid catalyst, Fascat-4100 (Arkema Inc.) (0.22g). The reaction was allowed to react under nitrogen at 180°C for 25 min., at 200°C for 60 min., at 220°C for 125 min., and at 230°C for about 2.5 hours to yield a clear, viscous mixture. A total of 12 mL of distillate was collected in the Dean-Stark trap.

The reaction mixture was then allowed to cool to 150°C, followed by the addition of trimellitic anhydride (TMA) (14.06g). After the addition of TMA, the temperature was increased to 170°C and the mixture allowed to react for about 1.5 hours. The resulting mixture was allowed to cool to room temperature and subsequently placed in dry ice to chill for ease to break and collect the solid product (133 g).

Using the same method as above, Resins 43 and 44 were synthesized. The relative amounts and the results are reported in Tables 28 and 29, wherein Mn is number average molecular weight and Mw is weight average molecular weight.

**Table 28.**

| Synthesized Carboxyl Functional Polyesters | | | | | | | | |
|---|---|---|---|---|---|---|---|---|
| | Resin Composition as Charged | | | | | | | Post React TMA |
| | Equivalent (eq.) Ratio Based on Total Alcohols (%) | | | Eq. Ratio Based on Total Diacids (%) | | | | TMA/Total Diacids (mole %) |
| | TMCD | NPG | TMP | CHDA | IPA | AD | total eq. of OH/total eq. of COOH (R value) | TMA |
| Resin 42 | 86.7 | | 13.3 | 50 | 50 | | 1.40 | 18.29 |
| Resin 43 | | 86.7 | 13.3 | | 70 | 30 | 1.40 | 18.29 |
| Resin 44 | | 86.7 | 13.3 | 50 | 50 | | 1.40 | 18.29 |

**Table 29**

| Analysis of Synthesized Carboxyl Functional Polyesters | | | | | | |
|---|---|---|---|---|---|---|
| | | | | | | |

| | Resin Properties | | | | | |
|---|---|---|---|---|---|---|
| | Tg, C | Mn | Mw | Acid Number Analyzed | OH Number Analyzed | AN:OH |
| Resin 42 | 89.6 | 1659 | 5470 | 58 | 97 | 0.60 |
| Resin 43 | 30.8 | 1996 | 6402 | 58 | 49 | 1.18 |
| Resin 44 | 42.5 | 2479 | 13455 | 58 | 57 | 1.02 |

### Example 31 (Preparative): Synthesis of Phenolic Resin Based on m-Cresol (m-Cresol/HCHO)

To a round-bottom flask equipped with a water-jacketed condenser were added m-cresol (30.0 g), paraformaldehyde (16.7 g), triethylamine (5.6 g), and toluene (200 mL). The reaction mixture was stirred and allowed to react at 60 °C for 5 hours. After the reaction, the resulting mixture was cooled to room temperature, which was separated into two layers- an oily resin layer and a toluene layer at the top. The resin layer was collected and washed repeatedly with fresh toluene using a rotary evaporator. The resulting viscous resin was dissolved in methyl ethyl ketone and subsequently filtered to remove the insoluble impurities. The solvent was removed under reduced pressure, and the resulting resin was mixed with toluene to further remove the volatiles using the rotary evaporator. A highly viscous, brown-yellow resin was obtained. The yield was 25 g.

### Example 32 (Preparative) Synthesis of Phenolic Resin Based on o-Cresol (o-Cresol/HCHO)

To a round-bottom flask equipped with a water-jacketed condenser were added o-cresol (43.2 g), aqueous formaldehyde solution (37 wt.%, 162 g), and NaOH (20 wt.% in water, 15 mL). The reaction mixture was stirred and allowed to react at 60 °C for three days. After the reaction, the resulting mixture was cooled to room temperature, which was separated into two layers- an oily resin layer and a water layer at the top. The resin layer was collected and subsequently dissolved in ethanol. To the resin solution was added dilute aqueous HCl solution. The resin layer was collected and washed repeatedly with ethanol using a rotary evaporator. The resulting resin solid was collected and dried under vacuum at 40- 45 °C to yield a yellow powdery product. The yield was 50 g.

### Example 33 (Preparative): Synthesis of Phenolic Resin Based on p-Cresol (p-Cresol/HCHO)

To a round-bottom flask equipped with a water-jacketed condenser were added p-cresol (43.2 g), aqueous formaldehyde solution (37 wt.%, 162 g), and NaOH (20 wt.% in water, 15 mL). The reaction mixture was stirred and allowed to react at 60 °C for three days. After the reaction, the resulting mixture was cooled to room temperature and aqueous HCl solution added to yield a precipitate. The resulting resin solid was collected, washed repeated with water, and dried under vacuum at 40- 45 °C to yield a yellow powdery product. The yield was 45 g.

### Example 34 (Comparative): Preparation of Solvent-Based Formulations Using Various Cresol- Based Phenolic Resins

As listed in Table 30, solvent-based formulations were prepared by using Resins 42 and various cresol based phenolic resins, m-Cresol/HCHO, o-Cresol/HCHO, and p-Cresol/HCHO, prepared in Example 31-33. Polyester solutions (35% solids) were first prepared by dissolving the polyester (Resin 1) in methyl amyl ketone (MAK). Three formulations were then prepared by mixing respectively the polyester solution with a phenolic resin (m-Cresol/HCHO, o-Cresol/HCHO, and p-Cresol/HCHO) in the presence of an acid catalyst, p-toluenesulfonic acid (pTSA).

**Table 30.**

| Compositions of Various Formulations | | | | | |
|---|---|---|---|---|---|
| Formulation | Polyester (35% in MAK); grams | Phenolic Resin Solution; grams | pTSA (5% in isopropanol); grams | Resin Ratio | Catalyst Ratio |
| 22 | 10 (Resin 42) | 2.14 m-Cresol/HCHO (70% in MAK) | 0.5 | 70/30 | 0.5 phr (parts per hundred of resin) |
| 23 | 10 (Resin 42) | 3 o-Cresol/HCHO (50% in MAK) | 0.5 | 70/30 | 0.5 phr |
| 24 | 10 (Resin 42) | 3 p-Cresol/HCHO (50% in cyclopentanon e) | 0.5 | 70/30 | 0.5 phr |

### Example 35 (Comparative): Evaluation of Cured Films by MEK Double Rub Test

Formulations 22-24 prepared in Example 34 were drawn down respectively on cold-rolled steel test panels (ACT 3x9x032 from Advanced Coating Technologies) using a draw-down bar and subsequently baked in an oven at 205°C for 10 minutes. The thickness of the coating films was about 20 to 25 µm. The degree of crosslinking of the cured films was determined by their solvent resistance using MEK Double Rub Method (ASTM D4752). The results are collected in Table 31. Typically a result of >30 is considered acceptable and >200 is preferred.

**Table 31.**

| MEK Double Rub Test of the Cured Films from Various Formulations | | | |
|---|---|---|---|
| Formulation | 22 | 23 | 24 |
| MEK double rubs (slight or no effect) | 300 | <20 | <20 |

### Example 36 (Comparative): Preparation of Various Solvent-Based Formulations

As listed in Table 32, solvent-based formulations were prepared by using Resins 43 and 44. Polyester solutions (35% solids) were first prepared by dissolving the polyesters in methyl amyl ketone (MAK). Two formulations were then prepared from each polyester by mixing respectively the polyester solutions with a phenolic resin prepared in Example 31 in the presence of an acid catalyst, p-toluenesulfonic acid (pTSA).

**Table 32.**

| Compositions of Various Formulations | | | | | |
|---|---|---|---|---|---|
| Formulation | Polyester (35% in MAK); grams | Phenolic Resin; grams | pTSA (5% in isopropanol); grams | Resin Ratio | Catalyst Ratio |
| 25 | 10 (Resin 43) | 2.14 (PR371/70B) (70% in n-butanol) | 0.5 | 70/30 | 0.5 phr |
| 26 | 10 (Resin 43) | 2.14 (m-cresol/HCHO) (70% in MAK) | 0.5 | 70/30 | 0.5 phr |
| 27 | 10 (Resin 44) | 2.14 (PR371/70B) (70% in n-butanol) | 0.5 | 70/30 | 0.5 phr |
| 28 | 10 (Resin 44) | 2.14 (m-cresol/HCHO) (70% in MAK) | 0.5 | 70/30 | 0.5 phr |

### Example 37 (Comparative). Evaluation of Cured Films by MEK Double Rub Test

Formulations 25-28 prepared in Example 36 were drawn down respectively on a cold-rolled steel test panels (ACT 3x9x032 from Advanced Coating Technologies using a drawn-down bar and subsequently baked in an oven at 205°C for 10 minutes. The thickness of the coating films was about 20 to 25 µm. The degree of crosslinking of the cured films was determined by their solvent resistance using MEK Double Rub Method (ASTM D4752). The results are collected in Table 33. Typically a result of >30 is considered acceptable and >200 is preferred.

**Table 33.**

| MEK Double Rub Test of the Cured Films from Various Formulations | | | | |
|---|---|---|---|---|
| Formulation | 25 | 26 | 27 | 28 |
| MEK double rubs | 500 Slight effect | 500 Slight effect | 500 No effect | 500 No effect |

### Example 38 (Preparative): Synthesis of Hydroxyl Functional Polyester (Resin 45)

A 500 mL, three-neck, round-bottom flask was equipped with a mechanical stirrer, a heated partial condenser, a Dean-Stark trap, and a water condenser. To the flask were charged 2,2,4,4-tetramethyl-13-cyclobutanediol (TMCD) (121.1g), neopentyl glycol (NPG) (75.9g), trimethylolpropane (TMP) (9.99g), isophthalic acid (IPA) (199.4g), and the acid catalyst, Fascat-4100 (Arkema Inc.) (0.61g). The reaction was allowed to react under nitrogen at 180°C for 30 min., at 200°C for 60 min., at 220°C for 100 min., and at 230°C for about 2.5 hours to yield a clear, viscous mixture. A total of 43 mL of distillate was collected in the Dean-Stark trap. The resulting resin was allowed to cool and subsequently collected. (Yield: 346 g)

Using the same method as above, resins 46, 47, 48 and 49 were synthesized. The relative amounts and the results are reported in Tables 34 and 35, wherein MPDiol is 2-methyl-1,3-propanediol and TPA is terephthalic acid.

**Table 34.**

| Synthesized Hydroxyl Functional Polyesters | | | | | | | |
|---|---|---|---|---|---|---|---|
| | Resin Composition as Charged | | | | | | |
| | Eq. Ratio Based on Total Alcohols (%) | | | | Eq. Ratio Based on Total Acids (%) | | |
| | TMCD | NPG | MPDiol | TMP | IPA | TPA | OH/COOH (R value) |
| Resin 45 | 50.0 | 43.3 | | 6.7 | 100 | | 50.0 |
| Resin 46 | 93.3 | | | 6.7 | 100 | | 93.3 |
| Resin 47 | 93.3 | | | 6.7 | 100 | | 93.3 |
| Resin 48 | 46.65 | | 46.65 | 6.7 | 50 | 50 | 1.30 |
| Resin 49 | | 93.3 | | 6.7 | 100 | | 1.25 |

**Table 35.**

| Analysis of Synthesized Hydroxyl Functional Polyesters | | | | | | |
|---|---|---|---|---|---|---|
| | Resin Properties | | | | | |
| | Tg, C | Mn | Mw | Acid Number Analyzed | OH Number Analyzed | AN:OH |
| Resin 45 | 46.9 | 1384 | 2316 | 0.2 | 128 | 0.002 |
| Resin 46 | 79.7 | 1616 | 3171 | 4.8 | 102 | 0.047 |
| Resin 47 | 98.0 | 1715 | 5242 | 25.0 | 52 | 0.48 |
| Resin 48 | 49.2 | 1987 | 4662 | 6.2 | 99 | 0.06 |
| Resin 49 | 44.2 | 2190 | 4912 | 5.8 | 88 | 0.07 |

### Example 39 (Comparative): Preparation of Various Solvent-Based Formulations

As listed in Table 36, solvent-based formulations were prepared by using Resins 45-49. Polyester solutions (35% solids) were first prepared by dissolving the polyesters in methyl amyl ketone (MAK). It was observed that the solution prepared from Resin 4 was milky; indicating poor solubility. Four formulations were then prepared from each polyester by mixing respectively the polyester solution with a phenolic resin (PHENODUR® PR 516/60B or PHENODUR® PR 371/70B) or a combination of phenolic resin and an amino resin (Cymel 303 available from Allnex) in the presence of an acid catalyst, p-toluenesulfonic acid (pTSA).

**Table 36.**

| Compositions of Various Formulations | | | | | |
|---|---|---|---|---|---|
| Formulation | Polyester (50% in MAK); grams | Phenolic Resin; grams | pTSA (5% in isopropanol); grams | Resin Ratio | Catalyst Ratio |
| 29 | 7g (Resin 45) | 2.14 g (PR371/70B) (70% in n-butanol) | 0.5 | 70/30 | 0.5 phr |
| 30 | 7g (Resin 46) | 2.14 g (PR371/70B) (70% in n-butanol) | 0.5 | 70/30 | 0.5 phr |
| 31 | 7g (Resin 47) | 2.14 g (PR371/70B) (70% in n-butanol) | 0.5 | 70/30 | 0.5 phr |
| 32 | 10g (Resin 48) | 2.14 g (PR371/70B) (70% in n-butanol) | 0.5 | 70/30 | 0.5 phr |
| 33 | 10g (Resin 49) | 2.14 g (PR371/70B) (70% in n-butanol) | 0.5 | 70/30 | 0.5 phr |

### Example 40 (Comparative). Evaluation of Cured Films by MEK Double Rubs

Formulations 29-33 prepared in Example 39 were drawn down respectively on a cold-rolled steel test panels (ACT 3x9x032 from Advanced Coating Technologies using a drawn-down bar and subsequently baked in an oven at 205°C for 10 minutes. The thickness of the coating films was about 20 to 25 µm. The degree of crosslinking of the cured films was determined by their solvent resistance using MEK Double Rub Method (ASTM D4752). The results are collected in Table 37. Typically a result of >30 is considered acceptable and >200 is preferred.

**Table 37.**

| MEK Double Rub Test of the Cured Films from Various Formulations | | | | | |
|---|---|---|---|---|---|
| Formulation | 29 | 30 | 31 | 32 | 33 |
| MEK double rubs | 300 | 300 | 400 | 500 | 500 |
| | Slight effect | Slight effect | Slight effect | No effect | No effect |

### Example 41 (Comparative): Preparation of Solvent-Based Formulations Using Various Phenolic Resins

As listed in Table 38 solvent-based formulations were prepared by using Resin 48 and various commercial phenolic resins, Phenodur PR-371/70B, Phenodur VPR 1785/70B, and Phenodur PR516/60B available for Allnex. PR-371/70B is based on phenol/formaldehyde, PR516/60B is based on mixed cresol/formaldehyde, and VPR1785/70B is also based on mixed cresol/formaldehyde.

Polyester solutions (35% solids) were first prepared by dissolving the polyester (Resin 7) in methyl amyl ketone (MAK). Three formulations were then prepared by mixing respectively the polyester solution with a phenolic resin in the presence of an acid catalyst, p-toluenesulfonic acid (pTSA).

**Table 38.**

| Compositions of Various Formulations | | | | | | |
|---|---|---|---|---|---|---|
| Formulation | Polyester (35% in MAK); grams | Phenolic Resin Solution | Phenolic Resin Solution; grams | pTSA (5% in isopropanol); grams | Resin Ratio | Catalyst Ratio |
| 34 | 10g (Resin 48) | Phenodur PR-371/70B | 2.14 | 0.5 | 70/30 | 0.5 phr |
| 35 | 10g (Resin 48) | Phenodur VPR 1785/70B | 2.14 | 0.5 | 70/30 | 0.5 phr |
| 36 | 10g (Resin 48) | Phenodur PR516/60B | 2.5 | 0.5 | 70/30 | 0.5 phr |

### Example 42 (Comparative): Evaluation of Cured Films by MEK Double Rub Test

Formulations 34-36 prepared in Example 41 were drawn down respectively on cold-rolled steel test panels (ACT 3x9x032 from Advanced Coating Technologies) using a draw-down bar and subsequently baked in an oven at 205°C for 10 minutes. The thickness of the coating films was about 20 to 25 µm. The degree of crosslinking of the cured films was determined by their solvent resistance using MEK Double Rub Method (ASTM D4752). The results are collected in Table 39.

**Table 39.**

| MEK Double Rub Test of the Cured Films from Various Formulations | | | |
|---|---|---|---|
| Formulation | 34 | 35 | 36 |
| MEK double rubs (slight or no effect) | 500 | <20 | 50 |

### Example 43 (Preparative). Preparation of Aqueous Dispersions of Polyesters

A Parr reactor was used for the preparation of the resin dispersion. Resin 42 was first ground to about 6mm pellets. The resin pellets (42.0g) was then placed in the reaction vessel along with distilled water (78.0g) and ammonia aqueous solution (30%, 2.46 g) for neutralization. The amount of ammonia added for neutralization (100%) is calculated according to the measured acid number of the resin. The Parr reactor was then assembled and heated first to 95°C and then to 110°C. The stirring was allowed to continue at 110°C for 45 min. and subsequently allowed to cool to 50°C. The resulting dispersion (35% solids) was filtered with a standard paint filter and collected.

Using the same procedure, the other dispersion (35% solids) was prepared from Resin 44. Particle size and pH were analyzed for each dispersion. Particle size was measured using Nanotrac (Microtrac Inc.); the results are listed in Table 40. The particle size, MV, represents the mean diameter in nanometer (nm) of the volume distribution.

**Table 40.**

| Particle Size and pH of the Polyester Dispersions | | | |
|---|---|---|---|
| | Particle size, MV (nm) | pH | Appearance |
| Resin 42 Dispersion | 14.08 | 7.88 | Clear |
| Resin 44 Dispersion | 118.80 | 7.23 | Milky |

### Example 44 (Comparative): Preparation of Waterborne Formulations Using Neutralized Phenolic Resins

An aqueous dispersion was prepared by mixing phenolic resin m-cresol/HCHO (Example 31) (3 g) sequentially with ethylene glycol monobutyl ether (EB) (1.3 g), N,N-dimethylethanolamine (DMEA) (0.7 g), and water (1.5 g) to yield a clear dispersion (46% solids).

As listed in Table 41, waterborne formulations were prepared by using the two aqueous polyester dispersions prepared in Example 43 and the above phenolic resin dispersion. It is noted that Formulation 38 requires the addition of extra water (1 g) to reduce its viscosity.

**Table 41.**

| Compositions of Various Waterborne Formulations | | | | | |
|---|---|---|---|---|---|
| Formulation | Polyester Dispersion (35%); grams | Phenolic Resin Dispersion (46%); grams | pTSA (5% in isopropan ol); grams | Resin Ratio | Catalyst Ratio |
| 37 | 3 (Resin 42) | 0.98 m-Cresol/HCHO | 0.15 | 70/30 | 0.5 phr |
| 38 | 3 (Resin 44) | 0.98 m-Cresol/HCHO | 0.15 | 70/30 | 0.5 phr |

### Example 45 (Comparative): Evaluation of Cured Films by MEK Double Rub Test

Formulations 37 and 38 prepared in Example 44 were drawn down respectively on cold-rolled steel test panels (ACT 3x9x032 from Advanced Coating Technologies) using a draw-down bar and subsequently baked in an oven at 205°C for 10 minutes. The thickness of the coating films was about 20 to 25 µm. The degree of crosslinking of the cured films was determined by their solvent resistance using MEK Double Rub Method (ASTM D4752). The results are collected in Table 42.

**Table 42.**

| MEK Double Rub Test of the Cured Films from Various Formulations | | |
|---|---|---|
| Formulation | 37 | 38 |
| MEK double rubs (slight or no effect) | 50 | <10 |
| Coating Appearance | Glossy | Hazy |

## Claims

1. A thermosetting composition comprising:
I) a curable polyester resin; and
II) a crosslinker composition comprising a resole phenolic resin, said phenolic resin containing the residues of meta-substituted phenols and
optionally un-substituted phenol,
wherein said curable polyester comprises a polyester having beta-ketoacetate moieties without vinyl unsaturation and
wherein the resole resin is obtained with a phenol composition as starting material, said phenol composition comprising meta-substituted phenols.

2. The composition of claim 1, wherein said resole phenolic resin is obtained with a phenol composition as a starting material, said phenol composition comprising meta-substituted phenols and optionally un-substituted phenols, in an amount of at least 60 weight.% based on the weight of the phenol composition.

3. The composition of any of claims 1-2, wherein said resole phenolic resin is obtained by reacting a phenol composition with an aldehyde at an aldehyde:phenol molar ratio of at least 1.2:1, or at least 1.4:1 and up to 4:1, or at least 1.5:1, said phenol composition comprising meta-substituted phenols and optionally un-substituted phenols.

4. The composition of any of claims 1-3, wherein the resole phenolic resin contains an average of at least 0.3 methylol groups, or an average of at least 0.4 methylol groups, or an average of at least 0.5 methylol groups (including either or both of --CH₂OH and --CH₂OR) per one phenolic hydroxyl group.

5. The composition of any of claims 1-4, wherein the resole phenolic resin contains residues of m-cresol and optionally phenol.

6. The composition of any of claims 1-5, wherein the resole phenolic resin is not made with the addition of bisphenol A, F, or S.

7. The composition of any of claims 1-6, wherein said curable polyester comprise a polyester having an acid number ranging from 20 to 120 mg KOH/g, a hydroxyl number ranging from greater than 0 to 100 mg KOH/g, and an acid number:hydroxyl (AN:OH) number ratio of at least 0.5:1.

8. The composition of any of claims 1-7, wherein said curable polyester comprises a polyester having residues of an α,β-unsaturated polycarboxylic acid compound, said α,β-unsaturated polycarboxylic acid compound having at least two carboxylic acid groups or at least one anhydride group, and having at least one unsaturation that is in the α,β position relative to a carbonyl group and is not located on an aromatic ring.

9. The composition of any of claims 1-8, wherein said curable polyester has a cumulative acid number and hydroxyl number in a range of 30 to 200 mg KOH/g or 40 to 150 mg KOH/g or 50-100 mg KOH/g.

10. The composition of any of any of claim 1-9, wherein said curable polyester comprises the residues of:
a) polyhydroxyl compounds comprising:
(i) diol compounds in an amount of 70 mole % - 100 mole % and
(ii) polyhydroxyl compounds having 3 or more hydroxyl groups in an amount of 0 to 30 mole %;
wherein the mole % is based on 100% of all moles of polyhydroxyl compounds a); and
b) polycarboxyl compounds comprising polycarboxylic acid compounds, derivatives of polycarboxylic acid compounds, the anhydrides of polycarboxylic acids, or combinations thereof.

11. A coating obtained with the thermoplastic composition of any of claims 1-10.

## Patentansprüche

1. Wärmehärtbare Zusammensetzung, umfassend:
I) ein härtbares Polyesterharz; und
II) eine Vernetzerzusammensetzung, umfassend ein Resolphenolharz, wobei das Phenolharz die Reste von metasubstituierten Phenolen und gegebenenfalls unsubstituiertes Phenol enthält,
wobei der härtbare Polyester einen Polyester mit β-Ketoacetat-Einheiten ohne Vinyl-Ungesättigtheit umfasst, und wobei das Resolharz mit einer Phenolzusammensetzung als Ausgangsmaterial erhalten wird, wobei die Phenolzusammensetzung meta-substituierte Phenole umfasst.

2. Zusammensetzung nach Anspruch 1, wobei das Resolphenolharz mit einer Phenolzusammensetzung als Ausgangsmaterial erhalten wird, wobei die Phenolzusammensetzung meta-substituierte Phenole und gegebenenfalls unsubstituierte Phenole in einer Menge von mindestens 60 Gew.-% enthält, bezogen auf das Gewicht der Phenolzusammensetzung.

3. Zusammensetzung nach einem der Ansprüche 1 bis 2, wobei das Resolphenolharz erhalten wird durch Umsetzen einer Phenolzusammensetzung mit einem Aldehyd bei einem Aldehyd : Phenol-Molverhältnis von mindestens 1,2 : 1 oder mindestens 1,4 : 1 und bis zu 4 : 1, oder mindestens 1,5 : 1, wobei die Phenolzusammensetzung meta-substituierte Phenole und gegebenenfalls unsubstituierte Phenole umfasst.

4. Zusammensetzung nach einem der Ansprüche 1 bis 3, wobei das Resolphenolharz durchschnittlich mindestens 0,3 Methylolgruppen oder durchschnittlich mindestens 0,4 Methylolgruppen oder durchschnittlich mindestens 0,5 Methylolgruppen (einschließlich eines oder beide von -CH₂OH oder -CH₂OR) pro phenolische Hydroxylgruppe enthält.

5. Zusammensetzung nach einem der Ansprüche 1 bis 4, wobei das Resolphenolharz Reste von m-Kresol und gegebenenfalls Phenol enthält.

6. Zusammensetzung nach einem der Ansprüche 1 bis 5, wobei das Resolphenolharz nicht unter Zusatz von Bisphenol A, F oder S hergestellt ist.

7. Zusammensetzung nach einem der Ansprüche 1 bis 6, wobei der härtbare Polyester einen Polyester mit einer Säurezahl im Bereich von 20 bis 120 mg KOH / g, eine Hydroxylzahl im Bereich von mehr als 0 bis 100 mg KOH / g und ein Säurezahl: Hydroxyl (AN:OH)-Zahlenverhältnis von mindestens 0,5 : 1 aufweist.

8. Zusammensetzung nach einem der Ansprüche 1 bis 7, wobei der härtbare Polyester einen Polyester mit Resten einer α,β-ungesättigten Polycarbonsäureverbindung umfasst, wobei die α,β-ungesättigte Polycarbonsäureverbindung mindestens zwei Carbonsäuregruppen aufweist oder mindestens eine Anhydridgruppe und mindestens eine ungesättigte Stelle, die in α,β-Position relativ zu einer Carbonylgruppe vorliegt und nicht an einem aromatischen Ring angeordnet ist.

9. Zusammensetzung nach einem der Ansprüche 1 bis 8, wobei der härtbare Polyester eine kumulative Säurezahl und Hydroxylzahl in einem Bereich von 30 bis 200 mg KOH / g oder 40 bis 150 mg KOH / g oder 50 bis 100 mg KOH / g aufweist.

10. Zusammensetzung nach einem der Ansprüche 1 bis 9, wobei der härtbare Polyester die Reste aufweist von:
a) Polyhydroxylverbindungen, umfassend:
(i) Diolverbindungen in einer Menge von 70 Mol-% bis 100 Mol-% und
(ii) Polyhydroxylverbindungen mit 3 oder mehr Hydroxylgruppen in einer Menge von 0 bis 30 Mol-%;
wobei sich die Mol-% auf 100 % aller Mole der Polyhydroxylverbindungen a) beziehen; und
b) Polycarboxylverbindungen, umfassend Polycarbonsäureverbindungen, Derivate von Polycarbonsäureverbindungen, die Anhydride von Polycarbonsäuren oder Kombinationen davon.

11. Beschichtung, erhalten mit der thermoplastischen Zusammensetzung nach einem der Ansprüche 1 bis 10.

## Revendications

1. Composition thermodurcissable comprenant :
I) une résine de polyester durcissable ; et
II) une composition d'agent de réticulation comprenant une résine de résol phénolique, ladite résine phénolique contenant les résidus de phénols méta-substitués, et éventuellement un phénol non substitué,
dans laquelle ledit polyester durcissable comprend un polyester ayant des fragments bêta-cétoacétate sans insaturation vinyle, et
dans laquelle la résine de résol est obtenue avec une composition de phénol servant de matériau de départ, ladite composition de phénol comprenant des phénols méta-substitués.

2. Composition selon la revendication 1, dans laquelle ladite résine de résol phénolique est obtenue avec une composition de phénol servant de matériau de départ, ladite composition de phénol comprenant des phénols méta-substitués et éventuellement des phénols non substitués, en une quantité d'au moins 60 % en poids par rapport au poids de la composition de phénol.

3. Composition selon l'une quelconque des revendications 1 et 2, dans laquelle ladite résine de résol phénolique est obtenue par réaction d'une composition de phénol avec un aldéhyde en un rapport molaire aldéhyde/phénol d'au moins 1,2/1, ou d'au moins 1,4/1 et jusqu'à 4/1, ou d'au moins 1,5/1, ladite composition de phénol comprenant des phénols méta-substitués et éventuellement des phénols non substitués.

4. Composition selon l'une quelconque des revendications 1 à 3, dans laquelle la résine de résol phénolique contient en moyenne au moins 0,3 groupe méthylol, ou en moyenne au moins 0,4 groupe méthylol, ou en moyenne au moins 0,5 groupe méthylol (y compris l'un ou l'autre ou les deux parmi -CH₂OH et -CH₂OR) par groupe hydroxyle phénolique.

5. Composition selon l'une quelconque des revendications 1 à 4, dans laquelle la résine de résol phénolique contient des résidus de m-crésol et éventuellement de phénol.

6. Composition selon l'une quelconque des revendications 1 à 5, dans laquelle la résine de résol phénolique n'est pas produite par l'addition de bisphénol A, F ou S.

7. Composition selon l'une quelconque des revendications 1 à 6, dans laquelle ledit polyester durcissable comprend un polyester ayant un indice d'acide situé dans la plage allant de 20 à 120 mg KOH/g, un indice d'hydroxyle situé dans la plage allant de plus de 0 à 100 mg KOH/g, et un rapport indice d'acide/indice d'hydroxyle (AN/OH) d'au moins 0,5/1.

8. Composition selon l'une quelconque des revendications 1 à 7, dans laquelle ledit polyester durcissable comprend un polyester ayant des résidus d'un composé acide polycarboxylique à insaturation □,□, ledit composé acide polycarboxylique à insaturation □,□ ayant au moins deux groupes acide carboxylique ou au moins un groupe anhydride, et ayant au moins une insaturation qui est en position □,□ par rapport à un groupe carbonyle et n'est pas située sur un cycle aromatique.

9. Composition selon l'une quelconque des revendications 1 à 8, dans laquelle ledit polyester durcissable a un indice d'acide et indice d'hydroxyle cumulé situé dans la plage allant de 30 à 200 mg KOH/g ou de 40 à 150 mg KOH/g ou de 50 à 100 mg KOH/g.

10. Composition selon l'une quelconque des revendications 1 à 9, dans laquelle ledit polyester durcissable comprend les résidus de :
a) composés polyhydroxy comprenant :
(i) des composés diols en une quantité de 70 % en moles à 100 % en moles, et
(ii) des composés polyhydroxy ayant 3 ou plus de 3 groupes hydroxyle en une quantité de 0 à 30 % en moles ;
les pourcentages en moles étant basés sur 100 % de toutes les moles de composés polyhydroxy a) ; et
b) composés polycarboxy comprenant des composés acides polycarboxyliques, des dérivés de composés acides polycarboxyliques, les anhydrides d'acides polycarboxyliques, ou leurs combinaisons.

11. Revêtement obtenu avec la composition thermoplastique de l'une quelconque des revendications 1 à 10.
